(19) Europäisches Patentamt
European Patent Office
Office européen des brevets

(11) EP 4 456 638 A1

(12) **EUROPEAN PATENT APPLICATION**
published in accordance with Art. 153(4) EPC

(43) Date of publication:
**30.10.2024 Bulletin 2024/44**

(21) Application number: **23746257.7**

(22) Date of filing: **19.01.2023**

(51) International Patent Classification (IPC):
***H04W 72/04*** *(2023.01)*

(52) Cooperative Patent Classification (CPC):
**H04L 5/00; H04W 28/26; H04W 72/04; H04W 72/20; H04W 72/53**

(86) International application number:
**PCT/CN2023/073168**

(87) International publication number:
**WO 2023/143378 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.01.2022 CN 202210113002**

(71) Applicant: **Huawei Technologies Co., Ltd.**
**Shenzhen, Guangdong 518129 (CN)**

(72) Inventors:
- **ZHANG, Tianhong**
  **Shenzhen, Guangdong 518129 (CN)**
- **LI, Chao**
  **Shenzhen, Guangdong 518129 (CN)**
- **HUANG, Haining**
  **Shenzhen, Guangdong 518129 (CN)**
- **YANG, Fan**
  **Shenzhen, Guangdong 518129 (CN)**

(74) Representative: **Maiwald GmbH**
**Engineering**
**Elisenhof**
**Elisenstrasse 3**
**80335 München (DE)**

# (54) COMMUNICATION METHOD AND COMMUNICATION APPARATUS

(57) This application discloses a communication method and a communication apparatus, and is applicable to the field of V2X, the vehicle to everything, intelligent driving, or intelligent connected vehicles. The method includes: An NR terminal apparatus determines first sidelink control information, and sends the first sidelink control information. The first sidelink control information indicates that a data channel associated with the first sidelink control information carries NR information. The first sidelink control information is used by an LTE terminal apparatus to select a resource. The NR information is transmitted on a resource in a first resource set. The resource in the first resource set is further used to transmit LTE information. For the LTE terminal apparatus, a resource usage status of the NR terminal apparatus may be determined based on the first sidelink control information, so that during resource selection, a resource used by the NR terminal apparatus can be excluded from the first resource set. This reduces or avoids interference caused by the NR terminal apparatus to the LTE terminal apparatus.

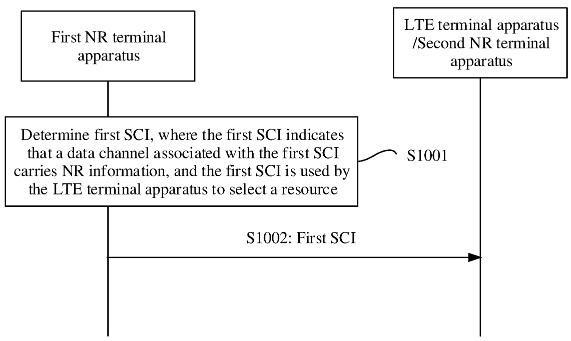


FIG. 10

EP 4 456 638 A1

## Description

### CROSS-REFERENCE TO RELATED APPLICATIONS

This application claims priority to Chinese Patent Application No. 202210113002.6, filed with the China National Intellectual Property Administration on January 29, 2022 and entitled "COMMUNICATION METHOD AND COMMUNICATION APPARATUS", which is incorporated herein by reference in its entirety.

### TECHNICAL FIELD

This application relates to the field of sidelink technologies, and in particular, to a communication method and a communication apparatus on a sidelink.

### BACKGROUND

The 3rd generation partnership project (3rd generation partnership project, 3GPP) standardizes long term evolution (long term evolution, LTE) technology-based vehicle to everything (vehicle to everything, V2X) (which may be referred to as LTE-V2X for short in this specification) and new radio (new radio, NR) technology-based V2X(which may be referred to as NR-V2X for short in this specification). In some cases, a terminal apparatus supports coexistence of an LTE-V2X communication module and an NR-V2X communication module. In other words, an LTE-V2X communication module is disposed in some terminal apparatuses, an NR-V2X communication module is disposed in some terminal apparatuses, and an LTE-V2X communication module and an NR-V2X communication module are disposed in some terminal apparatuses.

The LTE-V2X communication module and the NR-V2X communication module may share a same resource set. However, the LTE-V2X communication module cannot learn of a resource usage status of NR-V2X, causing a resource conflict.

### SUMMARY

This application provides a communication method and a communication apparatus, to avoid a resource conflict between a terminal apparatus based on LTE-V2X communication and a terminal apparatus based on NR-V2X communication.

According to a first aspect, a communication method is provided. The communication method may be performed by a first communication apparatus. The first communication apparatus may be a communication device or a communication apparatus that can support a communication device in implementing a function required in the method, for example, a chip system. The following uses an example in which the communication device is a first terminal apparatus for description. The first terminal apparatus is a terminal apparatus that can perform sidelink communication based on NR-V2X or NR, and is also referred to as a first NR terminal apparatus (this is used as an example in this specification). The method includes the following steps.

The first NR terminal apparatus determines first sidelink control information, and sends the first sidelink control information. The first sidelink control information indicates that a data channel associated with the first sidelink control information carries NR information. The first sidelink control information is used by an LTE terminal apparatus to select a resource. The NR information is transmitted on a resource in a first resource set. The resource in the first resource set is further used to transmit LTE information.

Correspondingly, according to a second aspect, a communication method is provided. The communication method may be performed by a second communication apparatus. The second communication apparatus may be a communication device or a communication apparatus that can support a communication device in implementing a function required in the method, for example, a chip system. The following uses an example in which the communication device is a second terminal apparatus for description. The second terminal apparatus may be understood as a terminal apparatus that performs sidelink communication based on LTE-V2X or LTE, and is also referred to as an LTE terminal apparatus (this is used as an example in this specification). The method includes the following steps.

The LTE terminal apparatus receives first sidelink control information, and determines, based on the first sidelink control information, a candidate resource for transmitting LTE information. The first sidelink control information indicates that a data channel associated with the first sidelink control information carries NR information. The first sidelink control information is used by the LTE terminal apparatus to select a resource. The NR information is transmitted on a resource in a first resource set. The resource in the first resource set is further used to transmit LTE information.

It may be understood that one NR terminal apparatus sends the first sidelink control information, and the other NR terminal apparatus receives the first sidelink control information. For example, a second NR terminal apparatus receives the first sidelink control information from a first NR terminal apparatus, and determines, based on the first sidelink control information, a resource for receiving NR information from the first NR terminal apparatus. The first sidelink control information indicates that the data channel associated with the first sidelink control information carries the NR information. The NR information is transmitted on the resource in the first resource set. The resource in the first resource set is further used to transmit the LTE information.

In the solutions provided in the first aspect and the second aspect, that the first sidelink control information sent by the first NR terminal apparatus may be used by the LTE terminal apparatus to select a resource may be understood as that the LTE terminal apparatus may identify the first sidelink control information. For example, a format of the first sidelink control information may be the same as a format of sidelink control information sent by the LTE terminal apparatus, so that the LTE terminal apparatus can decode the first sidelink control information. In addition, the first sidelink control information indicates that the data channel associated with the first sidelink control information carries the NR information. For the LTE terminal apparatus, a resource usage status of the first NR terminal apparatus may be determined based on the first sidelink control information, so that during resource selection, a resource used by the first NR terminal apparatus can be excluded from the first resource set. This reduces or avoids interference caused by the first NR terminal apparatus to the LTE terminal apparatus. For the NR terminal apparatus, for example, the second NR terminal apparatus may also select a resource based on the first sidelink control information. In addition, the second NR terminal apparatus may parse the first sidelink control information sent by the first NR terminal apparatus, to determine a resource used by the first NR terminal apparatus to send the NR information, and receive the NR information on the corresponding resource. It may be learned that through this solution, the NR terminal apparatuses may also determine a resource usage status of each other, thereby avoiding a resource conflict.

In a possible implementation, the first sidelink control information indicates, by using at least one of the following, that the data channel associated with the first sidelink control information carries the NR information: a reserved index value of a modulation and coding scheme (modulation and coding scheme, MCS) field, a reserved value of a resource reservation field, or at least one reserved bit.

In a possible implementation, the first sidelink control information further includes a retransmission field and/or a transmit format indication field, and that the first sidelink control information indicates that the data channel associated with the first sidelink control information carries the NR information includes: The first sidelink control information indicates an $i^{th}$ transmission of the NR information, where i is an integer greater than or equal to 1. In other words, that the data channel associated with the first sidelink control information carries the $i^{th}$ transmission of the information is indicated to indirectly indicate the NR information.

In a possible implementation, the reserved value of the resource reservation field indicates that a resource reservation period of the NR information is 2 ms, 5 ms, or 10 ms. In other words, the resource reservation period indirectly indicates that the information carried by the data channel associated with the first sidelink control information is the NR information.

In a possible implementation, the at least one reserved bit indicates one or more of the following: some or all bits of a source identity; some or all bits of a destination identity; a modulation and demodulation reference signal (demodulation reference signal, DMRS) pattern; a quantity of ports of the data channel associated with the first sidelink control information; an additional MCS table; or a quantity of symbols occupied by a physical sidelink feedback channel (physical sidelink feedback channel, PSFCH). Any one of the foregoing items may indicate a transmission parameter of the NR information. Therefore, the at least one reserved bit may indicate one or more of the foregoing items, to indirectly indicate that the information carried by the data channel associated with the first sidelink control information is the NR information.

In a possible implementation, the first sidelink control information further includes one or more of the following fields: a frequency domain resource position field, a time gap field, or a retransmission index field. The frequency domain resource position field may indicate frequency domain resource position information of the $i^{th}$ transmission and an $(i+1)^{th}$ transmission of the NR information, where i is an odd number or an even number, and the $(i+1)^{th}$ transmission is a retransmission of the $i^{th}$ transmission. The time gap field may indicate a time domain resource gap between the $i^{th}$ transmission and an $(i+1)^{th}$ transmission of the NR information, where i is an odd number or an even number, and the $(i+1)^{th}$ transmission is a retransmission of the $i^{th}$ transmission. The retransmission index field may indicate an initial transmission or the $i^{th}$ transmission of the NR information, where i is an odd number or an even number. In other words, a plurality of fields in the frequency domain resource position field, the time gap field, or the retransmission index field included in the sidelink control information in the LTE-V2X format are reused to indicate the $i^{th}$ transmission and the $(i+1)^{th}$ transmission of the NR channel.

In a possible implementation, the method further includes: The first NR terminal apparatus sends a first TB by using a first period, and sends a second TB by using a second period, where service data associated with the first TB and the second TB belongs to service data associated with a third TB, a period of the third TB is a third period, and the third period is less than the first period or the second period. In other words, the first NR terminal apparatus may split the third TB whose period is the third period into a plurality of TBs with a longer period, and send the split TBs in the longer period. For example, the third TB is split into the first TB and the second TB for sending, to support a flexible periodic transmission and flexible periodic reservation of the NR information in an LTE resource pool.

According to a third aspect, a communication method is provided. The communication method may be performed by a first communication apparatus. The first communication apparatus may be a communication device or a communication apparatus that can support a communication device in implementing a function required in the method, for example, a chip system. The following uses an example in which the communication device is a first terminal apparatus for description. The first terminal apparatus is a terminal apparatus that can perform communication based on NR-V2X, and is also referred to as a first NR terminal apparatus (this is used as an example in this specification). The method includes the following steps.

The first NR terminal apparatus determines a reference signal associated with NR information, and sends the reference signal on a first resource in a first resource set for transmitting the NR information. A resource in the first resource set is further used to transmit LTE information. The reference signal is mapped to the first resource according to a first mapping rule. The first mapping rule may be used by the first NR terminal apparatus on a transmit side to determine a mapping position of the reference signal associated with the NR information, and may also be used by a terminal apparatus on a receive side, for example, an LTE terminal apparatus and/or a second NR terminal apparatus, to determine the mapping position of the reference signal associated with the NR information. It may also be understood that the first mapping rule may be used by the LTE terminal apparatus and/or the second NR terminal apparatus to select a resource.

Correspondingly, according to a fourth aspect, a communication method is provided. The communication method may be performed by a second communication apparatus. The second communication apparatus may be a communication device or a communication apparatus that can support a communication device in implementing a function required in the method, for example, a chip system. The following uses an example in which the communication device is a second terminal apparatus for description. The second terminal apparatus may be understood as a terminal apparatus that performs communication based on LTE-V2X, and is also referred to as an LTE terminal apparatus (this is used as an example in this specification). The method includes the following steps.

The LTE terminal apparatus receives a reference signal on a first resource in a first resource set according to a first mapping rule. The reference signal is associated with NR information. A resource in the first resource set may be further used to transmit NR information. The LTE terminal apparatus measures the received reference signal, and selects a resource based on a measurement result. The first mapping rule may be used by the LTE terminal apparatus to determine a mapping position of the reference signal associated with the NR information. It may also be understood as that the first mapping rule may be used by the LTE terminal apparatus to select a resource.

It may be understood that a first NR terminal apparatus sends the reference signal on the first resource in the first resource set according to the first mapping rule, and a second NR terminal apparatus receives the reference signal on the first resource according to the first mapping rule. The second NR terminal apparatus measures the received reference signal, and selects a resource based on a measurement result. The first mapping rule may be used by the second NR terminal apparatus to determine a mapping position of the reference signal associated with the NR information. It may also be understood that the first mapping rule may be used by the second NR terminal apparatus to select a resource.

In the solutions provided in the third aspect and the fourth aspect, the first mapping rule may be predefined, preconfigured, or indicated. The first NR terminal apparatus may send the reference signal according to the first mapping rule. The LTE terminal apparatus may determine, according to the first mapping rule, a resource position in which the reference signal sent by the first NR terminal apparatus is located. In this way, when the LTE terminal apparatus selects a resource, a resource usage status of the first NR terminal apparatus may be determined by using an LTE sidelink reference signal measurement method, so that subsequently, a resource to be used by the first NR terminal apparatus may not be selected, that is, a resource conflict is avoided as much as possible. This reduces or avoids interference caused by the first NR terminal apparatus to the LTE terminal apparatus. In addition, because the reference signal does not need to be measured by using an NR sidelink reference signal measurement method, a requirement for a measurement capability of the LTE terminal apparatus is not additionally increased. The second NR terminal apparatus may determine, according to the first mapping rule, a resource position in which the reference signal sent by the first NR terminal apparatus is located. In this way, when the second NR terminal apparatus selects a resource, a resource usage status of the first NR terminal apparatus may be determined by using the NR sidelink reference signal measurement method, so that subsequently, a resource to be used by the first NR terminal apparatus may not be selected, that is, a resource conflict is avoided as much as possible. Optionally, the second NR terminal apparatus may further decode a reference signal in a corresponding position on the first resource according to the first mapping rule, to facilitate subsequent decoding of the NR information.

In a possible implementation, the first mapping rule may include one or more of the following mapping rules. A specific mapping rule to be used is not limited in embodiments of this application.

Mapping rule 1: NR information is a physical sidelink control channel (physical sidelink control channel, PSCCH)

and/or a physical sidelink shared channel (physical sidelink shared channel, PSSCH), and a reference signal of the NR information is located on a symbol 2 and a symbol 5 in a time unit k and a symbol 1 and a symbol 4 in a time unit k+1, where k is an integer greater than or equal to 1.

Mapping rule 2: NR information is a PSCCH and/or a PSSCH, and a reference signal of the NR information is located on a symbol 2, a symbol 5, a symbol 8, and a symbol 11 in a time unit, where k is an integer greater than or equal to 1.

Mapping rule 3: NR information is a physical sidelink broadcast channel (physical sidelink broadcast channel, PSBCH), and a reference signal of the NR information is located on a symbol 4 and a symbol 6 in a time unit k and a symbol 2 in a time unit k+1, where k is an integer greater than or equal to 1.

Mapping rule 4: NR information is a PSBCH, and a reference signal of the NR information is located on a symbol 4, a symbol 6, and a symbol 9 in a time unit, where k is an integer greater than or equal to 1.

It may be understood that the mapping rule 1 to the mapping rule 4 may enable a time domain position of a reference signal sent by the first NR terminal apparatus to be the same as a time domain position of a reference signal sent by the LTE terminal apparatus. For the LTE terminal apparatus, a resource may be selected by measuring an LTE reference signal. In other words, the LTE terminal avoids the resource to be used by the NR terminal without changing an LTE mechanism. The second NR terminal apparatus may select a resource by measuring an LTE reference signal, and does not need to measure reference signals in more positions. This is simple.

Mapping rule 5: NR information is a PSCCH and/or a PSSCH, and duration of a scheduling resource for the NR information satisfies $l_d = N_{symb}^{slot} - N_{LTEDM-RS} - 1$, where $N_{symb}^{slot}$ is a quantity of symbols for transmitting the NR information in one slot, $N_{LTEDM-RS}$ is a quantity of symbols for transmitting a reference signal of LTE information in one slot, and is at least one of indexes $\bar{l} = \{0, 1, 2, \ldots, N_{symb}^{slot} - N_{LTEDM-RS} - 1\}$ of symbols for transmitting the NR information in each slot, and the reference signal of the NR information is located on at least one symbol whose symbol index is $\bar{l}$. It should be noted that the mapping rule 5 is also applicable to a case in which the NR information is a PSBCH. In other words, the PSCCH and/or the PSSCH in the mapping rule 5 may be replaced with the PSBCH.

Mapping rule 6: NR information is a PSCCH and/or a PSSCH, and duration $l_d$ of a scheduling resource for the NR information belongs to $\{0, 1, 2, \ldots, N_{symb}^{slot} - 1\}$, where $N_{symb}^{slot}$ is a quantity of symbols for transmitting the NR information in one slot, and is at least one of indexes $\bar{l} = \{0, 1, 2, \ldots, N_{symb}^{slot} - 1\}$ of symbols for transmitting the NR information in each slot, and the reference signal of the NR information is located on at least any one symbol whose symbol index is $\bar{l}$. It should be noted that the mapping rule 6 is also applicable to a case in which the NR information is a PSBCH. In other words, the PSCCH and/or the PSSCH in the mapping rule 6 may be replaced with the PSBCH.

In the mapping rule 5 and the mapping rule 6, the time domain position of the NR reference signal may be different from the time domain position of the LTE reference signal. The second NR terminal apparatus may measure an NR reference signal and/or an LTE reference signal, so that the second NR terminal apparatus may separately determine a resource usage status of the first NR terminal apparatus and/or a resource usage status of the LTE terminal apparatus.

Mapping rule 7: The time domain position of the reference signal of the NR information does not include symbols whose indexes are 2, 5, 8, and 11. In other words, the reference signal of the NR information is mapped to a resource other than a time domain resource to which the reference signal of the LTE information is mapped, so that impact on a transmission and measurement of the reference signal of the LTE information is reduced.

In a possible implementation, when a subcarrier spacing of resources for transmitting NR information in the first resource set is different from a subcarrier spacing of resources for transmitting LTE information in the first resource set, the resource for transmitting the LTE information is preconfigured or is indicated by a network device to support only a transmission of a non-adjacent PSCCH or PSSCH, or the resource for transmitting the LTE information is preconfigured or is indicated by a network device to support only a transmission of an adjacent PSCCH or PSSCH.

In a possible implementation, the method further includes: The first NR terminal apparatus obtains configuration information, where the configuration information may indicate the first mapping rule. The configuration information may be predefined or preconfigured or may be indicated by the network device.

In a possible implementation, the configuration information includes capability information of the first NR terminal apparatus. That is, a mapping rule to be used may be determined based on the capability information of the first NR terminal apparatus.

According to a fifth aspect, a communication method is provided. The communication method may be performed by a first communication apparatus. The first communication apparatus may be a communication device or a communication apparatus that can support a communication device in implementing a function required in the method, for example, a chip system. The following uses an example in which the communication device is a first terminal apparatus for description. The first terminal apparatus is a terminal apparatus that can perform communication based on NR-V2X, and is also referred to as a first NR terminal apparatus (this is used as an example in this specification). The method includes the following steps.

The first NR terminal apparatus obtains LTE sidelink control information, and determines, from a first resource set based on the LTE sidelink control information and signal strength information, a resource for transmitting NR information. The LTE sidelink control information indicates a second resource in the first resource set, and the second resource includes a resource occupied by LTE information and/or reserved for LTE information. A resource in the first resource set is further used to transmit NR information. The signal strength information indicates a signal strength of the second resource.

Correspondingly, according to a sixth aspect, a communication method is provided. The communication method may be performed by a second communication apparatus. The second communication apparatus may be a communication device or a communication apparatus that can support a communication device in implementing a function required in the method, for example, a chip system. The following uses an example in which the communication device is a second terminal apparatus for description. The second terminal apparatus may be understood as a terminal apparatus that performs communication based on LTE-V2X, and is also referred to as an LTE terminal apparatus (this is used as an example in this specification). The method includes the following steps.

The LTE terminal apparatus determines LTE sidelink control information, and sends the LTE sidelink control information on a second resource in a first resource set. The second resource includes a resource occupied by LTE information and/or reserved for LTE information. A resource in the first resource set is further used to transmit NR information.

In the solutions provided in the fifth aspect and the sixth aspect, the first resource set may be used to transmit both LTE information and NR information. The first NR terminal apparatus may select a resource based on a signal strength of the resource occupied by the LTE information and/or reserved for the LTE information, so that the resource reserved for the LTE information is excluded as much as possible, and a resource conflict is avoided as much as possible. This reduces or avoids interference to communication of the LTE terminal apparatus.

In a possible implementation, the second resource includes one or more of the following resources for transmitting LTE information: an initial transmission resource, a retransmission resource, a periodic reserved resource of an initial transmission resource, or a periodic reserved resource of a retransmission resource.

In a possible implementation, the second resource includes a resource used by the LTE terminal apparatus to send LTE information.

In a possible implementation, that the first NR terminal apparatus determines, from a first resource set based on the LTE sidelink control information and signal strength information, a resource for transmitting NR information includes: excluding the second resource from a candidate resource set if the signal strength of the second resource is greater than or equal to a signal strength threshold. It may be understood that a remaining resource in the candidate resource set other than the second resource includes the resource for transmitting the NR information. Because the first NR terminal apparatus excludes only the second resource, as many resources as possible are left for the first NR terminal apparatus to use, and the first NR terminal apparatus can select as much as possible a resource with low interference, to meet a service requirement.

In a possible implementation, that the first NR terminal apparatus determines, from a first resource set based on the LTE sidelink control information and signal strength information, a resource for transmitting NR information includes: excluding a third resource from a candidate resource set if the signal strength of the second resource is greater than or equal to a signal strength threshold, where the third resource is all resources in a slot in which the second resource is located. It may be understood that a remaining resource in the candidate resource set other than the third resource includes the resource for transmitting the NR information. In other words, only the NR information is transmitted in a slot in which a candidate resource selected by the first NR terminal apparatus is located, so that the first NR terminal apparatus needs to decode only NR sidelink control information on the candidate resource. This reduces complexity of the first NR terminal apparatus.

In a possible implementation, that the first NR terminal apparatus determines, from a first resource set based on the LTE sidelink control information and signal strength information, a resource for transmitting NR information includes: excluding a fourth resource from a candidate resource set if the signal strength of the second resource is greater than or equal to a signal strength threshold, where the fourth resource is all resources in a subframe in which the second resource is located. It may be understood that a remaining resource in the candidate resource set other than the fourth resource includes the resource for transmitting the NR information.

In a possible implementation, the LTE sidelink control information further indicates a priority of the LTE information, and the determining, from a first resource set based on the LTE sidelink control information and signal strength information, a resource for transmitting the NR information further includes: excluding the second resource, the third resource, or the fourth resource from the candidate resource set if one or more of the following conditions are met: a priority value of the NR information is greater than or equal to a priority value of the LTE information; a priority value of the NR information is greater than or equal to a first priority value; or a priority value of the LTE information is less than or equal to a first priority value. In other words, the first NR terminal apparatus may further determine, based on the priority of the NR information and/or the priority of the LTE information, whether to exclude the second resource, the third resource, or the fourth resource, to avoid as much as possible excluding a large quantity of resources, and ensure transmission reliability of NR information with a high priority.

In a possible implementation, the signal strength threshold is determined based on one or more of the following: a signal strength threshold that is preconfigured or that is indicated by a network device, a priority of the NR information, the priority of the LTE information, or an offset value. The offset value is preconfigured or is indicated by the network device. In other words, the signal strength threshold used by the first NR terminal apparatus to exclude a resource may be adaptively adjusted based on one or more of the foregoing items. In this way, it can be avoided as much as possible that the first NR terminal apparatus excludes more or fewer resources, to balance transmission reliability of NR information and LTE information as much as possible.

In a possible implementation, the first NR terminal apparatus further determines a resource occupation ratio of the LTE terminal apparatus in the first resource set. The resource occupation ratio is a ratio of a quantity of time units occupied by the LTE information in a first measurement window to a total quantity of time units in the first resource set included in the first measurement window. A length of the first measurement window is configured by the network device or is preconfigured or predefined. The first NR terminal apparatus may decode the LTE sidelink control information received in the first measurement window, to determine the quantity of time units occupied by the LTE information in the first measurement window, and determine the resource occupation ratio. That is, the resource occupation ratio may be considered as a status in which a time unit is actually occupied by LTE information sent by a terminal apparatus based on LTE-V2X communication.

Optionally, the first NR terminal apparatus may send the determined resource occupation ratio to the network device. In this way, a network apparatus may determine a status in which the LTE terminal apparatus occupies the resource in the first resource set, and flexibly adjusts to a resource configured for the LTE terminal apparatus and/or the first NR terminal apparatus based on the actual occupation status, to improve resource utilization.

In a possible implementation, the time unit occupied by the LTE information includes a time unit in which a signal strength is greater than or equal to a second signal strength threshold. The second threshold is configured by the network device or is preconfigured or predefined. In other words, the first NR terminal apparatus may use, as a candidate resource, the time unit in which the signal strength is less than the second signal strength threshold and that is in the time units occupied by the LTE information, to reduce exclusion of excessive resources, and ensure transmission reliability of the NR information as much as possible.

In a possible implementation, the first NR terminal apparatus may further send NR information based on the resource occupation ratio. The resource occupation ratio is greater than or equal to a preset threshold. A priority value of the NR information is less than or equal to a second priority value. In other words, when the LTE information occupies a large quantity of resources, the first NR terminal apparatus may send NR information with a low priority value. Correspondingly, when the LTE information occupies a small quantity of resources, the first NR terminal apparatus may send NR information with a low priority value and/or a high priority value. This ensures transmission reliability of the NR information as much as possible.

In a possible implementation, the first NR terminal apparatus may further send the NR information based on capability information. The capability information indicates one or more of the following: whether a capability of blindly detecting NR information and/or a capability of blindly detecting LTE information is available; a maximum quantity of pieces of NR sidelink control information and/or LTE sidelink control information blindly detected in a time unit; whether a transmission of NR information and a transmission of LTE information are supported in a same time unit or different time units; or whether a transmission of NR information and a transmission of LTE information are supported in a same frequency domain unit or different frequency domain units. It may be understood that the first NR terminal apparatus may select a resource based on the capability information, to select a resource or a resource selection method that matches the capability information, so that impact on a transmission of the NR information is reduced.

According to a seventh aspect, a communication method is provided. The communication method may be performed by a first communication apparatus. The first communication apparatus may be a communication device or a communication apparatus that can support a communication device in implementing a function required in the method, for example, a chip system. The following uses an example in which the communication device is a first terminal apparatus for description. The first terminal apparatus is a terminal apparatus that can perform communication based on NR-V2X, and is also referred to as a first NR terminal apparatus (this is used as an example in this specification). The method includes the following steps.

The first NR terminal apparatus obtains configuration information, and determines, from a first resource set based on the configuration information, a first resource for transmitting NR information. The configuration information is used to configure the first resource set. A resource in the first resource set is further used to transmit LTE information. A time unit for transmitting the LTE information in the first resource set does not include a time unit for transmitting feedback information.

Correspondingly, according to an eighth aspect, a communication method is provided. The communication method may be performed by a second communication apparatus. The second communication apparatus may be a communication device or a communication apparatus that can support a communication device in implementing a function required in the method, for example, a chip system. The following uses an example in which the communication device is a second terminal apparatus for description. The second terminal apparatus may be understood as a terminal apparatus that performs communication based on LTE-V2X, and is also referred to as an LTE terminal apparatus (this is used as an example in this specification). The method includes the following steps.

The LTE terminal apparatus obtains configuration information, and determines, from a first resource set based on the configuration information, a resource for transmitting LTE information. The configuration information is used to configure the first resource set. A resource in the first resource set is further used to transmit NR information. A time unit for transmitting the LTE information in the first resource set does not include a time unit for transmitting feedback information.

In the solution provided in the seventh aspect or the eighth aspect, the first NR terminal apparatus and the LTE terminal apparatus share the first resource set. In this case, it may be configured that the time unit for transmitting the LTE information in the first resource set does not include the time unit for transmitting the feedback information, to avoid that the first NR terminal apparatus sends the feedback information in the time unit for transmitting the LTE information, that is, to avoid mutual interference between the first NR terminal apparatus and the LTE terminal apparatus.

It may be understood that one NR terminal apparatus sends NR information on the first resource, and the other NR terminal apparatus receives the NR information. For example, a second NR terminal apparatus obtains configuration information, and determines, from the first resource set based on the configuration information, the first resource for receiving the NR information from the first NR terminal apparatus. The configuration information is used to configure the first resource set. A resource in the first resource set is further used to transmit LTE information. A time unit for transmitting the LTE information in the first resource set does not include a time unit for transmitting feedback information.

In a possible implementation, the first resource set includes a second resource set. The second resource set is used to transmit LTE information. The second resource set does not include a resource for transmitting feedback information. An index of a time unit for transmitting LTE information in the second resource set is k1, and when k1 satisfies k1 mod ($N_{PSFCH}$ - $p$) = $N_{PSFCH}$ - $p$ - 1, one time unit for transmitting NR information is included after the time unit k1; and/or an index of a time unit for transmitting LTE information in the second resource set is k2, and when k2 satisfies k 2mod ($N_{PSFCH}$ - $p$) = 0, one time unit for transmitting NR information is included before the time unit k2. $N_{PSFCH}$ is a period of a resource for transmitting feedback information in the first resource set, and p is an integer less than or equal to $N_{PSFCH}$. In this solution, it can be ensured that the resource for transmitting the feedback information in the first resource set does not overlap with the resource for transmitting the LTE information, to avoid mutual interference between the first NR terminal apparatus and the LTE terminal apparatus as much as possible.

In a possible implementation, $N_{PSFCH}$ adjacent time units for transmitting the NR information include $N_{LTE}$ time units for transmitting the LTE information. The $N_{LTE}$ time units for transmitting the LTE information do not include a time unit for transmitting feedback information. In this solution, it can also be ensured that the resource for transmitting the feedback information in the first resource set does not overlap with the resource for transmitting the LTE information, to avoid mutual interference between the first NR terminal apparatus and the LTE terminal apparatus as much as possible.

Optionally, $N_{PSFCH}$ and $N_{LTE}$ satisfy: $N_{LTE}+p=N_{PSFCH}$.

In a possible implementation, $2^{\mu}$ time units for transmitting the NR information are included between two adj acent time units for transmitting the LTE information. A quantity of time units including feedback resources in the $2^{\mu}$ time units for transmitting the NR information is n, n includes 1, and $\mu$ indicates a subcarrier spacing. It may be understood that the time unit including the feedback resource is a first time unit that is used to transmit the NR information and that is after the time unit for transmitting the LTE information, or the time unit including the feedback resource is a first time unit for transmitting the NR information in the $2^{\mu}$ time units for transmitting the NR information. In this solution, even if a subcarrier spacing of resources for transmitting NR information is different from a subcarrier spacing of resources for transmitting LTE information, it can also be ensured that the resource for transmitting the feedback information in the first resource set does not overlap with the resource for transmitting the LTE information, to avoid mutual interference between the first NR terminal apparatus and the LTE terminal apparatus as much as possible.

Optionally, $N_{PSFCH}$ and the subcarrier spacing $\mu$ satisfy the following relationship: $N_{PSFCH}\geq 2^{\mu+1}$, and/or $N_{PSFCH}=A\times 2^{\mu+1}$, where A is a positive integer.

Optionally, a start position of a time unit k for transmitting LTE information is the same as a start position of a time unit m for transmitting NR information, and m satisfies m mod ($N_{PSFCH}$)=$N_{PSFCH}$/2.

Optionally, time units for transmitting NR information are $2^{\mu}$ consecutive time units. That is, a granularity for scheduling the NR information is the $2^{\mu}$ time units. A start time unit index m of the $2^{\mu}$ time units satisfies: m mod ($2^{\mu}$) = 0, or an end time unit index m of the $2^{\mu}$ time units satisfies: m mod ($2^{\mu}$) = $2^{\mu}$-1. In this solution, a resource waste caused by different resource granularities for scheduling the NR information and the LTE information can be avoided as much as possible.

In a possible implementation, the $2^{\mu}$ time units for transmitting the NR information include $2^{\mu}$ auto gain control (auto gain control, AGC) symbols. A first AGC symbol in the $2^{\mu}$ AGC symbols is a start symbol of the $2^{\mu}$ time units. The $2^{\mu}$ AGC symbols in the $2^{\mu}$ time units are consecutive or adjacent. In this way, duration corresponding to the $2^{\mu}$ symbols for transmitting the NR information may be equal to duration corresponding to one symbol for the LTE information, so that the LTE terminal apparatus may perform AGC based on a signal strength of the first symbol for the $2^{\mu}$ pieces of NR information. In this way, accuracy of decoding sidelink control information and/or data information based on an AGC result can be improved as much as possible.

In a possible implementation, the $2^{\mu}$ time units for transmitting the NR information include $2^{\mu}$ GAP symbols. A last GAP symbol in the $2^{\mu}$ GAP symbols is an end symbol of the $2^{\mu}$ time units. The $2^{\mu}$ GAP symbols in the $2^{\mu}$ time units are consecutive or adjacent. According to this solution, a transmission/reception conversion conflict between the LTE terminal apparatus, the first NR terminal apparatus, the second NR terminal apparatus, and the like can be avoided as much as possible.

In a possible implementation, the first NR terminal apparatus is further configured to send a DMRS in the $2^{\mu}$ time units for transmitting the NR information. ADRMS of a first PSSCH in the $2^{\mu}$ time units is mapped to a symbol l', where l' includes $1+2^{\mu}$, $4+2^{\mu}$, $7+2^{\mu}$, and $10+2^{\mu}$. In other words, the DMRS may be mapped to symbols whose indexes are $1+2^{\mu}$, $4+2^{\mu}$, $7+2^{\mu}$, and $10+2^{\mu}$. The DMRS of the first PSSCH may be mapped to symbols whose indexes are 2, 5, 8, and 11.

In a possible implementation, the first NR terminal apparatus is further configured to send a DMRS in the $2^{\mu}$ time units for transmitting the NR information. A DMRS of a PSSCH S in the $2^{\mu}$ time units is mapped to symbols $l'=1+12\times S+2^{\mu}$, $4+12\times S+2^{\mu}$, $7+12\times S+2^{\mu}$, and $10+12\times S+2^{\mu}$, and S belongs to {0, 1, 2, ..., $2^{\mu}$ - 1}.

In a possible implementation, the first NR terminal apparatus is further configured to send a DMRS in the $2^{\mu}$ time units for transmitting the NR information. A DMRS of a PSSCH S in the $2^{\mu}$ time units is mapped to symbols $l'=S+2\times 2^{\mu}$, $S+5\times 2^{\mu}$, $S+8\times 2^{\mu}$, and $S+11\times 2^{\mu}$, and S belongs to {0, 1, 2, ..., $2^{\mu}$ - 1}.

In a possible implementation, the first NR terminal apparatus is further configured to send a DMRS in the $2^{\mu}$ time units for transmitting the NR information. A DMRS i in the $2^{\mu}$ time units is mapped to a symbol $l\text{-}1+3\times i+2^{\mu}$, and i belongs to {0, 1, 2, ..., $2^{\mu+2}$-1}.

In the foregoing listed possible implementations, a mapping rule of the DMRS of the PSSCH sent by the first NR terminal apparatus is specified. In this way, the LTE terminal apparatus does not need to measure the reference signal by using an NR sidelink reference signal measurement method. In other words, the LTE terminal apparatus measures the reference signal by using an original LTE sidelink reference signal measurement method, so that a requirement for a measurement capability of the LTE terminal apparatus is not additionally increased.

Optionally, the first NR terminal apparatus sends $2^{\mu}$ PSSCHs in the $2^{\mu}$ time units based on one or $2^{\mu}$ PSCCHs. For example, the first NR terminal apparatus schedules the $2^{\mu}$ PSSCHs based on the one PSCCH in the $2^{\mu}$ consecutive time units, or the first NR terminal apparatus schedules the $2^{\mu}$ PSSCHs based on the $2^{\mu}$ PSCCHs in the $2^{\mu}$ consecutive time units.

The PSCCH S in the $2^{\mu}$ PSSCHs is located on at least one of symbols lc={S, $2^{\mu}$ + $S\times N'_{sym}$ , $2^{\mu}+S\times N'_{sym}+1, 2^{\mu}+S\times N'_{sym}+2\}$ , where $N'_{sym}$ is a quantity of symbols for the PSSCH in one slot; the PSSCH S in the $2^{\mu}$ PSSCHs is located on at least one of symbols lc={S, $2^{\mu}+S\times N'_{sym},\ 2^{\mu}+S\times N'_{sym}+1, 2^{\mu}+S\times N'_{sym}+2, \ldots, 2^{\mu}+(S+1)\times N'_{sym}-1\}$ ; or the PSSCH S in the $2^{\mu}$ PSSCHs is located on at least one of symbols lc={S, $2^{\mu}$ + S, $2\times 2^{\mu}$ + S, $3\times 2^{\mu}$ + $S, \ldots, N'_{sym}\times 2^{\mu}+S\}$ , where $N'_{sym}$ is a quantity of symbols for the PSSCH in one slot.

Optionally, a subcarrier spacing (subcarrier spacing, SCS) of resources in the first resource set is 15 kHz, and $N_{PSFCH}$ belongs to a set {1, 2,4}. An SCS of resources in the first resource set is greater than or equal to 30 kHz, and $N_{PSFCH}$ belongs to {4, 6, 8,10,12,16, 32, 64}.

The solutions provided in at least two of the first aspect, the third aspect, the fifth aspect, and the seventh aspect may be combined with each other. Correspondingly, the solutions provided in at least two of the second aspect, the fourth aspect, the sixth aspect, and the eighth aspect may be combined with each other.

According to a ninth aspect, an embodiment of this application provides a communication apparatus. The communication apparatus has a function of implementing behavior in the method embodiment in any one of the first aspect, the third aspect, the fifth aspect, and the seventh aspect. For beneficial effects, refer to the descriptions of the first aspect. Details are not described herein again. The communication apparatus may be the first NR terminal apparatus in any one of the first aspect, the third aspect, the fifth aspect, and the seventh aspect, or the communication apparatus may be an apparatus that can support the first NR terminal apparatus in any one of the first aspect, the third aspect, the fifth aspect, and the seventh aspect to implement a function required in the method provided in the first aspect, for example, a chip or a chip system.

In a possible design, the communication apparatus includes a corresponding means (means) or module configured to perform the method in the first aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example in the first aspect. For details, refer to the detailed descriptions in the method example. Details are not described herein again. The communication apparatus may also include a corresponding means (means) or module configured to perform the method in the third aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example in the third aspect. For details, refer to the detailed descriptions in the method example. Details are not described herein again. The communication apparatus may also include a corresponding means (means) or module configured to perform the method in the fifth aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example in the fifth aspect. For details, refer to the detailed descriptions in the method example. Details are not described herein again. The communication apparatus may also include a corresponding means (means) or module configured to perform the method in the seventh aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example in the seventh aspect. For details, refer to the detailed descriptions in the method example. Details are not described herein again.

According to a tenth aspect, an embodiment of this application provides a communication apparatus. The communication apparatus has a function of implementing behavior in the method embodiment in any one of the second aspect, the fourth aspect, the sixth aspect, and the eighth aspect. For beneficial effects, refer to the descriptions of the second aspect. Details are not described herein again. The communication apparatus may be the LTE terminal apparatus in the second aspect, or the communication apparatus may be an apparatus that can support the LTE terminal apparatus in the second aspect in implementing a function required in the method provided in the second aspect, for example, a chip or a chip system.

In a possible design, the communication apparatus includes a corresponding means (means) or module configured to perform the method in the second aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example in the second aspect. For details, refer to the detailed descriptions in the method example. Details are not described herein again. The communication apparatus also includes a corresponding means (means) or module configured to perform the method in the fourth aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example in the fourth aspect. For details, refer to the detailed descriptions in the method example. Details are not described herein again. The communication apparatus includes a corresponding means (means) or module configured to perform the method in the sixth aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example in the sixth aspect. For details, refer to the detailed descriptions in the method example. Details are not described herein again. The communication apparatus includes a corresponding means (means) or module configured to perform the method in the eighth aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example in the eighth aspect. For details, refer to the detailed descriptions in the method example. Details are not described herein again.

According to an eleventh aspect, an embodiment of this application provides a communication apparatus. The communication apparatus may be the communication apparatus in the ninth aspect or the tenth aspect in the foregoing embodiments, or may be a chip or a chip system disposed in the communication apparatus in the ninth aspect or the tenth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the first NR terminal apparatus and/or the second NR terminal apparatus in the foregoing method embodiments, or perform the method performed by the LTE terminal apparatus in the foregoing method embodiments.

According to a twelfth aspect, an embodiment of this application provides a communication apparatus. The communication apparatus includes an input/output interface and a logic circuit. The input/output interface is configured to input and/or output information. The logic circuit is configured to perform the method according to any one of the first aspect to the eighth aspect.

According to a thirteenth aspect, an embodiment of this application provides a chip system. The chip system includes a processor, and may further include a memory and/or a communication interface, configured to implement the method in any one of the first aspect to the eighth aspect. In a possible implementation, the chip system further includes the memory, configured to store a computer program. The chip system may include a chip, or include a chip and another discrete component.

According to a fourteenth aspect, an embodiment of this application provides a communication system. The communication system includes at least one communication apparatus in the ninth aspect and at least one communication apparatus in the tenth aspect.

According to a fifteenth aspect, this application provides a computer-readable storage medium. The computer-readable storage medium stores a computer program. When the computer program is run, the method in any one of the first aspect to the eighth aspect is implemented.

According to a sixteenth aspect, a computer program product is provided. The computer program product includes computer program code. When the computer program code is run, the method in any one of the first aspect to the eighth aspect is performed.

For beneficial effects of the ninth aspect to the sixteenth aspect and the implementations of the ninth aspect to the sixteenth aspect, refer to the descriptions of the beneficial effects of the first aspect to the eighth aspect or the first aspect to the eighth aspect and the implementations of the first aspect to the eighth aspect.

## BRIEF DESCRIPTION OF DRAWINGS

FIG. 1 is a diagram of a physical slot and a logical slot according to an embodiment of this application;
FIG. 2 is a diagram of carrying sidelink information according to an embodiment of this application;
FIG. 3 is a diagram of carrying a PSCCH and a PSSCH in one subframe according to an embodiment of this application;
FIG. 4 is a time domain mapping diagram of a DMRS associated with NR information according to an embodiment of this application;
FIG. 5 is a frequency domain mapping diagram of a DMRS associated with NR information according to an embodiment of this application;
FIG. 6 is a diagram of a retransmission reserved resource and a periodic reserved resource in NR according to an embodiment of this application;
FIG. 7 is a diagram of communication of a terminal apparatus in which an LTE-V2X communication module and an NR-V2X communication module coexist;
FIG. 8 is a diagram in which an LTE-V2X terminal apparatus or an NR-V2X terminal apparatus shares a resource pool according to an embodiment of this application;
FIG. 9 is a diagram of an example architecture of a communication system to which an embodiment of this application is applicable;
FIG. 10 is a schematic flowchart of a first communication method according to an embodiment of this application;
FIG. 11 shows a correspondence between an $i^{th}$ transmission of information and both of a reserved index value of an MCS field and an index value of a retransmission field according to an embodiment of this application;
FIG. 12 is a diagram of a correspondence between an $i^{th}$ transmission of information and both of a reserved index value of an MCS field and an index value of a retransmission field according to an embodiment of this application;
FIG. 13 is a schematic flowchart of a second communication method according to an embodiment of this application;
FIG. 14 is a diagram of a mapping position of a DMRS according to an embodiment of this application;
FIG. 15 is another diagram of a mapping position of a DMRS according to an embodiment of this application;
FIG. 16 is a diagram in which a first terminal apparatus and a second terminal apparatus share a same slot in a first resource pool according to an embodiment of this application;
FIG. 17 is a diagram in which a first terminal apparatus and a second terminal apparatus share different slots in a first resource pool according to an embodiment of this application;
FIG. 18 is a schematic flowchart of a third communication method according to an embodiment of this application;

FIG. 19 is a diagram in which a resource set supports a 15 kHz SCS and a 30 kHz SCS according to an embodiment of this application;

FIG. 20 is a diagram in which a resource for transmitting feedback information overlaps with a resource for transmitting LTE information according to an embodiment of this application;

FIG. 21 is a schematic flowchart of a fourth communication method according to an embodiment of this application;

FIG. 22 is a configuration diagram of a first example of an NR-V2X resource pool and an LTE-V2X resource pool according to an embodiment of this application;

FIG. 23 is a configuration diagram of a second example of an NR-V2X resource pool and an LTE-V2X resource pool according to an embodiment of this application;

FIG. 24 is a configuration diagram of a third example of an NR-V2X resource pool and an LTE-V2X resource pool according to an embodiment of this application;

FIG. 25 is a configuration diagram of a fourth example of an NR-V2X resource pool and an LTE-V2X resource pool according to an embodiment of this application;

FIG. 26 is a configuration diagram of a fifth example of an NR-V2X resource pool and an LTE-V2X resource pool according to an embodiment of this application;

FIG. 27 is a configuration diagram of a sixth example of an NR-V2X resource pool and an LTE-V2X resource pool according to an embodiment of this application;

FIG. 28 is a configuration diagram of an NR-V2X resource pool and an LTE-V2X resource pool according to an embodiment of this application;

FIG. 29 is a mapping diagram of a DMRS according to an embodiment of this application;

FIG. 30 is another mapping diagram of a DMRS according to an embodiment of this application;

FIG. 31 is a configuration diagram of subcarrier spacings of an NR-V2X resource pool and an LTE-V2X resource pool according to an embodiment of this application;

FIG. 32 is a diagram of a structure of a communication apparatus according to an embodiment of this application; and

FIG. 33 is a diagram of another structure of a communication apparatus according to an embodiment of this application.

## DESCRIPTION OF EMBODIMENTS

To facilitate understanding of the technical solutions provided in embodiments of this application, some technical terms in embodiments of this application are first explained and described.

(1) A network device is an access device used by a terminal device to wirelessly access a mobile communication system, and includes a radio access network (radio access network, RAN) device, for example, a base station. The network device may alternatively be a device that communicates with the terminal device over an air interface. The network device may include an evolved NodeB (evolved NodeB) that is in an LTE system or long term evolution-advanced (long term evolution-advanced, LTE-A) and that may be referred to as an eNB or an e-NodeB for short. The eNB is an apparatus that is deployed in a radio access network, that meets the fourth generation (the fourth generation, 4G) mobile communication technology standard, and that provides a wireless communication function for the terminal device. The network device may alternatively be a new radio controller (new radio controller, NR controller), a (gNodeB, gNB) in a 5G system, a central unit (central unit), a new radio base station, a remote radio module, a micro base station (also referred to as a small cell), a relay (relay), a distributed unit (distributed unit), a macro base station in various forms, a transmission reception point (transmission reception point, TRP), a transmission measurement function (transmission measurement function, TMF) or a transmission point (transmission point, TP) or any other radio access device. This is not limited in embodiments of this application. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a base band unit (base band unit, BBU) or a remote radio unit (remote radio unit, RRU), a wireless fidelity (wireless fidelity, Wi-Fi) access point (access point, AP), a base band unit pool (BBU pool) and an RRU in a cloud radio access network (cloud radio access network, CRAN), or the like. A specific technology and a specific device form used by the network device are not limited in embodiments of this application. The network device may correspond to the eNB in a 4G system, and correspond to the gNB in the 5G system.

In addition, the base station in embodiments of this application may include the central unit (central unit, CU) and the distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that division into the protocol layers is merely an example, and there may be another division into the protocol layers. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be separated into different entities for implementation, where the entities are a CU-control plane entity (CU-CP entity) and a CU-user plane entity (CU-UP entity). In this network architecture, signaling generated by the CU may be sent to the terminal device through the DU, or signaling generated by UE may be sent to the CU through the DU. The DU may transparently transmit the signaling to the terminal device or the CU by directly encapsulating the signaling at a protocol layer without parsing the signaling. In this network architecture, the CU is divided into a network device on a RAN side. In addition, the CU may be divided into a network device on a core network (core network, CN) side. This is not limited in this application.

(2) The terminal apparatus has a wireless transceiver function, and may send a signal to the network device, or receive a signal from the network device. The terminal apparatus may include user equipment (user equipment, UE), and is sometimes also referred to as a terminal device, a terminal, an access station, a UE station, a remote station, a wireless communication device, a user apparatus, a chip, or the like. In embodiments of this application, unless otherwise specified, meanings of the terminal device and the terminal apparatus in the following are the same. The terminal device is configured to connect a person, an object, a machine, and the like, and may be widely used in various scenarios, for example, including but not limited to the following scenarios: cellular communication, device-to-device (device-to-device, D2D) communication, V2X, machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medicine (remote medicine), a smart grid (smart grid), smart furniture, a smart office, a smart wearable, smart transportation, a smart city (smart city), an unmanned aerial vehicle, a robot, and the like.

For example, the terminal device in embodiments of this application may be a mobile phone, a tablet computer, a computer with a wireless transceiver function, a VR terminal, an AR terminal, a wireless terminal in industrial control, a vehicle, a wireless communication module in a vehicle, an in-vehicle T-box (Telematics BOX), a roadside unit RSU, a wireless terminal in unmanned driving, a smart speaker in an IoT network, a wireless terminal device in telemedicine, a wireless terminal device in a smart grid, a wireless terminal device in transportation security, or a wireless terminal device in a smart city, a wireless terminal device in a smart home, or the like. By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes.

The terminal device may further include a relay (relay). Alternatively, it is understood that any device that can perform data communication with a base station may be considered as the terminal device. If various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle uses the vehicle-mounted module, the vehicle-mounted assembly, the vehicle-mounted component, the vehicle-mounted chip, or the vehicle-mounted unit that is built in the vehicle, to implement a method in this application. Direct communication (PC5) interface communication is supported between terminal devices, that is, transmission is supported by using a sidelink.

In addition, in embodiments of this application, the terminal device may be an apparatus configured to implement a function of a terminal, or may be an apparatus that can support the terminal device in implementing the function, for example, a chip system. The apparatus may be installed in the terminal device. For example, the terminal device may alternatively be a vehicle detector. In embodiments of this application, the chip system may include a chip, or may include a chip and another discrete component. In the technical solutions provided in embodiments of this application, an example in which the apparatus configured to implement the function of the terminal is a terminal device is used for describing the technical solutions provided in embodiments of this application.

(3) A sidelink (sidelink, SL) is a link established between devices of a same type, and may also be referred to as a sidelink, a secondary link, or the like, and is referred to as a sidelink in this specification. The devices of the same type may be a link between terminal devices, a link between network devices, a link between relay nodes, or the like. This is not limited in embodiments of this application.

The link between terminal devices includes a D2D link defined in 3GPP release (release, Rel)-12/13 and a V2X link defined in 3GPP for vehicle to everything. V2X includes vehicle-to-vehicle (vehicle-to-vehicle, V2V), vehicle-to-infrastructure (vehicle-to-infrastructure, V2I), and vehicle-to-pedestrian (vehicle-to-pedestrian, V2P) direct communication, and a vehicle-to-network (vehicle-to-network, V2N) or vehicle-to-any entity V2X link, including Rel-14/15. V2X further includes an NR system-based V2X link and the like that are currently being researched by 3GPP and that are of Rel-16 and a later version. V2V refers to communication between vehicles. V2P refers to communication between a vehicle and a person (including a pedestrian, a person riding a bicycle, a driver, or a passenger). V2I refers to communication between a vehicle and a roadside infrastructure, for example, communication between a vehicle and a roadside unit or a road side unit (road side unit, RSU). In addition, V2N may be included in V2I, and V2N refers to communication between a vehicle and a base station/network. The RSU includes two types: a terminal-type RSU and a base station-type RSU. Because the terminal-type RSU is deployed on a road side, the terminal-type RSU is in a non-mobile state, and mobility does not need to be considered. The base station-type RSU can provide timing synchronization and resource scheduling for a vehicle that communicates with the base station-type RSU.

V2X in embodiments of this application includes LTE-V2X and NR-V2X. LTE-V2X refers to LTE-based V2X, and is also referred to as LTE-V. NR-V2X refers to NR-based V2X, and is also referred to as NR-V

(4) Sidelink information includes a sidelink channel or a sidelink signal. In embodiments of this application, unless otherwise specified, information transmitted for communication between terminal apparatuses is all sidelink information. For example, the sidelink channel may be a physical sidelink control channel (physical sidelink control channel, PSCCH), a physical sidelink shared channel (physical sidelink shared channel, PSSCH), a physical sidelink discovery channel (physical sidelink discovery channel, PSDCH), a physical sidelink feedback channel (physical sidelink feedback channel, PSFCH), or a physical sidelink broadcast channel (physical sidelink broadcast channel, PSBCH). The PSCCH may be used to carry SCI (also referred to as sidelink control information in this specification). The SCI includes LTE SCI and NR SCI. In other words, the SCI may be first-order SCI, or may be first-order SCI and second-order SCI. The first-order SCI may be denoted as SCI-1, and is also referred to as first-level SCI. The second-order SCI may be denoted as SCI-2, and is also referred to as second-level SCI. It may be understood that the first-order SCI is carried on the PSCCH, and the second-order SCI is carried on the PSSCH. SCI in LTE corresponds to first-order SCI in NR. The PSSCH may be used to carry one or more of the following: control information, service data (which may also be referred to as a media access control (media access control, MAC) protocol data unit (protocol data unit, PDU)), sidelink channel state information (channel state information, CSI), or the like. The PSSCH may be used to carry data. The PSDCH may be used to carry a discovery message. The PSFCH may be used to carry sidelink feedback information. The sidelink feedback information may include feedback information for data information, for example, hybrid automatic repeat request (hybrid automatic repeat request, HARQ) response information. The PSBCH may be used to carry information related to sidelink synchronization. A sidelink signal may be a demodulation reference signal (demodulation reference signal, DMRS), a channel state information reference signal, a positioning reference signal, a synchronization signal, or the like.

Embodiments of this application mainly relate to LTE sidelink information and NR sidelink information. The LTE sidelink information is information sent by using an LTE sidelink, and is also referred to as LTE information. The NR sidelink information is information sent by using an NR sidelink, and is also referred to as NR information. From this perspective, the NR terminal apparatus may be a terminal apparatus that transmits information based on an NR-V2X or NR sidelink (NR sidelink). The LTE terminal apparatus may be a terminal apparatus that transmits information based on an LTE-V2X or LTE sidelink (LTE sidelink). The LTE sidelink information and the NR sidelink information can coexist, that is, "co-channel coexistence for LTE sidelink and NR sidelink". The NR information includes at least one of the following: NR sidelink control information, NR sidelink data information, NR sidelink feedback information, NR collision indication information, NR side broadcast information, an NR DMRS, an NR PTRS, NR CSI-RS, and an NR synchronization signal. The LTE information includes at least one of the following: LTE sidelink control information, LTE sidelink data information, NR side discovery information, NR side broadcast information, an NR DM-RS, and an NR synchronization signal.

(5) A resource pool (resource pool) is a set of time and frequency resources used by a terminal apparatus to perform sidelink communication. The resource pool includes one or more frequency domain units in frequency domain. The frequency domain unit may be a resource element (resource element, RE), a resource block (resource block, RB), a subchannel (subchannel), a carrier (carrier), a bandwidth part (BWP, bandwidth part), or the like. For ease of description, an example in which the frequency domain unit is a subchannel is used in this specification, unless otherwise specified. The resource pool includes one or more time units in time domain. The time unit may be a symbol, a slot (slot), a mini-slot (mini-slot), a subframe, a frame, a half-subframe, a half-frame, or the like. The one or more time units may be consecutive or discrete in terms of time. Unless otherwise specified, an example in which the time unit in this specification is a slot or a subframe is used. For example, a time unit for transmitting NR information may be a slot, and a time unit for transmitting LTE information may be a slot or a subframe.

The time domain resources included in the resource pool may be consecutive or inconsecutive. Similarly, the frequency domain resources included in the resource pool may be consecutive or inconsecutive. In LTE, a minimum granularity of a time domain resource may be a slot or a subframe (this is used as an example in this specification), that is, a unit of the time domain resource is a slot or a subframe. In NR, a minimum granularity of a time domain resource may be a slot. The network device may preconfigure a resource pool. For example, in LTE, the network device may indicate, by using an information element "SubframeBitmapSL-r14" and using 10 to 100 subframes as a period, subframes that belong to the resource pool in every 1024 radio frames in different time division multiplexing (time division duplexing) TDD or frequency division multiplexing (frequency division duplexing, FDD) configurations. In NR, the network device may indicate, by using an information element "sl-TimeResource-r16" and using 10 to 160 slots as a period, slots that belong to the resource pool in every 1024 radio frames.

It should be noted that the time units included in the resource pool in time domain may be physically consecutive, or may be logically consecutive. For example, FIG. 1 is a diagram of physically consecutive slots and logically consecutive slots. In FIG. 1, an example in which physically consecutive slots are a slot 1 to a slot 8 is used. The slot 1 to the slot 8 may also be referred to as physical slots. The slot 1, the slot 3, the slot 5, and the slot 8 in the slot 1 to the slot 8 are configured to belong to one resource pool. In other words, the resource pool includes the physical slot 1, the physical slot 3, the physical slot 5, and the physical slot 8. From a perspective of a resource pool, the resource pool includes four slots. The four slots may be a slot 1', a slot 2', a slot 3', and a slot 4'. In other words, the resource pool includes four logically consecutive slots. It may be learned from FIG. 1 that the physical slot 1 is the slot 1' in the resource pool, the physical slot 3 is the slot 2' in the resource pool, the physical slot 5 is the slot 3' in the resource pool, and the physical slot 8 is the slot 4' in the resource pool. That is, physically inconsecutive slots can be logically consecutive. For ease of description, in this specification, slots that are logically consecutive but not necessarily physically consecutive may be referred to as logical slots (logical slots). Correspondingly, a physical slot is referred to as a physical slot. Similarly, subframes that are logically consecutive but not necessarily physically consecutive may be referred to as logical subframes. Correspondingly, a physical subframe is referred to as a physical subframe. For example, a total quantity of logical slots included in the resource pool for transmitting the NR information is $T_{NR}$, and slots for transmitting the NR information may include a logical slot m, where a value range of m is {0, 1, ..., $T_{NR}$-1}. For another example, a total quantity of logical subframes included in the resource pool for transmitting the LTE information is $T_{LTE}$, and subframes for transmitting the LTE information may include a logical subframe k, where a value range of k is {0, 1, ..., $T_{LTE}$-1}.

The resource pool may be classified into a sending resource pool and a receiving resource pool. In other words, the terminal apparatus performs sending in the sending resource pool, and performs receiving in the receiving resource pool. Generally, to ensure sidelink communication between the two terminal apparatuses, the sending resource pool in which the sending terminal apparatus is located corresponds to the receiving resource pool in which the receiving terminal apparatus is located. In other words, time and frequency domain resources in the sending resource pool and the receiving resource pool and communication parameters configured in the resource pools are the same. It may also be considered that for one sending resource pool, one receiving resource pool corresponds to the sending resource pool by default. In this way, it can be ensured that a terminal transmit end device can communicate with the receiving terminal apparatus. Certainly, the receiving resource pool may also include a resource in the sending resource pool, and the sending resource pool may also include a resource in the receiving resource pool. For ease of description, in this specification, that the terminal apparatus performs sending in the resource pool means that the terminal apparatus performs sending by using the resource in the sending resource pool. That the terminal apparatus performs receiving in the resource pool means that the terminal apparatus performs receiving in the receiving resource pool corresponding to the sending resource pool. In NR, the network device may configure the receiving resource pool and the sending resource pool by using SL-BWP-PoolConfigCommon or SL-BWP-PoolConfig. Different resource pools can have different parameter configurations, such as logical slots. Different resource pools may be distinguished by using resource pool indexes (for example, SL-ResourcePoolIDs). In other words, different resource pools correspond to different SL-ResourcePoolIDs. If two resource pools have a same SL-ResourcePoolID, it may be considered that time and frequency resources of the two resource pools completely overlap with each other.

(6) A transmission of sidelink information means that a terminal apparatus transmits sidelink information by using a resource in a resource pool. In this specification, the transmission may be understood as sending and/or receiving. The resource in the resource pool may carry one or more of the following sidelink information: a PSCCH, a PSSCH, a PSFCH, and a DMRS. The PSCCH may carry first-order SCI, the PSSCH may carry second-order SCI and/or data, and the PSFCH may carry feedback information. The PSCCH occupies two or three symbols in time domain, and the PSCCH and the PSSCH are located in a same slot in time domain. A physical resource block (physical resource block, PRB) carrying the PSCCH starts from a PRB with the smallest sequence number of a subchannel with the smallest sequence number of the associated PSSCH. It may be understood that sidelink information in LTE does not include a PSFCH. The resource in the resource pool can be used for other purposes in addition to carrying the sidelink information. For example, the resource in the resource pool may be further used for AGC. A symbol used for AGC is also referred to as an AGC symbol. The AGC symbol may be used to transmit data, or may be used to transmit a reference signal. The resource in the resource pool may also be used for transmission/reception or transmission/reception conversion, and a symbol used for transmission/reception or transmission/reception conversion is also referred to as a null symbol (GAP symbol). On the null symbol, the communication device usually neither sends nor receives. Generally, the AGC symbol and the GAP symbol are respectively located on a first symbol and a last symbol of a subframe (or a slot).

For ease of understanding, FIG. 2 is a diagram of carrying sidelink information. In FIG. 2, an example in which a unit of a time domain resource in a resource pool is a slot is used, and an example in which a time domain resource carrying sidelink information is one slot is used. In (a) in FIG. 2, an example in which one slot carries a PSCCH, a PSSCH, and a PSFCH is used. In (b) in FIG. 2, an example in which one slot carries a PSCCH and a PSSCH is used.

It should be noted that the PSCCH and the PSSCH may be adjacent or may not be adjacent in frequency domain. For example, FIG. 3 is a diagram of carrying a PSCCH and a PSSCH in one subframe. In (a) in FIG. 3, an example in which the PSCCH and the PSSCH are not adjacent in frequency domain is used. In (b) in FIG. 3, an example in which the PSCCH and the PSSCH are adjacent in frequency domain is used.

(7) A time and frequency position of a DMRS is a resource position occupied by the DMRS. The DMRS includes a PSCCH DMRS and a PSSCH DMRS. It may be understood that the PSCCH DMRS is located on the PSCCH, and the PSSCH DMRS is located on the PSSCH. One DMRS occupies one symbol in time domain, and occupies one RE in frequency domain. For the DMRS associated with NR information, the PSCCH DMRS is located on each symbol of the PSCCH, and the PSSCH DMRS is located on some symbols of the PSSCH. For example, a time domain position of the PSSCH DMRS on the PSSCH may be described in the following table.

| $l_d$ in symbols | DMRS position $\bar{l}$ | | | | | |
|---|---|---|---|---|---|---|
| | PSCCH duration 2 symbols | | | PSCCH duration 3 symbols | | |
| | Number of PSSCH DM-RS | | | Number of PSSCH DM-RS | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1,4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

$l_d$ indicates duration of NR information, PSCCH duration 2 symbols indicates that duration of the PSCCH is two symbols, PSCCH duration 3 symbols indicates that duration of the PSCCH is three symbols, and Number of PSSCH DM-RS indicates a quantity of DMRSs on the PSSCH. DMRS position $\bar{l}$ is an index of a time unit in which the DMRS is located. The duration of the NR information is 13 symbols. The duration of the PSCCH is 2 symbols, for example, a symbol 3 and a symbol 10 (it should be noted that a symbol index starts from 0). The foregoing parameters are also applicable to Table 7 to Table 10 below.

For example, FIG. 4 is a time domain mapping diagram of a DMRS associated with NR information. In (a) in FIG. 4, a PSCCH with a length of two symbols is used as an example. In (b) in FIG. 4, a PSCCH with a length of three symbols is used as an example.

For example, FIG. 5 is a frequency domain mapping diagram of a DMRS associated with NR information. Shadow parts in (a) in FIG. 5 show DMRS frequency domain mapping of a PSCCH on one RB. Using an RE as a granularity, one PSCCH DMRS is mapped to every four REs. Using an RB as a granularity, each RB has a PSCCH DMRS. A mapping position of a lowest frequency domain position of the RE is aligned with a start RE of the PSCCH. Each RB includes 12 REs. Shadow parts in (b) in FIG. 5 show DMRS frequency domain mapping of a PSSCH on one RB. Using an RE as a granularity, one PSSCH DMRS is mapped to every two REs. Using an RB as a granularity, each RB has a PSSCH DMRS. A mapping position of a lowest frequency domain position of the RE is aligned with a start RE of the PSSCH. Each RB includes 12 REs.

(8) Retransmission reserved resource and periodic reserved resource The retransmission reserved resource is a reserved resource for a retransmission. The periodic reserved resource is a reserved periodic resource. To improve transmission reliability, a transmitter may repeatedly transmit data. The network device may configure a resource for a retransmission, namely, the retransmission reserved resource. For example, in NR, three fields in SCI: a frequency domain resource indication (frequency resource assignment), a time domain resource indication (time resource assignment), and a resource reservation period (resource reservation period) may indicate a retransmission reserved resource and/or a periodic reserved resource. For example, the frequency domain indication field indicates a quantity of subchannels for an initial transmission and a retransmission and frequency domain positions. The time domain indication field indicates a time gap between a retransmission resource and an initial transmission resource. The resource reservation period field indicates a resource reservation period.

For example, FIG. 6 is a diagram of a retransmission reserved resource and a periodic reserved resource in NR. In FIG. 6, R1 is a resource for an initial transmission or a resource for actually sending SCI (shown by using a solid line), and R2 and R3 are retransmission reserved resources (shown by using dashed lines). R4, R5, and R6 are periodic reserved resources (shown by using dashed lines). SCI sent on the initial transmission resource may indicate the retransmission reserved resource. As shown in FIG. 4, R1 is a resource for an initial transmission. A frequency domain indication field in SCI transmitted on the resource R1 may indicate a quantity of subchannels of R1, R2, and R3 and frequency domain positions. The time domain indication field in the SCI may indicate a time gap between a slot end position of R1 and a slot end position of R2 and a time gap between a slot end position of R1 and a slot end position of R3. The resource reservation period field in the SCI indicates the resource reservation period, for example, a time gap between R1 and R4, a time gap between R2 and R5, and a time gap between R3 and R6 in FIG. 6. That is, R4 is periodically reserved for R1, R5 is periodically reserved for R2, and R6 is periodically reserved for R3. Although R4 is not used for sidelink transmission, it may also be considered that R5 and R6 are reserved for R4.

In LTE, four fields in the SCI: a resource reservation (Resource reservation), a frequency resource location of initial transmission and retransmission (Frequency resource location of initial transmission and retransmission), a time gap between initial transmission and retransmission (Time gap between initial transmission and retransmission), and a retransmission index (Retransmission index) may indicate resource reservation for a retransmission and/or a periodic transmission. The resource reservation field indicates a resource reservation period. Because one retransmission is performed at most in LTE, the resource reservation field may indicate a time gap between R1 and R4 and/or a time gap between R2 and R5 in FIG. 6. The frequency resource location of initial transmission and retransmission field indicates a quantity of subchannels for an initial transmission and a retransmission and frequency domain positions. For example, the SCI on the resource R1 indicates a quantity of subchannels of R1 and R2 and frequency domain positions. The time gap between initial transmission and retransmission field indicates a time gap between an initial transmission and a retransmission of a same transmission block (transmission block, TB), and a unit is a logical slot. For example, the SCI on the resource R1 indicates a time gap between a slot end position of R1 and a slot end position of R2. For another example, SCI on the resource R2 indicates a time gap between a slot end position of R1 and a slot end position of R2. The retransmission index field indicates whether a current transmission is an initial transmission or a retransmission. For example, if the field is 0, it indicates that the current transmission is an initial transmission, or if the field is 1, it indicates that the current transmission is a retransmission.

(9) A source (source) identity (identity, ID) and a destination (destination) ID correspond to service transmission and reception. For example, the source identity corresponds to service transmission, and the destination identity corresponds to service reception. For example, in NR-V2X, a source layer-2 identity (Source Layer-2 ID or source L2 ID) occupies 24 bits. A least significant bit part (LSB part (8 bits)) of the source layer-2 identity is referred to as a source layer-1 identity, namely, a source ID indicated in SCI of NR. A most significant bit part (MSB part (16 bits)) is referred to as a source (source, SRC), and is indicated in a MAC header of a MAC control element (control element, CE). The source identity in control information may be the source ID indicated in the SCI of NR, the SRC in the MAC header, or the source layer-2 identity. A destination layer-2 identity (Destination Layer-2 ID or destination L2 ID) also occupies 24 bits. A least significant bit part (LSB part (16 bits)) of the destination layer-2 identity is referred to as a destination layer-1 identity, namely, a destination ID indicated in the SCI of NR. A most significant bit part (MSB part (8 bits)) of the destination layer-2 identity is referred to as a destination (destination, DST), and is indicated in the MAC header of the MAC CE. The destination identity in the control information may be the destination ID indicated in the SCI, the DST in the MAC header, and the destination layer-2 identity. For another example, in LTE-V2X, a source layer-2 identity occupies 24 bits, and is indicated by an SRC field in a MAC header. The destination layer-2 identity occupies 24 bits, and is indicated by a DST field in the MAC header.

(10) A preemption evaluation mechanism means that a higher-priority service can preempt a resource reserved for a lower-priority service, to ensure reliability of the high-priority service. For example, the terminal apparatus determines, in a slot m based on a resource sensing result, a candidate resource set S1 for a sidelink transmission. The resource sensing result may include information such as a priority $P_{Rx}$ indicated by received SCI and an RSRP value of a resource on which the SCI is located. The terminal apparatus determines a resource r1 from S1, and reserves the resource r1 by using SCI. It may be understood that a time domain position of r1 is the slot m.

Because another terminal apparatus uses a resource in a resource pool or reserves a resource between a slot n and the slot m, the terminal apparatus needs to determine, based on a new resource sensing result before the slot m, whether to use the resource r1. For example, the terminal apparatus determines, before the slot m based on the new resource sensing result, a candidate resource set S2 for a sidelink transmission. When the following condition is met, the terminal apparatus determines not to use the resource r1. It may be considered that the terminal apparatus reports that the resource r1 is preempted.

Condition 1: The resource r1 does not belong to S2. In other words, the terminal apparatus determines, based on the new resource sensing result, that S2 does not include the resource r1.

Condition 2: The priority $P_{Rx}$ indicated by the SCI meets one of the following conditions:

(1) A preemption priority field sl-PreemptionEnable is set to enabled, and $P_{Tx} > P_{Rx}$. It should be noted that $P_{Tx}$ and $P_{Rx}$ correspond to priority values.

(2) A preemption priority field sl-PreemptionEnable is set to any one of {1, 2, ..., 8}. In other words, $prio_{pre}$ is set to any one of {1, 2, ..., 8}, and $P_{Rx} < P_{pre}$ and $P_{Tx} > P_{Rx}$. It should be noted that $P_{Rx}$, $P_{Tx}$, and $P_{pre}$ correspond to priority values.

(11) Re-evaluation is similar to preemption evaluation, and is a mechanism introduced to ensure reliability of a high-priority service. A difference from preemption evaluation is that in a re-evaluation mechanism, if it is determined that the resource r1 does not belong to S1, the terminal apparatus reports that the resource r1 does not pass re-evaluation.

(12) A correspondence between $\mu$ and a subcarrier spacing (subcarrier spacing, SCS) is shown in the following table:

| $\mu$ | 0 | 1 | 2 | 3 | 4 | 5 |
|---|---|---|---|---|---|---|
| $2^{\mu}$ | 1 | 2 | 4 | 8 | 16 | 32 |
| Subcarrier spacing (kHz) | 15 | 30 | 60 | 120 | 240 | 480 |

(13) "At least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of obj ects. For example, a first terminal apparatus and a second terminal apparatus are merely used to distinguish different terminal apparatuses, but do not indicate different priorities or importance degrees of the two terminal apparatuses. In embodiments of this application, "if" and "if" may be replaced, and unless otherwise specified, "when" and "in a case of" may be replaced.

The foregoing describes some technical terms in embodiments of this application. The following describes technical features in embodiments of this application.

LTE-V2X supports basic safe autonomous driving. Compared with LTE-V2X, NR-V2X may further support advanced service autonomous driving, for example, support lower transmission latency, more reliable communication transmission, higher throughput, and better user experience, to meet requirements of a wider application scenario. 3 GPP has standardized LTE-V2X and NR-V2X. LTE-V2X and NR-V2X can be used together as an autonomous driving technology of cellular vehicle to everything (Cellular-V2X, C-V2X).

Currently, the standardized NR-V2X supports in-device coexistence (in-device coexistence co-existence). For example, both an LTE-V2X communication module and an NR-V2X communication module may be disposed in a 3GPP R16 terminal apparatus. For another example, both an LTE-V2X communication module and an NR-V2X communication module may be disposed in a 3GPP R18 terminal apparatus. For example, FIG. 7 is a diagram of communication of a terminal apparatus in which an LTE-V2X communication module and an NR-V2X communication module coexist. The LTE-V2X communication module may communicate with a terminal apparatus (also referred to as an LTE-V2X terminal apparatus in this specification) in which LTE-V2X is disposed, and the NR-V2X communication module may communicate with a terminal apparatus (also referred to as an NR-V2X terminal apparatus in this specification) in which NR-V2X is disposed. In other words, the 3GPP R16 terminal apparatus may communicate with a conventional LTE-V2X terminal apparatus, and may also communicate with an NR-V2X terminal apparatus. Optionally, the 3GPP R16 terminal apparatus may further coexist with an NR-V2X terminal apparatus of a future newly released version. For example, the 3GPP R16 terminal apparatus sends information. An LTE-V2X communication module and an NR-V2X communication module in the 3GPP R16 terminal apparatus send information in a time division multiplexing manner. It should be noted that specific implementations of the LTE-V2X communication module and the NR-V2X communication module are not limited in embodiments of this application. For example, an LTE-V2X communication module and an NR-V2X communication module included in a terminal apparatus may be two independent communication modules, or may be a communication module integrating an LTE-V2X communication function and an NR-V2X communication function.

The network device may configure a resource for sidelink communication. For example, the network device configures a resource pool (also referred to as an LTE-V2X resource pool) for a terminal apparatus that performs communication based on LTE-V2X, and the network device also configures a resource pool (also referred to as an NR-V2X resource pool) for a terminal apparatus that performs communication based on NR-V2X. The LTE-V2X terminal apparatus selects a resource from the LTE-V2X resource pool to perform LTE-V2X communication, and the NR-V2X terminal apparatus selects a resource from the NR-V2X resource pool to perform NR-V2X communication. Optionally, the network device may configure a shared resource pool for the LTE-V2X communication module and the NR-V2X communication module. The LTE-V2X terminal apparatus or the NR-V2X terminal apparatus may select a to-be-used resource from the resource pool. For example, FIG. 8 is a diagram in which an LTE-V2X terminal apparatus or an NR-V2X terminal apparatus shares a resource pool.

It may be understood that when selecting a resource, the LTE-V2X communication module may measure a reference signal received power (reference signal received power, RSRP) value for a resource in the resource pool, to determine which resources are occupied. However, the LTE-V2X communication module does not learn of a time and frequency position of a reference signal sent by the NR-V2X communication module. As a result, a correct RSRP value cannot be obtained, and resources occupied by the NR-V2X communication module cannot be accurately determined. In this way, when selecting a resource, the LTE-V2X communication module may not exclude some or all resources occupied by the NR-V2X communication module. As a result, a resource conflict occurs. In other words, introduction of the NR-V2X communication module may cause interference to the LTE-V2X communication module. For the NR-V2X communication module, the LTE-V2X communication module may notify, by using SCI, the NR-V2X communication module of a sensing result that represents a resource occupation status. The NR-V2X communication module decodes the SCI, to determine a resource occupation status of the LTE-V2X communication module, so as to exclude, during resource selection, a resource occupied or reserved by the LTE-V2X communication module. As shown in FIG. 8, the NR-V2X communication module determines, based on the sensing result reported by the LTE-V2X communication module, that the resource r1 belongs to the resource to be used by the LTE-V2X communication module, to exclude the resource r1 and select the resource r2. On the contrary, although the NR-V2X communication module also sends SCI to represent a resource occupation status, because the LTE-V2X communication module cannot decode the SCI from the NR-V2X communication module, the LTE-V2X communication module cannot learn of the resource occupation status of the NR-V2X communication module. In this way, when selecting a resource, the LTE-V2X communication module may not exclude some or all resources occupied by the NR-V2X communication module. As a result, a resource conflict occurs. It may be learned that if the LTE-V2X communication module and the NR-V2X communication module share a resource, a resource conflict may occur, and interference is caused. This specification relates to two types of SCI. One type of SCI is SCI sent by the LTE-V2X communication module, and is also referred to as LTE SCI. It may be understood that the LTE SCI is SCI in an LTE-V format. The other type of SCI is SCI sent by the NR-V2X communication module, and is also referred to as NR SCI. In embodiments of this application, the NR SCI may be SCI in an NR-V format, or may be SCI in an LTE-V format. Details are described below.

In view of this, the technical solutions in embodiments of this application are provided, so that the terminal apparatus that performs communication based on LTE-V2X can clearly determine a status in which a configured resource is occupied by the terminal apparatus that performs communication based on NR-V2X, to avoid a resource conflict during resource selection.

The technical solutions provided in embodiments of this application may be applied to a 5G mobile communication system, for example, an NR system, or may be applied to an LTE system, or may be applied to a next-generation mobile communication system or another similar communication system. In addition, the technical solutions provided in embodiments of this application may be applied to a link between a network device and a terminal apparatus, or may be applied to a sidelink.

For example, FIG. 9 is a network architecture to which an embodiment of this application is applicable. FIG. 9 includes four terminal apparatuses and one network device. The terminal apparatus in FIG. 9 may perform communication when there is a network infrastructure or no network infrastructure. For ease of description, an example in which the terminal apparatus in FIG. 9 is an in-vehicle terminal apparatus is used in this specification. In other words, an example in which an embodiment of this application is applied to a V2X scenario is used. A specific form of the terminal apparatus is not limited in embodiments of this application. For example, the terminal apparatus may alternatively be a mobile phone. The four terminal apparatuses in FIG. 9 include a terminal apparatus in which an NR-V2X communication module is disposed, or may include a terminal apparatus in which an LTE-V2X communication module is disposed, or may include a terminal apparatus in which an LTE-V2X communication module and an NR-V2X communication module are disposed. In this specification, the terminal apparatus in which the LTE-V2X communication module is disposed is also referred to as an LTE-V2X terminal apparatus. The terminal apparatus in which the NR-V2X communication module is disposed is also referred to as an NR-V2X terminal apparatus. The terminal apparatus in which the LTE-V2X communication module and the NR-V2X communication module are disposed may also be considered as an NR-V2X terminal apparatus. A specific name of the NR-V2X terminal apparatus is not limited in embodiments of this application. For example, the NR-V2X terminal apparatus may also be referred to as a 5G-advanced V2X terminal apparatus, an advanced 5G V2X terminal apparatus, or an enhanced 5G V2X terminal apparatus. It should be noted that an example in which the terminal apparatus in FIG. 9 is an in-vehicle apparatus or a vehicle is used. A type of the terminal apparatus is not limited in embodiments of this application.

The four terminal apparatuses in FIG. 9 are a terminal apparatus 1, a terminal apparatus 2, a terminal apparatus 3, and a terminal apparatus 4. Any one of the four terminal apparatuses may send information to the remaining three terminal apparatuses around, or may receive information from the remaining three terminal apparatuses. A quantity of terminal apparatuses in FIG. 9 is merely an example. During actual application, the network device may provide services for a plurality of terminal apparatuses. FIG. 9 uses an example in which the terminal apparatus 1 and the terminal apparatus 2 have no network coverage, and the terminal apparatus 3 and the terminal apparatus 4 have network coverage.

It may be understood that in a case of network coverage, a resource for a sidelink may be allocated by using a resource allocation mode (mode-1) of the network device. In a case of no network coverage, a resource for a sidelink may be determined by using a resource self-selection mode (mode-2) of the terminal apparatus.

In the mode-1, a resource may be allocated in a dynamic mode or a preconfiguration mode. In the dynamic mode of the mode-1, the network device allocates a resource to the terminal apparatus by using downlink control information (downlink control information, DCI). After receiving the DCI, the terminal apparatus sends information on the resource. In the preconfiguration mode of the mode-1, the network device configures, by using higher layer signaling, related time and frequency resources for sending on a sidelink. The terminal apparatus may directly send data on the resource configured by using the higher layer signaling; or the network device sends DCI to activate the configured resource. After receiving the DCI, the terminal apparatus may send the information on the resource configured by using the higher layer signaling.

In the mode-2, a transmission resource of the terminal apparatus does not depend on the network device. The network device may allocate a resource pool in advance, and the terminal apparatus autonomously selects an available resource from the resource pool. For example, the terminal apparatus senses (senses), in a resource sensing window, SCI sent by another terminal apparatus in the resource pool. Sensing may include a process of detecting SCI, or may include a process of detecting SCI, decoding the SCI, and measuring an RSRP of a resource based on an indication of the SCI. The terminal apparatus selects a resource in a resource selection window based on a resource sensing result to send information. It may be understood that a remaining resource set formed after the terminal apparatus excludes an unavailable resource from resources in the resource selection window is a candidate resource set. The terminal apparatus selects, from the candidate resource set, a resource for sending information.

The following describes the four technical solutions provided in embodiments of this application with reference to the accompanying drawings. Before the four technical solutions provided in embodiments of this application are described, some terms in embodiments of this application are uniformly described. The following uses an example in which four technical solutions are performed by using an LTE-V2X communication module and an NR-V2X communication module. It may be understood that the NR-V2X communication module may be a next-generation V2X communication module. In other words, the NR-V2X communication module may be replaced with the next-generation V2X communication module.

For ease of description, information transmitted based on the NR-V2X communication module (namely, information based on NR radio access) is collectively referred to as NR information below, and information transmitted based on the LTE-V2X communication module (namely, information based on E-UTRA radio access) is collectively referred to as LTE information below. It may be understood that, based on NR radio access means that an NR technology defined by 3GPP is used for wireless communication, including using a channel and/or a signal defined by NR; and based on E-UTRA radio access means that an E-UTRA technology (namely, an LTE technology) defined by 3GPP is used for wireless communication, including using a channel and/or a signal defined by LTE. It may be understood that the NR information and the LTE information belong to sidelink information, and include a sidelink channel and/or a sidelink signal.

An information priority is represented by a priority value. A smaller information priority value indicates a higher information priority. For example, the information priority value may include {0, 1, 2, 3, 4, 5, 6, 7}. The information priority value 0 indicates the highest information priority. For another example, the information priority value may include {1, 2, 3, 4, 5, 6, 7, 8}. The information priority value 1 indicates the highest information priority. For example, the priority of the to-be-sent information of the terminal apparatus is higher than a priority threshold. In other words, the priority value of the to-be-sent information of the terminal apparatus is less than a priority value (the two may be replaced unless otherwise specified).

The following uses an example in which the four technical solutions in embodiments of this application are applied to the network architecture shown in FIG. 9 to sequentially describe the communication method provided in embodiments of this application. In addition, the method may be performed by two communication apparatuses. The two communication apparatuses are, for example, a first communication apparatus and a second communication apparatus. The first communication apparatus may be a first NR terminal apparatus or a communication apparatus that can support a first NR terminal apparatus in implementing a function required in the method, or certainly may be another communication apparatus, for example, a chip system. The second communication apparatus may be an LTE terminal device apparatus or a communication apparatus that can support an LTE terminal apparatus in implementing a function required in the method, or certainly may be another communication apparatus, for example, a chip system. Implementations of the first communication apparatus and the second communication apparatus are not limited. For example, the first communication apparatus may be the first NR terminal apparatus, and the second communication apparatus is the LTE terminal apparatus; or the first communication apparatus is the communication apparatus that can support the first NR terminal apparatus in implementing the function required in the method, and the second communication apparatus is the LTE terminal apparatus. If this embodiment is applied to the network architecture shown in FIG. 9, the first NR terminal apparatus and the LTE terminal apparatus described below may be the terminal apparatuses in the network architecture shown in FIG. 9. It should be noted that the following uses only an example in which one NR terminal apparatus and one LTE terminal apparatus are used to perform the operation, and is not limited to the two terminal apparatuses. For example, this embodiment of this application may be performed by using one terminal apparatus and more LTE terminal apparatuses, or may be performed by using more first NR terminal apparatuses and one LTE terminal apparatus. When more first NR terminal apparatuses are used, the first NR terminal apparatuses in the more first NR terminal apparatuses perform a same procedure. When more LTE terminal apparatuses are used, the LTE terminal apparatuses in the more LTE terminal apparatuses perform a same procedure.

There may be a first NR terminal apparatus or an LTE terminal apparatus in a network. The network device may configure a first resource pool for the first NR terminal apparatus, so that the first NR terminal apparatus sends and/or receives NR information. The first resource pool is also referred to as an NR resource pool, an NR-V2X resource pool, or an NR-V resource pool. The network device may also configure a second resource pool for the LTE terminal apparatus, so that the LTE terminal apparatus sends and/or LTE information. The second resource pool is also referred to as an LTE resource pool, an LTE-V2X resource pool, or an LTE-V resource pool. Alternatively, the first resource pool and the second resource pool may be preconfigured. The first NR terminal apparatus may transmit the NR information by using a resource in the first resource pool and/or the second resource pool, and the LTE terminal apparatus transmits the LTE information by using a resource in the second resource pool.

In embodiments of this application, transmitting NR information includes sending and/or receiving NR information. Similarly, transmitting LTE information includes sending and/or receiving LTE information. Unless otherwise specified, transmitting NR information may be replaced with sending and/or receiving NR information. Similarly, transmitting LTE information may be replaced with sending and/or receiving LTE information.

To improve resource utilization, the first NR terminal apparatus and the LTE terminal apparatus may share a resource. In other words, time and frequency resource included in the first resource pool and time and frequency resource included in the second resource pool may partially or completely overlap with each other. For example, a time domain resource included in the first resource pool and a time domain resource included in the second resource pool belong to a same time unit. For another example, a frequency domain resource included in the first resource pool and a frequency domain resource included in the second resource pool belong to a same frequency domain unit. For another example, the time and frequency resources included in the second resource pool belongs to the time and frequency resources included in the first resource pool. It may be understood that the first resource pool and the second resource pool may also be a same resource pool. In other words, one resource pool is preconfigured or is configured by the network device. In this case, information elements included in configuration information for configuring the first resource pool and configuration information for configuring the second resource pool may be the same, or it is understood that the configuration information for configuring the first resource pool is the configuration information for configuring the second resource pool. In other words, one resource pool may be configured for both the first terminal apparatus and the second terminal apparatus by using the same configuration information. The first NR terminal apparatus obtains the configuration information, and may determine the first resource pool based on the configuration information. The LTE terminal apparatus obtains the configuration information, and may determine the second resource pool based on the configuration information. The first NR terminal apparatus may transmit the NR information by using a resource in the first resource pool, and the LTE terminal apparatus transmits the LTE information by using a resource in the second resource pool (namely, the first resource pool).

In the following description, unless otherwise specified, an example in which the first resource pool and the second resource pool are a same resource pool, and the first NR terminal apparatus and the LTE terminal apparatus share a first resource set is used. In other words, the first resource set may be used to transmit NR information, or may be used to transmit LTE information. The first resource set may be the first resource pool, or may be a set of some resources in the first resource pool.

It may be understood that an NR terminal apparatus in which an NR-V2X communication module is disposed may send NR information, and may also receive NR information sent by another NR terminal apparatus. An LTE terminal apparatus in which an LTE-V2X communication module is disposed may send LTE information, and may also receive LTE information sent by another LTE terminal apparatus. For ease of description, in the following, terminal apparatuses that can send NR information are collectively referred to as a first NR terminal apparatus, and terminal apparatuses that can receive NR information are collectively referred to as a second NR terminal apparatus. The LTE terminal apparatus may send LTE information, may receive LTE, and may also receive SCI sent by the first NR terminal apparatus. It may be understood that the first NR terminal apparatus and/or the second NR terminal apparatus in which an LTE-V2X communication module may be further disposed send/sends LTE information and receive/receives LTE information sent by another terminal apparatus. In other words, the NR-V2X terminal apparatus in which an NR-V2X communication module is disposed belongs to the first NR terminal apparatus when sending NR information. The NR-V2X terminal apparatus in which an NR-V2X communication module is disposed belongs to the second NR terminal apparatus when receiving NR information.

FIG. 10 is a schematic flowchart of a first communication method according to an embodiment of this application.

S1001: A first NR terminal apparatus determines first SCI, where the first SCI indicates that a data channel associated with the first SCI carries NR information, and the first SCI is used by an LTE terminal apparatus to select a resource.

S1002: The first NR terminal apparatus sends the first SCI.

It may be understood that there may be a plurality of first NR terminal apparatuses in a network, and all the plurality of first NR terminal apparatuses may send NR information by using a resource in a first resource set. To avoid a resource conflict as much as possible, any NR terminal apparatus, for example, the first NR terminal apparatus, may notify, by using SCI in an NR-V format, a second NR terminal apparatus of a resource occupied for sending the NR information and/or a reserved resource. In this way, the second NR terminal apparatus decodes the received SCI, to determine which resources are resources to be used by the first NR terminal apparatus, so that the resources to be used by the first NR terminal apparatus can be excluded from the first resource set. Similarly, there may also be a plurality of LTE terminal apparatuses in the network. For example, a first LTE terminal apparatus may sense SCI sent by a second LTE terminal apparatus, and determine, based on the SCI, a resource used and/or reserved by the second LTE terminal apparatus, to determine to exclude the occupied resource from the first resource set. It should be understood that the SCI sent by the LTE terminal apparatus is SCI in an LTE-V format. Optionally, the SCI in the LTE-V format is equivalent to first-level SCI in the SCI that is in the NR-V format and that is sent by the first NR terminal apparatus.

When the first NR terminal apparatus and the LTE terminal apparatus share the first resource set, the first NR terminal apparatus may also sense the SCI sent by the LTE terminal apparatus, and determine, based on the SCI, a resource used and/or reserved by the LTE terminal apparatus, to determine to exclude the occupied resource from the first resource set. Although the LTE terminal apparatus may sense the SCI in the NR-V format from the first NR terminal apparatus, because the LTE terminal apparatus cannot decode the SCI from the first NR terminal apparatus, the LTE terminal apparatus cannot learn of a resource occupation status of the first NR terminal apparatus. In this way, the LTE terminal apparatus may use a resource occupied by the first NR terminal apparatus. As a result, a resource conflict occurs. It may also be considered that the first NR terminal apparatus causes interference to the LTE terminal apparatus.

Generally, a data channel associated with an indication of SCI in an LTE-V format carries LTE information. However, in this embodiment of this application, the first-level SCI (for example, referred to as the first SCI) sent by the first NR terminal apparatus is the SCI in the LTE-V format, but the first SCI indicates that the data channel associated with the first SCI carries the NR information. In other words, the first NR terminal apparatus indicates, by using the SCI in the LTE-V format, that the information sent by the first NR terminal apparatus is the NR information. It may be understood that, that the first NR terminal apparatus uses the SCI in the LTE-V format may be further understood as that the SCI sent by the first NR terminal apparatus is the SCI in the LTE-V format. Because the first SCI is the SCI in the LTE-V format, the first SCI can be decoded by the LTE terminal apparatus. In other words, the LTE terminal apparatus can decode the first SCI from the first NR terminal apparatus. For example, the LTE terminal apparatus senses the first SCI from the first NR terminal apparatus, and determines, based on the first SCI, that the data channel associated with the first SCI carries the NR information, to determine the resource occupation status of the first NR terminal apparatus. In this way, when the LTE terminal apparatus selects a resource, a resource occupied by the first NR terminal apparatus is excluded, to avoid a resource conflict as much as possible. This can reduce or avoid communication interference caused by the first NR terminal apparatus to the LTE terminal apparatus. It should be noted that, that the first SCI is used by the LTE terminal apparatus to select a resource may also be understood as that the first SCI is used by the LTE terminal apparatus to determine a resource occupied and/or reserved by the first NR terminal apparatus, or the LTE terminal apparatus can determine, based on the first SCI, a resource occupied and/or reserved by the first NR terminal apparatus. That the first SCI is used by the LTE terminal apparatus to select a resource may also be understood as that the first SCI is used by the LTE terminal apparatus to determine a resource for transmitting LTE information, or the LTE terminal apparatus can determine, based on the first SCI, a resource for transmitting LTE information.

The data channel associated with the first SCI may also be understood as a data channel indicated or scheduled by the first SCI, for example, a PSSCH. The "SCI in the LTE-V format" means that a field in the SCI and a quantity of bits of the field can be decoded by the LTE terminal apparatus. That the "SCI sent by the first NR terminal apparatus is the SCI in the LTE-V format" means that the first NR terminal apparatus sends NR SCI in an LTE-V SCI format, and the NR SCI can be decoded by the LTE terminal apparatus. A quantity of fields included in the NR SCI may be different from a quantity of fields included in SCI defined in a protocol in LTE-V2X, and a quantity of bits occupied by a same field may also be different. In addition, a quantity of fields included in the first SCI sent by the first NR terminal apparatus may be different from a quantity of fields included in the SCI sent by the LTE terminal apparatus. In addition, quantities of bits occupied by a same field included in the first SCI and the SCI sent by the LTE terminal apparatus may be different, and indicated content may also be different.

It may be understood that when the LTE-V2X communication module decodes the SCI from the NR-V2X communication module, the terminal apparatus with the LTE-V2X communication module needs to decode the SCI once in the LTE-V format, and decode the SCI once in the NR-V format, that is, decode SCI in two formats once. This additionally increases processing complexity of the terminal apparatus. However, in this embodiment of this application, the first SCI sent by the first NR terminal apparatus is the SCI in the LTE-V format. Therefore, the LTE terminal apparatus needs to decode the SCI only once in the LTE-V format, and processing complexity of the LTE terminal apparatus is not additionally increased. In addition, a frame structure of the SCI in the LTE-V format is different from a frame structure of the SCI in the NR-V format. This also affects a time sequence of decoding the SCI by the terminal apparatus. For example, for the SCI in the LTE-V format, only after receiving a PSCCH of an entire subframe or slot, the terminal apparatus can continue to decode the PSSCH. In contrast, for the SCI in the NR-V format, after receiving a PSCCH of three symbols, the terminal apparatus can continue to decode the PSSCH. In this embodiment of this application, the LTE terminal apparatus needs to decode only SCI in one format. Therefore, no additional decoding complexity is caused.

In a possible implementation, the first SCI may directly or indirectly indicate, by using one or more included fields, the NR information carried by the data channel associated with the first SCI. The following describes, by using a specific example, how the first SCI indicates the NR information carried by the data channel associated with the first SCI, and other behavior performed after the first terminal apparatus and the second terminal apparatus receive the first SCI.

Indication manner 1: The first SCI may indicate, by using a reserved index value of an MCS field included in the first SCI, that the data channel associated with the first SCI carries the NR information.

It may be understood that the SCI in the LTE-V format includes the MCS field, the MSC field occupies 5 bits, and an index value $I_{MCS}$ represented by the MSC field indicates modulation and coding information of data. However, there is still a reserved index value for the index value $I_{MCS}$ indicated by the MSC field. In other words, there is no index value indicating the modulation and coding information of the data. Therefore, the first SCI may indicate, by reusing the reserved index value of the MCS field, that the information carried by the data channel associated with the first SCI is the NR information. This is simple and direct. Alternatively, the first SCI may indicate, by reusing the reserved index value of the MCS field, that the data channel associated with the first SCI carries a transparent transmission of information. In other words, if the reserved index value of the MCS field included in the first SCI indicates the transparent transmission of information, the information carried by the data channel associated with the first SCI is the NR information.

For example, Table 1 describes the reserved index value of the MCS field. It may be learned from Table 1 that $I_{MCS}$=29, $I_{MCS}$=30, and $I_{MCS}$=31 are reserved index values.

**Table 1**

| MCS index value (MCSIndex) $I_{MCS}$ | Modulation order (Modulation Order) $Q_m'$ | TBS index value (TBS Index) $I_{TBS}$ | RV (Redundancy Version) rvidx |
|---|---|---|---|
| 29 | Carry the NR information or the transparent transmission of information. | | 1 |
| 30 | | | 2 |
| 31 | | | 3 |

Indication manner 2: The first SCI indicates, by using a quantity of transmissions (or a quantity of retransmissions) of the NR information, that the data channel associated with the first SCI carries the NR information.

It may be understood that, in LTE, a transmission of one TB (or one MAC PDU) supports only one retransmission. In other words, a transmission of LTE information supports only one retransmission. However, in NR, a transmission of one TB (or one MAC PDU) supports a maximum of 32 transmissions (namely, 31 retransmissions). Therefore, the first SCI may indicate the NR information or the LTE information by indicating that the data channel associated with the first SCI carries an $i^{th}$ transmission of the information (or the TB or the MAC PDU). In addition, the first terminal apparatus retransmits the NR information for a plurality of times, so that transmission reliability of the NR information can be improved. Because the data channel associated with the indication of the first SCI carries the $i^{th}$ transmission of the information, a receiver may combine and decode, according to the indication of the first SCI, the information carried by the data channel associated with the first SCI.

Example 1: The first SCI may indicate, by using the reserved index value of the MCS, that the data channel associated with the first SCI carries the $i^{th}$ transmission of the information, where i is an integer greater than or equal to 1. This manner indirectly indicates that the data channel associated with the first SCI carries the NR information. For example, Table 2 describes an example in which the reserved index value of the MCS field indicates that the data channel associated with the first SCI carries the $i^{th}$ transmission of the information. For example, if the reserved index value of the MCS field is 29, it indicates that the data channel associated with the first SCI carries a 1st transmission of the information, and indirectly indicates that the information carried by the data channel associated with the first SCI is the NR information. It should be noted that a correspondence between the reserved index value of the MCS field and i in Table 2 is merely an example. The correspondence between the reserved index value of the MCS field and i is not limited in embodiments of this application. For example, if the reserved index value of the MCS field is 29, it indicates that the data channel associated with the first SCI carries a 3rd transmission of the information.

Table 2

| MCS index value (MCSIndex) $I_{Mcs}$ | $i^{th}$ transmission (i-th transmission) |
|---|---|
| 29 | 1 |
| 30 | 2 |
| 31 | 3 |

Optionally, the first SCI may indicate, by using the reserved index value of the MCS, that the data channel associated with the first SCI carries a $j^{th}$ retransmission of the information, where j is an integer greater than or equal to 0. This manner may indirectly indicate that the data channel associated with the first SCI carries the NR information. Optionally, the $j^{th}$ retransmission corresponds to the $i^{th}$ transmission, and the relationship is i=j+1. For a specific indication manner, refer to the content described above.

Example 2: The first SCI may indicate, by using the reserved index value of the MCS and a retransmission field, that the data channel associated with the first SCI carries the $i^{th}$ transmission of the information. This manner indirectly indicates that the data channel associated with the first SCI carries the NR information. Herein, i is an integer greater than or equal to 1. For example, as described in Table 3, the reserved index value of the MCS field and the retransmission field indicate that the data channel associated with the first SCI carries the $i^{th}$ transmission of the information. Correspondingly, a correspondence between i and the reserved index value of the MCS field and an index value of the retransmission field may be shown in FIG. 11. For example, if the reserved index value of the MCS field is 29, and the index value of the retransmission field is 0, it indicates that the data channel associated with the first SCI carries a 1st transmission of the information. It should be noted that the correspondence between i and the reserved index value of the MCS field and the index value of the retransmission field in Table 3 is merely an example. The correspondence between i and the reserved index value of the MCS field is not limited in embodiments of this application. For example, if the reserved index value of the MCS field is 29, and the index value of the retransmission field is 0, it indicates that the data channel associated with the first SCI carries a 5th transmission of the information. Because the first SCI indicates, by using the reserved index value of the MCS and the retransmission field, that the data channel associated with the first SCI carries more transmissions of the NR information, transmission reliability of the NR information can be further improved.

Table 3

| MCS index ($I_{MCS}$) | Retransmission index (retransmission index) | $i^{th}$ transmission (i-th transmission) |
|---|---|---|
| 29 | 0 | 1 |
| | 1 | 2 |
| 30 | 0 | 3 |
| | 1 | 4 |
| 31 | 0 | 5 |
| | 1 | 6 |

Optionally, the first SCI may indicate, by using the reserved index value of the MCS and the retransmission field, that the data channel associated with the first SCI carries a $j^{th}$ retransmission of the information, where j is an integer greater than or equal to 0. This manner may also indirectly indicate that the data channel associated with the first SCI carries the NR information. Optionally, the $j^{th}$ retransmission corresponds to the $i^{th}$ transmission, and i=j+1. For a specific indication manner, refer to the content described above.

Example 3: The first SCI may indicate, by using the reserved index value of the MCS, a retransmission field, and a transmit format indication field, that the data channel associated with the first SCI carries the $i^{th}$ transmission of the information. This manner indirectly indicates that the data channel associated with the first SCI carries the NR information. Herein, i is an integer greater than or equal to 1. For example, as described in Table 4, the reserved index value of the MCS field, the retransmission field, and the transmit format indication field indicate that the data channel associated with the first SCI carries the $i^{th}$ transmission of the information. Correspondingly, a correspondence between i and the reserved index value of the MCS field and an index value of the retransmission field may be shown in FIG. 12. For example, if the reserved index value of the MCS field is 29, the index value of the retransmission field is 0, and a value of the transmit format indication field is 0, it indicates that the data channel associated with the first SCI carries a $1^{st}$ transmission of the information. It should be noted that the correspondence between i and the reserved index value of the MCS field and the index value of the retransmission field in Table 4 is merely an example. The correspondence between i and the reserved index value of the MCS field is not limited in embodiments of this application. For example, if the reserved index value of the MCS field is 29, the index value of the retransmission field is 0, and a value of the transmit format indication field is 0, it indicates that the data channel associated with the first SCI carries a $9^{th}$ transmission of the information. Because the first SCI indicates, by using the reserved index value of the MCS, the retransmission field, and the transmit format indication field, that the data channel associated with the first SCI carries more transmissions of the NR information, transmission reliability of the NR information can be further improved.

Table 4

| MCS index ($I_{MCS}$) | Retransmission index (retransmission index) | Transmit format (Tx format) | $i^{th}$ transmission (i-th transmission) |
|---|---|---|---|
| 29 | 0 | 0 | 1 |
| | | 1 | 2 |
| | 1 | 0 | 3 |
| | | 1 | 4 |
| 30 | 0 | 0 | 5 |
| | | 1 | 6 |
| | 1 | 0 | 7 |
| | | 1 | 8 |
| 31 | 0 | 0 | 9 |
| | | 1 | 10 |
| | 1 | 0 | 11 |
| | | 1 | 12 |

Optionally, the first SCI may indicate, by using the reserved index value of the MCS, the retransmission field, and the transmit format indication field, that the data channel associated with the first SCI carries a $j^{th}$ retransmission of the information, where j is an integer greater than or equal to 0. This manner may also indirectly indicate that the data channel associated with the first SCI carries the NR information. Optionally, the $j^{th}$ retransmission corresponds to the $i^{th}$ transmission, and i=j+1. For a specific indication manner, refer to the content described above.

Optionally, the first SCI may indicate, by using a retransmission index field, that the data channel associated with the first SCI carries an odd-number transmission or an even-number transmission of the information. For example, if a value of the retransmission index field is 0, it may indicate that the data channel associated with the first SCI carries an initial transmission or the $i^{th}$ transmission of the information, where i is an odd number. For example, i belongs to {1, 3, 5, 7, ...}. Alternatively, if a value of the retransmission index field is 0, it may indicate that the data channel associated with the first SCI carries an initial transmission or an $(i-1)^{th}$ retransmission of the information, where i is an odd number. For example, i belongs to {3, 5, 7, ...}. Correspondingly, if a value of the retransmission index field is 1, it may indicate that the data channel associated with the first SCI carries the $j^{th}$ transmission of the information, where j is an even number. For example, j belongs to {2, 4, 6, ...}. Alternatively, if a value of the retransmission index field is 1, it may indicate that the data channel associated with the first SCI carries an initial transmission or a $(j-1)^{th}$ retransmission of the information, where j is an even number. For example, j belongs to {2, 4, 6, 8, ...}. Optionally, the first SCI may indicate, by using the retransmission index field and the reserved index value of the MCS field, that the data channel associated with the first SCI carries the odd-number transmission or the even-number transmission of the information. For example, still refer to FIG. 11. If the reserved index value of the MCS resource is 29, and the value of the retransmission index field is 0, an initial transmission of the NR information may be indicated. If the reserved index value of the MCS resource is 29, and the value of the retransmission index field is 1, a 1st retransmission, namely, a 2nd transmission, of the NR information may be indicated. If the reserved index value of the MCS resource is 30, and the value of the retransmission index field is 0, a 2nd retransmission, namely, a 3rd transmission, of the NR information may be indicated. The rest may be deduced by analogy. Optionally, the first SCI may indicate, by using the retransmission index field, the reserved index value of the MCS field, and the transmit format indication, that the data channel associated with the first SCI carries the odd-number transmission or the even-number transmission of the information. For example, still refer to FIG. 12. If the reserved index value of the MCS resource is 29, the value of the retransmission index field is 0, and a value of the transmit format indication field is 0, an initial transmission of the NR information may be indicated. If the reserved index value of the MCS resource is 29, the value of the retransmission index field is 1, and a value of the transmit format indication field is 0, a 1st retransmission, namely, a 2nd transmission, of the NR information may be indicated. If the reserved index value of the MCS resource is 29, the value of the retransmission index field is 0, and a value of the transmit format indication field is 1, a 6th retransmission, namely, a 7th transmission, of the NR information may be indicated. The rest may be deduced by analogy.

The first SCI may further indicate a frequency domain resource position and/or a time domain resource position of the information carried by the data channel associated with the first SCI. For example, the first SCI may indicate, by using a frequency domain resource position field, frequency domain resource position information of an ith transmission and an (i+1)th transmission of the NR information. The frequency domain resource position information may include a start subchannel index and a quantity of subchannels. For another example, the first SCI may indicate, by using a time gap field, a time domain resource gap between an ith transmission and an (i+1)th transmission of the NR information. A unit of the time domain resource gap may be a subframe, a logical subframe, an SL transmission subframe, a slot, a logical slot, or an SL transmission slot. Herein, i is an odd number, and the (i+1)th transmission is a retransmission of the ith transmission. Optionally, the time domain resource gap that is between the ith transmission and the (i+1)th transmission of the NR information and that is indicated by the time gap field may be a physical time gap or a logical time gap. The logical time gap is a logical time gap determined based on a physical time gap and the first resource set (resource pool).

Indication manner 3: The first SCI indicates, by using a resource reservation period, that the information carried by the data channel associated with the first SCI is the NR information.

It may be understood that, in LTE, the resource reservation field has three reserved values: "1101, 1110, 1111". In the indication manner 3, the reserved value of the resource reservation field may indicate that the information carried by the data channel associated with the first SCI is the NR information. For example, if the value of the resource reservation field included in the first SCI is 1101, 1110, or 1111, the information carried by the data channel associated with the first SCI is the NR information.

For a period whose resource reservation period is less than 100 ms, LTE supports a resource reservation period of 20 ms or 50 ms, and NR supports a resource reservation period of {1, 2, ..., 99} ms. In other words, in NR, the resource reservation period may be any value in {1, 2, ..., 99} ms. Therefore, the first SCI may indicate, by indicating a resource reservation period other than 20 ms and 50 ms, that the data channel associated with the first SCI carries the NR information. For example, if the reserved value of the resource reservation field included in the first SCI indicates that the resource reservation period is a value in a first set other than 20 ms and 50 ms, the information carried by the data channel associated with the first SCI is the NR information. For example, the first set may be {1, 2, ..., 99} ms. For another example, the first set may be a {1, 2, 5, 10, 15, 20, 25, 30, 40, 50, 60, 70, 80, 90} ms. It should be noted that a quantity of periods included in the first set and a period length are not limited in embodiments of this application. Optionally, the resource reservation period indicated by the reserved value of the resource reservation field is physical time. The reserved value of the resource reservation field may also indicate a logical resource reservation period between a retransmission and an initial transmission of the NR information. The logical resource reservation period may be a logical resource reservation period determined based on a physical resource reservation period and the first resource set (resource pool).

For example, Table 5 describes an example in which the resource reservation field indicates the resource reservation period. It may be understood that if the resource reservation period is 50 ms or 20 ms, the information carried by the data channel associated with the first SCI is the NR information or the LTE information. If the resource reservation period is a value in the first set other than 20 ms and 50 ms, the information carried by the data channel associated with the first SCI is the NR information. In Table 5, if the reserved value of the resource reservation field indicates that the resource reservation period is 2 ms, 5 ms, or 10 ms, it indicates that the information carried by the data channel associated with the first SCI is the NR information. For example, if the reserved value of the resource reservation field is 1101, and the resource reservation period is 10 ms, it may indicate that the data channel associated with the first SCI carries the NR information. It should be noted that a correspondence between the reserved value of the resource reservation field and the resource reservation period may be predefined or preconfigured, or may be configured by a network device. The correspondence between the reserved value of the resource reservation field and the resource reservation period in Table 5 is merely an example. The correspondence between the reserved value of the resource reservation field and the resource reservation period is not limited in embodiments of this application. For example, the reserved value of the resource reservation field is 1110, and the resource reservation period is 2 ms.

**Table 5**

| Resource reservation field | Indication value X | Indication content |
|---|---|---|
| 0000 | 0 | The resource reservation period is 0, or a non-periodic service. |
| 0001, 0010 to 1010 | Decimal value of a field | Resource reservation period is 100×X ms |
| 1011 | 0.5 | The resource reservation period is 100×X ms, or the resource reservation period is 50 ms. |
| 1100 | 0.2 | The resource reservation period is 100×X ms, or the resource reservation period is 20 ms. |
| 1101 | 0.1 | The resource reservation period is 100×X ms, or the resource reservation period is 10 ms. |
| 1110 | 0.05 | The resource reservation period is 100×X ms, or the resource reservation period is 5 ms. |
| 1111 | 0.02 | The resource reservation period is 100×X ms, or the resource reservation period is 2 ms. |

It may be understood that the second NR terminal apparatus receives the first SCI from the first NR terminal apparatus, decodes the first SCI, and determines that the first SCI is SCI in an LTE-V2X format. In this case, the second NR terminal apparatus may determine the resource reservation period according to Table 5. The second NR terminal apparatus receives SCI sent by another NR terminal apparatus. If the SCI is SCI in an NR-V2X format, the second NR terminal apparatus determines the resource reservation period based on a mapping relationship between the value of the resource reservation field and a resource reservation period list (sl-ResourceReservePeriodList).

Indication manner 4: The first SCI may indicate, by using at least one reserved bit included in the first SCI, that the information carried by the data channel associated with the first SCI is the NR information. The reserved bit is a bit that is currently not used in the SCI. The at least one reserved bit may include a reserved bit in the SCI in the LTE-V format, or may include a reserved bit in one or more fields in the SCI in the LTE-V format. For example, a quantity of bits occupied by the SCI in the LTE-V format is 32. In other words, the first SCI occupies 32 bits. There are 6 to 13 reserved bits in the 32 bits. Therefore, the first SCI may indicate, by using the at least one reserved bit, that the information carried by the data channel associated with the first SCI is the NR information.

Example 1: The first SCI may indicate, by using a reserved bit, that the information carried by the data channel associated with the first SCI is the NR information. For example, Table 6 describes an example in which a $j^{th}$ reserved bit indicates that the information carried by the data channel associated with the first SCI is the NR information. Herein, j may be counted starting from a least significant bit or a most significant bit of the reserved bits. For example, if there are 6 to 13 reserved bits, a value range of j is {1, 2, ..., 13}. a may be predefined or preconfigured, or may be configured by a network device. For example, the most significant bit of the reserved bits of the SCI indicates that the information carried by the data channel associated with the first SCI is the NR information. For another example, the least significant bit of the reserved bits of the SCI indicates that the information carried by the data channel associated with the first SCI is the NR information.

**Table 6**

| $j^{th}$ reserved bit | Indication content |
|---|---|
| 0 | LTE information |
| 1 | NR information or transparent transmission of first information |

Example 2: The first SCI may carry some or all bits of a source ID by using at least one reserved bit, to indicate that the information carried by the data channel associated with the first SCI is the NR information. It may be understood that a MAC CE in an LTE-V format includes the source ID, and the SCI in the LTE-V format does not include a source ID field or a destination ID field. Second-level SCI in the SCI in the NR-V format includes a source ID field. In this example, the first SCI carries some or all bits of the source ID by using reserved bits, and it may be considered that a source ID field is newly added to the first SCI. It should be noted that a quantity of reserved bits that are in the first SCI and that carry the source ID may be different from a quantity of bits occupied by the source identity field in the NR-V format. For example, a reserved bits in the first SCI indicate the source ID, the a reserved bits may carry high a bits of the source ID, and low b bits other than the high a bits may be carried by the MAC CE. Alternatively, the a reserved bits may carry low a bits of the source ID, and high b bits other than the low a bits may be carried by the MAC CE. It should be noted that the source ID may be a source layer-2 ID. Optionally, a belongs to {1, 2, ..., 13}, and a may be predefined or preconfigured, or may be configured by a network device. b belongs to {11, 12, ..., 24}, and b may be predefined or preconfigured, or may be configured by the network device. Optionally, a+b=24.

Example 3: The first SCI may carry some or all bits of a destination ID by using at least one reserved bit, to indicate that the information carried by the data channel associated with the first SCI is the NR information. It may be understood that a MAC CE in an LTE-V format includes the destination ID, and the SCI in the LTE-V format does not include a destination ID field. Second-level SCI in the SCI in the NR-V format includes a destination ID field. In this example, the first SCI carries some or all bits of the destination ID by using reserved bits, and it may be considered that a destination ID field is newly added to the first SCI. It should be noted that a quantity of reserved bits that are in the first SCI and that carry the destination identity may be different from a quantity of bits occupied by the destination ID field in the NR-V format. For example, c reserved bits in the first SCI indicate the destination ID, the c reserved bits may carry high c bits of the source ID, and low d bits other than the high c bits may be carried by the MAC CE. Alternatively, the c reserved bits may carry low c bits of the destination ID, and high d bits other than the low c bits may be carried by the MAC CE. It should be noted that the destination ID may be a destination layer-2 identity. Optionally, c belongs to {1, 2, ..., 6}, and c may be predefined or preconfigured, or may be configured by a network device. d belongs to {15, 16, ..., 24}, and d may be predefined or preconfigured, or may be configured by the network device. Optionally, c+d=24.

In Example 2 and Example 3, the second NR terminal apparatus may determine, based on some or all bits of the source ID or some or all bits of the destination ID that are indicated by the at least one reserved bit in the first SCI, whether to decode the second-level SCI and/or the data information that are/is sent by the first NR terminal apparatus. For example, if the second NR terminal apparatus determines that some or all bits of the destination ID indicated by the at least one reserved bit in the first SCI match an ID of the second NR terminal apparatus, it may be considered that the first NR terminal apparatus sends the second-level SCI and the data information to the second NR terminal apparatus. Therefore, the second NR terminal apparatus decodes the second-level SCI and the data information that are sent by the first NR terminal apparatus. If some or all bits of the destination ID indicated by the at least one reserved bit in the first SCI do not match the ID of the second NR terminal apparatus, the second NR terminal apparatus may not decode the second-level SCI and the data information that are sent by the first NR terminal apparatus. This reduces unnecessary decoding operations. Optionally, the first NR terminal apparatus transmits a same NR service for a plurality of times. The second NR terminal apparatus may determine, based on some or all bits of the source ID indicated by the at least one reserved bit in the first SCI and/or some or all bits of the destination ID, that data packets with a same source ID correspond to a plurality of transmissions of a same sending terminal apparatus, to combine and decode a plurality of received data packets.

Example 4: The first SCI indicates a DMRS pattern by using the at least one reserved bit, to indicate that the information carried by the data channel associated with the first SCI is the NR information.

It may be understood that, in LTE, only one DMRS pattern is supported, that is, a DMRS is mapped to a symbol 2, a symbol 5, a symbol 8, and a symbol 11 in one slot. Therefore, the DMRS pattern does not need to be indicated in LTE. However, NR supports a plurality of DMRS patterns. Therefore, in this embodiment of this application, the first SCI indicates the DMRS pattern by using the at least one reserved bit, and the information carried by the data channel associated with the first SCI may be considered as the NR information by default. For example, the first SCI may indicate the DMRS pattern by using e reserved bits. Optionally, $e=\lceil log_2 N_{pattern} \rceil$, where $N_{pattern}$ is a quantity of DMRS patterns allowed by the first resource pool. In Example 4, for each transmission of NR information, the first SCI flexibly indicates, by using the at least one reserved bit, a DMRS pattern used in each transmission, so that PSSCH demodulation requirements in different interference environments can be met.

Example 5: The first SCI indicates, by using the at least one reserved bit, a quantity of ports of the data channel associated with the first SCI, to indicate that the information carried by the data channel associated with the first SCI is the NR information.

It may be understood that, in LTE, only a single-port transmission of the PSSCH is supported, and the quantity of ports of the data channel associated with the SCI does not need to be indicated in LTE. However, in NR, the PSSCH supports a maximum of two ports. Therefore, the first SCI may indicate, by using the at least one reserved bit, the quantity of ports of the data channel associated with the first SCI, to indirectly indicate that the information carried by the data channel associated with the first SCI is the NR information. For example, the first SCI may indicate, by using f bits, the quantity of ports of the data channel associated with the first SCI, a quantity of DMRS ports, or a quantity of PSSCH ports. Optionally, if f=1, and a value of the f reserved bits is 0, it indicates that the data channel associated with the first SCI has one port, for example, an antenna port 1000. If a value of the f reserved bits is 1, it indicates that the data channel associated with the first SCI has two ports, for example, an antenna port 1000 and an antenna port 1001.

Example 6: The first SCI indicates an added MCS table by using the at least one reserved bit, to indicate that the information carried by the data channel associated with the first SCI is the NR information.

It may be understood that there is no additional (or added) MCS table in LTE, but NR supports a maximum of three MCS tables. Therefore, the first SCI may indicate the added MCS table by using the at least one reserved bit, to indirectly indicate that the information carried by the data channel associated with the first SCI is the NR information. For example, the first SCI indicates the added MCS table by using g reserved bits. The added MCS table information indicates an MCS table used for a current PSSCH transmission. Optionally, if no added MCS table is additionally configured or preconfigured, g=0; if one added MCS table is additionally configured or preconfigured, g=1; or if two added MCS tables are additionally configured or preconfigured, g=2.

Example 7: The first SCI indicates overheads of a PSFCH by using the at least one reserved bit, for example, indicates a quantity of symbols occupied by the PSFCH, to indicate that the information carried by the data channel associated with the first SCI is the NR information.

It may be understood that LTE does not support a V2X feedback mechanism. In other words, the terminal apparatus does not send a PSFCH. However, NR supports sending of a PSFCH. Therefore, the first SCI indicates the overheads of the PSFCH by using the at least one reserved bit, to indirectly indicate that the information carried by the data channel associated with the first SCI is the NR information. For example, the first SCI indicates the overheads of the PSFCH by using h reserved bits. Optionally, h is related to a PSFCH period. For example, if the PSFCH period is 2 or 4 slots, h=1; or if the PSFCH period is 0 or 1 slot, h=0. If a value of the h reserved bits is 0, it may indicate that a quantity of symbols occupied by the PSFCH is 0; or if a value of the h reserved bits is 1, it may indicate that a quantity of symbols occupied by the PSFCH is 3.

It should be noted that a plurality of indication manners of the three indication manners in which the first SCI indicates that the data channel associated with the first SCI carries the NR information may be combined. In addition, a plurality of examples in Example 1 to Example 7 in the indication manner 3 may be combined with each other.

In a possible implementation, because NR supports a shorter resource reservation period, the first NR terminal apparatus may alternatively split one TB into a plurality of TBs for sending. In other words, the first NR terminal apparatus is compatible with sending of a small-period NR service in an LTE resource reservation period. For example, the first TB is split into K second TBs. It may also be understood that a service associated with the first TB is the same as a service associated with the K second TBs. For example, one or more of a source ID, a destination ID, or a QoS flow associated with the K second TBs are the same. The K second TBs may be an initial transmission of the service associated with the first TB, or may be a retransmission of the service. That the first NR terminal apparatus sends the first TB in a first period may be implemented by sending the K second TBs in a second period. It should be understood that the first period is equal to 1/K second periods. For example, the first period may be 10 ms, and the second period may be 20 ms. In other words, a service whose period is 10 ms may be split into two services whose periods are 20 ms for sending. In this case, after receiving the K second TBs, the receiver may combine the K second TBs into the first TB. Optionally, the first period belongs to a second period set, for example, {1, 2, 3, 4, 5, 6, 8, 9, 10, 12, 15, 20, 25, 30, 35, 40, 45, 50, 60, 70, 80, 90} ms, or the first period belongs to a subset of a second period set. The second period belongs to a third period set, for example, {20, 50, 100, 200, 300, 400, 500, 600, 700, 800, 900, 1000} ms or a subset. It should be noted that the second period set and the third period set may be predefined or preconfigured, or may be indicated by the network device. In addition, in this embodiment, that the K second TBs have a same sending period is used as an example, and the K second TBs may alternatively have different sending periods. For example, the first TB is split into a second TB and a third TB. The first terminal apparatus sends the first TB in the first period, and may send the second TB in the second period and send the third TB in a third period. The second period is different from the third period, the first period is less than the second period, and the first period is less than the third period.

The first NR terminal apparatus may send the first SCI, to notify another terminal apparatus of the resource occupation status of the first NR terminal apparatus by using the first SCI. It may be understood that the first NR terminal apparatus sends the first SCI by using the resource in the first resource set. If the another terminal apparatus is an LTE terminal apparatus, the LTE terminal apparatus may determine, based on the first SCI, that the first SCI is the SCI sent by the first NR terminal apparatus. The LTE terminal apparatus may determine, by decoding the first SCI, the resource occupation status of the first NR terminal apparatus, to determine, on a resource in the first resource set other than the resource occupied by the first NR terminal apparatus, the resource for sending the LTE information.

According to different terminal apparatuses that receive the SCI sent by the first NR terminal apparatus, the another terminal apparatus processes the SCI from the first NR terminal apparatus in different manners. For example, the following two processing manners are included.

Processing manner 1: If the another terminal apparatus is the second NR terminal apparatus, the second NR terminal apparatus may decode, based on the first SCI, the second-level SCI and the data information that are sent by the first NR terminal apparatus, namely, the PSSCH sent by the first NR terminal apparatus. Optionally, after obtaining the data information in the PSSCH, the second NR terminal apparatus may send the data information to the LTE terminal apparatus. The LTE terminal apparatus does not need to decode the first SCI. It may be understood that the second NR terminal apparatus and the LTE terminal apparatus are located in a same device, and both the NR-V2X communication module and the LTE communication module are disposed in the device.

Processing manner 2: If the another terminal apparatus is the LTE terminal apparatus, the LTE terminal apparatus receives the first SCI sent by the first NR terminal apparatus, determines that the first SCI is sent by the first NR terminal apparatus, and may not decode the second-level SCI and the data information that are sent by the first NR terminal apparatus. The second NR terminal apparatus receives the first SCI, and may decode, based on the first SCI, the second-level SCI and the data information that are sent by the first NR terminal apparatus.

Processing manner 3: If the another terminal apparatus is the LTE terminal apparatus, the LTE terminal apparatus may decode, based on the first SCI, the second-level SCI and the data information that are sent by the first NR terminal apparatus, namely, the PSSCH sent by the first NR terminal apparatus. After obtaining the data information in the PSSCH, the LTE terminal apparatus may send the data information to the second NR terminal apparatus. The second NR terminal apparatus does not need to decode the first SCI. It may be understood that the second NR terminal apparatus and the LTE terminal apparatus are located in a same device, and both the NR-V2X communication module and the LTE communication module are disposed in the device.

The foregoing three processing manners may be predefined or preconfigured, or the network device indicates which optional processing is used by the terminal apparatus at the receiver. In a possible implementation, the configuration information for configuring the first resource pool may be reused to configure the processing manner corresponding to the first resource pool. The terminal apparatus using the first resource pool uses the processing manner configured by using the configuration information of the first resource pool. Alternatively, the processing manner may be configured for the terminal apparatus. In other words, the network device separately configures the processing manner for each terminal apparatus. Processing manners corresponding to different terminal apparatuses may be the same or may be different. Optionally, the foregoing two processing manners are related to a capability of the terminal apparatus. In other words, the terminal apparatus may select a to-be-used optional manner based on a capability of the terminal apparatus. In this case, a correspondence between the capability of the terminal apparatus and the optional manner may be predefined or preconfigured, and the terminal apparatus at the receiver may determine a to-be-used processing manner based on the capability of the terminal apparatus. For example, if an NR-V2X communication module and an LTE communication module are disposed in the another terminal apparatus, the terminal apparatus has a capability of decoding the first-level SCI, the second-level SCI, and the data information from the first NR terminal apparatus. In this case, the terminal apparatus may select the processing manner 1. If an LTE communication module is disposed in the another terminal apparatus, the terminal apparatus does not have a capability of decoding the second-level SCI and data information from the first NR terminal apparatus, and the terminal apparatus may select the processing manner 2. If an NR-V2X communication module and an LTE communication module are disposed in the another terminal apparatus, the terminal apparatus has a capability of decoding the second-level SCI and the data information from the first NR terminal apparatus, and the terminal apparatus may select the processing manner 3.

In the embodiment shown in FIG. 10, the first NR terminal apparatus indicates, by using the SCI in the LTE-V format, that the information transmitted by the first terminal apparatus is the NR information, so that the LTE terminal apparatus can determine the resource occupation status of the first NR terminal apparatus. This avoids a resource conflict as much as possible.

It may be understood that when selecting a resource, the LTE terminal apparatus or the NR terminal apparatus may also sense the resource, and determine, based on a sensing result, whether the resource is occupied and/or reserved, to exclude the occupied and/or reserved resource. The sensing result in this specification may include one or more of the following: a channel occupation status, a resource sensing result, a resource selection result, an RSRP value of a resource, a received signal strength indicator (received signal strength indicator, RSSI), a measured value of a reference signal, or the like, as long as the sensing result can be used to represent a resource occupation/use/reservation status.

In view of this, an embodiment of this application provides a second communication method. In the method, when sending the NR information, the NR-V2X communication module may use an LTE reference signal. In other words, a manner of measuring a resource by the LTE-V2X communication module is not changed. For the LTE-V2X communication module, a time and frequency position of the reference signal sent by the NR-V2X communication module may be determined. In this way, a resource occupied by the NR-V2X communication module can be accurately determined based on an RSRP measurement result, so that the LTE terminal apparatus can determine the resource occupation status of the first NR terminal apparatus. This avoids a resource conflict as much as possible.

An example in which the reference signal is a DMRS is used below. In the following, a rule for mapping the DMRS by the NR-V2X communication module is referred to as a first mapping rule, and a rule for mapping the DMRS by the LTE-V2X communication module is referred to as a second mapping rule. It may be understood that, according to the second mapping rule, an index of a symbol for transmitting LTE information in each slot is I={2, 5, 8, 11}. In other words, the DMRS is mapped to a symbol 2, a symbol 5, a symbol 8, and a symbol 11 in each slot. This embodiment of this application mainly describes the first mapping rule. A time unit in the following may be a slot, or may be a subframe or a half-frame. In this specification, transmitting a reference signal may also be understood as sending or receiving a reference signal, or measuring a reference signal. For a transmitter, transmitting a reference signal is transmitting a reference signal. For a receiver, transmitting a reference signal is receiving a reference signal.

FIG. 13 is a schematic flowchart of a second communication method according to an embodiment of this application.

S1301: A first NR terminal apparatus determines a DMRS associated with NR information.

S1302: The first NR terminal apparatus sends the DMRS on a first resource in a first resource set according to the first mapping rule.

The first NR terminal apparatus may generate, in a manner of generating a DMRS sequence of a PUSCH, the DMRS associated with the NR information, and map the generated DMRS to the first resource according to the first mapping rule. It may also be understood that the first mapping rule may be used by an LTE terminal apparatus to determine a time domain mapping position of the DMRS associated with the NR information, and is used by the LTE terminal apparatus to select a resource. The LTE terminal apparatus may determine, according to the first mapping rule, a time domain position of the DMRS sent by the first NR terminal apparatus. In this way, when the LTE terminal apparatus selects a resource, a resource usage status of the first NR terminal apparatus may be determined by using an LTE sidelink DMRS measurement method, so that subsequently, a resource to be used by the first NR terminal apparatus may not be selected, that is, a resource conflict is avoided as much as possible. This reduces or avoids interference caused by the first NR terminal apparatus to the LTE terminal apparatus. In addition, when the first NR terminal apparatus and the LTE terminal apparatus share the first resource set, because the LTE terminal apparatus does not need to measure the DMRS by using an NR sidelink DMRS measurement method, a requirement for a measurement capability of the LTE terminal apparatus is not additionally increased. It should be noted that the first mapping rule is used by the LTE terminal apparatus to select a resource, or it may be understood as that the first mapping rule is used by the LTE terminal apparatus to determine a resource occupied and/or reserved by the first NR terminal apparatus, or the LTE terminal apparatus can determine, according to the first mapping rule, a resource occupied and/or reserved by the first NR terminal apparatus. That the first SCI is used by the LTE terminal apparatus to select a resource may also be understood as that the first mapping rule is used by the LTE terminal apparatus to determine a resource for transmitting LTE information, or the LTE terminal apparatus can determine, according to the first mapping rule, a resource for transmitting LTE information.

It should be understood that the first mapping rule may also be used by a second NR terminal apparatus to determine the time domain mapping position of the DMRS associated with the NR information, and is used by the second NR terminal apparatus to select a resource or used by the second NR terminal apparatus to decode data information sent by the first NR terminal apparatus.

The first mapping rule varies based on different NR information. The following describes a possible implementation of the first mapping rule by using a specific example.

In a first case, the NR information is a PSBCH, and the first mapping rule may include the following two implementations.

Implementation 1: The first mapping rule is that the DMRS is mapped to a symbol 4, a symbol 6, and a symbol 9 in a time unit. For example, the DMRS is located on symbols whose indexes are 4, 6, and 9 in each slot (or subframe).

Implementation 2: The first mapping rule is that the DMRS is mapped to a symbol 4 and a symbol 6 in a time unit k, and is mapped to a symbol 2 in a time unit k+1, where k is an integer greater than or equal to 1. In other words, in two adjacent time units, indexes of symbols to which the DMRS is mapped are the symbol 4 and the symbol 6 in the time unit k and the symbol 2 in the time unit k+1. For example, the DMRS is located on a symbol 4 and a symbol 6 of a slot (or subframe) k, and is mapped to a symbol 2 of a slot (or subframe) k+1.

It may be understood that a symbol position of the DMRS in the implementation 2 is the same as a symbol position of the DMRS in the implementation 1. In both the implementation 1 and the implementation 2, a time domain position of the DMRS sent by the first NR terminal apparatus may be the same as a time domain position of the DMRS sent by the LTE terminal apparatus. The first NR terminal apparatus may select a resource by measuring an LTE reference signal, and does not need to measure reference signals in more positions. This is simple.

In a second case, the NR information is a PSCCH and/or a PSSCH, and the first mapping rule may include the following multiple implementations.

Implementation 1: The DMRS is mapped to a symbol 2, a symbol 5, a symbol 8, and a symbol 11 in a time unit. That is, the first mapping rule may be the same as the second mapping rule. The first NR terminal apparatus may select a resource by measuring an LTE reference signal, and does not need to measure reference signals in more positions. Optionally, the time unit is a slot.

Implementation 2: The DMRS is mapped to a symbol 2 and a symbol 5 in a time unit k, and is mapped to a symbol 1 and a symbol 4 in a time unit k+1. For example, the time unit is a slot. In two adjacent slots, indexes of symbols for transmitting the NR information are a symbol 2 and a symbol 5 in a slot k and a symbol 1 and a symbol 4 in a slot k+1. Optionally, the time unit is a slot in an LTE subframe. It may be understood that a time length of two slots in one subframe in an LTE frame structure corresponds to one slot whose SCS is 15 kHz in an NR frame structure. Therefore, the symbols whose indexes are 2 and 5 in the slot k and the symbols whose indexes are 1 and 4 in the slot k+1 in LTE correspond to the symbols whose indexes are 2, 5, 8, and 11 in one slot in NR. In other words, in the implementation 2, a time domain position of the DMRS sent by the first NR terminal apparatus is the same as a time domain position of the DMRS sent by the LTE terminal apparatus.

Implementation 3: Duration $l_d$ of a scheduling resource for the NR information belongs to $\{1, 2, \ldots, N_{symb}^{slot} - 1\}$ symbols. That is, $l_d$ is a value in $\{1, 2, \ldots, N_{symb}^{slot} - 1\}$. $N_{symb}^{slot}$ is a quantity of symbols for transmitting the NR information in one slot, and an index of a symbol for transmitting the NR information in each slot satisfies $\bar{l} = \{0, 1, 2, \ldots, N_{symb}^{slot} - 1\}$. It should be noted that, the implementation 3 is also applicable to the case in which the NR information is a PSBCH. For example, a mapping position of an NR DMRS may be described in Table 7.

**Table 7**

| $l_d$ in symbols | DM-RS position $\bar{l}$ | | | | | |
|---|---|---|---|---|---|---|
| | PSCCH duration 2 symbols | | | PSCCH duration 3 symbols | | |
| | Number of PSSCH DM-RS | | | Number of PSSCH DM-RS | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

Optionally, the implementation 3 and the implementation 1 may be combined, or the implementation 3 and the implementation 2 may be combined. For example, $l_d$=13 in Table 7 is used as an example. A time domain position of the NR DMRS is located on a symbol whose index is 11, and overlaps with a symbol whose index is 11 and on which an LTE DMRS is located. Alternatively, $l_d$=10 is used as an example. A time domain position of the NR DMRS is located on a symbol whose index is 8, and overlaps with a symbol whose index is 8 and on which an LTE DMRS is located. It may be learned that, according to the mapping rule in Table 8, the time domain position to which the NR DMRS is mapped may be the same as the position to which the LTE DMRS is mapped. In this way, a resource occupied by the NR-V2X communication module can be determined without changing a manner in which the LTE-V2X communication module measures a resource in a resource pool.

In a possible implementation, the NR DMRS may be mapped to a time domain resource other than the time domain position to which the LTE DMRS is mapped. In other words, the time domain position to which the NR DMRS is mapped does not include the time domain position to which the LTE DMRS is mapped. For example, the time domain position of the DMRS in the NR information does not include symbols whose indexes are 2, 5, 8, and 11. Optionally, for the NR DMRS, a first terminal apparatus may perform rate matching on the time domain resource other than the time domain position to which the LTE DMRS is mapped, that is, perform puncturing on the time domain position to which the LTE DMRS is mapped. In this case, the first mapping rule may include the following three implementations.

Implementation 4: A mapping position of an NR DMRS may be described in Table 8. In other words, the first mapping rule meets Table 8.

**Table 8**

| $l_d$ in symbols | DM-RS position $\bar{l}$ | | | | | | | |
|---|---|---|---|---|---|---|---|---|
| | PSCCH duration 2 symbols | | | | PSCCH duration 3 symbols | | | |
| | Number of PSSCH DM-RS | | | | Number of PSSCH DM-RS | | | |
| | 12 | | 3 | 4 | 1 | 2 | 3 | 4 |
| 6 | 1 | | | | 1 | | | |
| 7 | 1 | | | | 1 | | | |
| 8 | 1 | | | | 1 | | | |
| 9 | 3 | | 1, 4, 7 | | 4 | | 1, 4, 7 | |
| 10 | 3 | | 1, 4, 7 | | 4 | | 1, 4, 7 | |
| 11 | | 3, 10 or 1, 9 | | 1, 4, 7, 10 | | 4, 10 or 1, 9 | | 1, 4, 7, 10 |
| 12 | | 3, 10 or 1, 9 | | 1, 4, 7, 10 | | 4, 10 or 1, 9 | | 1, 4, 7, 10 |
| 13 | | 3, 10 or 1, 6 | | 1, 4, 7, 10 | | 4, 10 or 1, 6 | | 1, 4, 7, 10 |

It should be noted that, for A or B in Table 8, through configuration by the network device or preconfiguration, A may be used, or B may be used. For example, for "3, 10 or 1, 9" in Table 8, through configuration by the network device or preconfiguration, 3 and 10 may be used, or 1 and 9 may be used. Similarly, for "4, 10 or 1, 6", through configuration by the network device or preconfiguration, 4 and 10 may be used, or 1 and 6 may be used.

The two columns of Number of PSSCH DM-RS=1 in Table 8 are optional. In other words, the two columns of Number of PSSCH DM-RS=1 in Table 8 may be deleted. In other words, the mapping position of the NR DMRS may be described in Table 8'. Table 8' does not include the two columns of Number of PSSCH DM-RS=1 in Table 8. Optionally, $l_d$={9, 10, 11, 12, 13} supported by the two columns of Number of PSSCH DM-RS=1 in Table 8 is deleted.

Implementation 5: A mapping position of an NR DMRS is still in Table 7. However, a difference from the implementation 3 lies in that a symbol for transmitting an LTE DMRS needs to be removed for $l_d$ and/or $\bar{l}$. For example, the first mapping rule may meet: Duration of a scheduling resource for NR information satisfies $l_d = N_{symb}^{slot} - N_{LTEDM-RS} - 1$, and an index of a symbol for transmitting the NR information in each slot satisfies $\bar{l} = \{0, 1, 2, \ldots, N_{symb}^{slot} - N_{LTEDM-RS} - 1\}$. It may be understood that $\bar{l}$ is a symbol index obtained after a symbol for an LTE DM-RS is subtracted from a subframe (or a slot). $N_{symb}^{slot}$ is a quantity of symbols for transmitting sidelink information in one slot, and $N_{LTEDM-RS}$ is a quantity of symbols for transmitting an LTE DMRS in one slot. Optionally, $l_d$ belongs to {3, 4, 5, 6, 7, 8, 9} or {6, 7, 8, 9}. It may be understood that if $l_d$ belongs to {6, 7, 8, 9}, the first mapping rule is the method in which the mapping position of the NR DMRS meets that $l_d$ belongs to {6, 7, 8, 9} in Table 7, for example, as described in Table 9.

**Table 9**

| $l_d$ in symbols | DM-RS position $\bar{l}$ PSCCH duration 2 symbols | | PSCCH duration 3 symbols | |
|---|---|---|---|---|
| | Number of PSSCH DM-RS | | Number of PSSCH DM-RS | |
| | 2 | 3 | 2 | 3 |
| 6 | 1, 5 | | 1, 5 | |
| 7 | 1, 5 | | 1, 5 | |
| 8 | 1, 5 | | 1, 5 | |
| 9 | 3, 8 | 1, 4, 7 | 4, 8 | 1, 4, 7 |

For example, if a quantity of symbols for a sidelink transmission in one slot is $N_{symb}^{slot}=14$, and a quantity of symbols for transmitting the LTE DMRS in one slot is $N_{LTEDM\text{-}RS} = 4$, $l_d=N_{symb}^{slot}-N_{LTEDM-RS}-1=14-4-1=9$. In other words, the first NR terminal apparatus determines the symbol position of the NR DMRS based on $l_d=9$. Correspondingly, the symbol position of the DMRS is shown in FIG. 14.

Implementation 6: A difference from the implementation 5 lies in that the first mapping rule may meet: A symbol length of a scheduling resource for transmitting the NR information satisfies $l_d=N_{symb}^{slot}-1$, and an index of a symbol for transmitting the NR information in each slot satisfies $\bar{l} = \{0, 1, 2, ..., N_{symb}^{slot} - 1\}$. $N_{symb}^{slot}$ is a quantity of symbols for transmitting sidelink information in one slot. For example, the first mapping rule is that a mapping position of an NR DMRS meets Table 10. Correspondingly, the symbol position of the DMRS is shown in FIG. 15.

**Table 10**

| $l_d$ in symbols | DM-RS position $\bar{l}$ | | | | | |
|---|---|---|---|---|---|---|
| | PSCCH duration 2 symbols | | | PSCCH duration 3 symbols | | |
| | Number of PSSCH DM-RS | | | Number of PSSCH DM-RS | | |
| | 1 | 2 | 3 | 1 | 2 | 3 |
| 6 | | 1, 7 | | | 1, 7 | |
| 7 | | 1, 7 | | | 1, 7 | |
| 8 | | 1, 7 | | | 1, 7 | |
| 9 | | 4, 12 | 1, 6, 10 | | 6, 12 | 1, 6, 10 |
| 10 | | 4, 12 | 1, 6, 10 | | 6, 12 | 1, 6, 10 |
| 11 | 4 | 1, 7 | 1, 6, 10 | 6 | 1, 7 | 1, 6, 10 |
| 12 | 4 | 1, 7 | 1, 6, 10 | 6 | 1, 7 | 1, 6, 10 |
| 13 | 4 | 1, 9 | 1, 6, 10 | 6 | 1, 9 | 1, 6, 10 |

It may be understood that the DMRS is located in each PRB of the associated PSCCH and/or PSSCH and/or PSBCH. The first mapping rule may indicate a time domain position of the DMRS associated with the NR information. Therefore, the LTE terminal apparatus may determine the time domain mapping position of the DMRS of the NR information according to the first mapping rule. In this way, the LTE terminal apparatus can determine the resource usage status of the first NR terminal apparatus by using the LTE sidelink DMRS measurement method. Optionally, the first NR terminal apparatus may map the NR PSSCH to a symbol other than a position of the DMRS. The DMRS may include a DMRS associated with NR information and/or a DMRS associated with LTE information. Optionally, when SCSs of the first resource pool for transmitting the NR information and the second resource pool for transmitting the LTE information are different, that the second resource pool supports a transmission of a non-adjacent PSCCH/PSSCH may be configured by the network device or may be preconfigured. Alternatively, when SCSs of the first resource pool and the second resource pool are different, that the second resource pool supports a transmission of an adjacent PSCCH/PSSCH may be configured by the network device or may be preconfigured.

The foregoing several first mapping rules may be predefined, or may be preconfigured, or may be indicated by the network device. For example, the network device may send configuration information, and the configuration information may indicate the first mapping rule. The configuration information may be a configuration for the first resource pool, or may be a configuration for an NR terminal apparatus (for example, the first NR terminal apparatus). For example, the configuration information may include capability information of the terminal apparatus. Before sending the DMRS, the NR terminal apparatus may also determine a to-be-used first mapping rule based on the capability information and the configuration information of the NR terminal apparatus. Alternatively, a correspondence between the capability of the NR terminal apparatus and the first mapping rule may be predefined or preconfigured, or may be indicated by the network device. The NR terminal apparatus may determine a to-be-used first mapping rule based on the capability of the NR terminal apparatus and the correspondence.

Optionally, the LTE terminal apparatus may send the LTE DMRS, and the first NR terminal apparatus may not send the DMRS according to the foregoing first mapping rule. In this case, the LTE terminal apparatus may measure the LTE DMRS, and the NR communication module does not measure the LTE DMRS.

Optionally, the LTE terminal apparatus may send the LTE DMRS, and the first NR terminal apparatus may not send the DMRS according to the foregoing first mapping rule. In this case, the LTE terminal apparatus may measure the LTE DMRS, and the NR terminal apparatus may also measure the LTE DMRS.

Optionally, the LTE terminal apparatus may send the LTE DMRS, and the first NR terminal apparatus sends the DMRS according to the foregoing first mapping rule. In this case, the LTE terminal apparatus may measure the LTE DMRS and/or the NR DMRS, and the first NR terminal apparatus may also measure the LTE DMRS and/or the NR DMRS.

Whether the first NR terminal apparatus sends the DMRS according to the first mapping rule and whether the LTE terminal apparatus measures the NR DMRS may be predefined or preconfigured, or may be indicated by the network device. In other words, an optional solution to be used by the terminal apparatus in the foregoing three optional solutions may be predefined or preconfigured, or may be indicated by the network device. In a possible implementation, the configuration information for configuring the first resource pool may be reused to configure the optional solution corresponding to the first resource pool. The terminal apparatus using the first resource pool uses the optional solution configured by using the configuration information of the first resource pool. Alternatively, the optional manner may be configured for the terminal apparatus. In other words, the network device separately configures the optional solution for each terminal apparatus. Optional solutions corresponding to different terminal apparatuses may be the same or may be different. Alternatively, a correspondence between the capability of the terminal apparatus and the optional solution may be predefined, and the LTE terminal apparatus and/or the first NR terminal apparatus may determine a to-be-used optional solution based on the capability of the LTE terminal apparatus and/or the first NR terminal apparatus.

It should be noted that the procedure shown in FIG. 10 and the procedure shown in FIG. 13 may be combined. For example, the first terminal apparatus may perform S1301 and S1302 after performing S1001 and S1002. For another example, the first terminal apparatus performs S1002 and S1302 after performing S1001 and S1002. A sequence of S1001 and S1002 is not limited, and a sequence of S1002 and S1302 is not limited.

It may be understood that the first NR terminal apparatus and the LTE terminal apparatus may share the first resource set. For example, the first NR terminal apparatus and the LTE terminal apparatus may share a same time unit or different time units in the first resource set. For example, FIG. 16 is a diagram in which a first NR terminal apparatus and an LTE terminal apparatus share a same slot in a first resource pool. It may be learned from FIG. 16 that time and frequency resources in which same slots in the first resource pool are located include a frequency domain resource for the first NR terminal apparatus and a frequency domain resource for the LTE terminal apparatus. For another example, FIG. 17 is a diagram in which a first NR terminal apparatus and an LTE terminal apparatus share different slots in a first resource pool. It may be learned from FIG. 17 that a slot used by the first NR terminal apparatus to send the NR information is different from a slot used by the LTE terminal apparatus to send the LTE information.

To avoid a resource conflict as much as possible, before sending the NR information, the first NR terminal apparatus may exclude, from the first resource pool, a resource occupied and/or reserved by the LTE terminal apparatus. In other words, a resource in the first resource pool other than the resource occupied and/or reserved by the LTE terminal apparatus is used as a candidate resource. The following describes how the first NR terminal apparatus determines the candidate resource.

FIG. 18 is a schematic flowchart of a third communication method according to an embodiment of this application.

S1801: A first NR terminal apparatus obtains LTE sidelink control information, where the LTE sidelink control information may indicate a second resource in a first resource set, and the second resource includes a resource occupied by LTE information and/or reserved for LTE information.

It may be understood that any terminal apparatus may indicate, by using SCI, a resource occupied by the terminal apparatus to transmit information, or may determine, by sensing SCI, a resource that may be occupied and/or reserved, so that a resource other than the occupied and/or reserved resource is used as a candidate resource. In this embodiment of this application, the first NR terminal apparatus may obtain the LTE sidelink control information, and determine, based on the LTE sidelink control information, the resource occupied by the LTE information and/or reserved for the LTE information. It should be understood that the LTE sidelink control information is SCI sent by an LTE communication module. The LTE information includes SCI and/or sidelink data. It should be noted that the LTE information may include LTE information sensed by an NR communication module included in the first NR terminal apparatus, or may include LTE information sent and/or received by an LTE communication module included in the first NR terminal apparatus. For example, if the first NR terminal apparatus includes the NR communication module and the LTE communication module, the LTE information may include LTE information sent by the LTE communication module in the first NR terminal apparatus, and may also include LTE information received by the LTE communication module in the first NR terminal apparatus. The resource occupied by the LTE information and/or reserved for the LTE information may be understood as a resource occupied by and/or reserved for the LTE information that is sent by the LTE terminal apparatus and that is sensed or received by the first NR terminal apparatus, or may be understood as a resource occupied by and/or reserved for the LTE information that is sent by the first NR terminal apparatus. That the first NR terminal apparatus obtains the LTE sidelink control information may be understood as that the first NR terminal apparatus senses or receives the LTE sidelink control information, or the first NR terminal apparatus determines the LTE sidelink control information transmitted by the LTE module in the first NR terminal apparatus.

The LTE sidelink control information may indicate the second resource, and the second resource may include one or more of the following resources: an initial transmission resource for transmitting the LTE information, a retransmission resource, a periodic reserved resource of an initial transmission resource, or a periodic reserved resource of a retransmission resource.

S1802: The first NR terminal apparatus determines, from the first resource set based on the LTE sidelink control information and signal strength information, a resource for transmitting the NR information.

The signal strength information may indicate a signal strength of the second resource, namely, a strength of a signal transmitted on the second resource. The first NR terminal apparatus may determine, from the first resource set based on the LTE sidelink control information and the signal strength of the second resource indicated by the LTE sidelink control information, the resource for transmitting the NR information. The first NR terminal apparatus may measure the second resource, to determine the signal strength information. For example, the first NR terminal apparatus may measure at least one of the following: an RSRP value, an RSSI value, a reference signal received quality (reference signal received quality, RSRQ) value, a channel quality indicator (channel quality indicator, CQI) value, or a CSI value of a PSCCH and/or a PSSCH on the second resource, to determine the signal strength of the second resource. For example, the first NR terminal apparatus may measure a signal strength of the initial transmission resource to determine a signal strength of the retransmission resource.

It may be understood that if the signal strength of the second resource is greater than or equal to a signal strength threshold, it indicates that the resource is occupied and/or reserved, or interference to transmission of the first NR terminal apparatus is large. On the contrary, if the signal strength of the second resource is less than or equal to a signal strength threshold, it indicates that the resource is not occupied and/or reserved, or interference to transmission of the first NR terminal apparatus is small. The first NR terminal apparatus may determine, based on the signal strength of the second resource and the signal strength threshold, the candidate resource for transmitting the NR information. It should be understood that the signal strength threshold corresponds to the signal strength of the second resource, and may be at least one of the following: an RSRP value, an RSSI value, an RSRQ value, a CQI value, or a CSI value.

In a possible implementation, the signal strength threshold may be determined based on a priority of the NR information and/or the LTE information, to avoid as much as possible that the first NR terminal apparatus excludes more or fewer resources, and balance transmission reliability of the NR information and the LTE information as much as possible. It may be understood that the priority of the NR information may be understood as a priority of selecting a resource by the first NR terminal apparatus, a priority of transmitting a PSSCH by the first NR terminal apparatus, a priority indicated by sidelink control information transmitted by the first NR terminal apparatus, a service priority of the first NR terminal apparatus, or a highest priority of a logical channel of the first NR terminal apparatus. The priority of the LTE information may be understood as a priority of selecting a resource by the LTE terminal apparatus, a priority of transmitting a PSSCH by the LTE terminal apparatus, a priority indicated by sidelink control information transmitted by the LTE terminal apparatus, a service priority of the LTE terminal apparatus, or a highest priority of a logical channel of the LTE terminal apparatus.

The signal strength threshold may be determined based on one or more of the following: a signal strength threshold that is preconfigured or that is indicated by a network device, a priority of the NR information, the priority of the LTE information, or an offset value (delta). The offset value may be predefined or preconfigured or may be indicated by the network device.

For example, the signal strength threshold is determined based on a signal strength threshold $Th(P_{Rx}, P_{Tx})$ in a resource allocation process. $P_{Tx}$ is the priority of the NR information. $P_{Rx}$ is a priority indicated by the detected LTE sidelink control information or a priority used by the LTE communication module for sending, or may be considered as the priority of the LTE information.

Optionally, the signal strength threshold is $Th(P_{Rx}, P_{Tx})$ - *delta. delta* is an integer. For example, *delta* belongs to {-9, -6, -3, 0, 3, 6, 9} dBm. Optionally, *delta* is a positive number. For example, *delta* is 0 or 3. To be specific, a signal strength threshold for excluding a resource occupied and/or reserved by the LTE information is reduced, so that more resources can be used to transmit the LTE information. That is, fewer resources are used to transmit the NR information. This ensures transmission reliability of the LTE information. Optionally, *delta* is a negative number. For example, *delta* is -3. To be specific, a signal strength threshold for excluding a resource occupied and/or reserved by the LTE information is increased, so that more resources can be used to transmit the NR information. That is, fewer resources are used to transmit the LTE information. This ensures transmission reliability of the NR information.

For example, the signal strength threshold is determined by the priority $P_{Rx}$ of the NR information or the priority $P_{Tx}$ of the NR information. For example, the signal strength threshold is $Th(P_{Tx})$. To be specific, the signal strength threshold is related to the priority of the NR information, and is unrelated to the priority indicated by the detected LTE sidelink control information or the priority $P_{Rx}$ used by the LTE communication module for sending. Alternatively, the signal strength threshold is $Th(P_{Rx})$, is unrelated to the priority $P_{Tx}$ of the NR information, and is related to the priority indicated by the detected LTE sidelink control information or the priority $P_{Rx}$ used by the LTE communication module for sending.

For example, the signal strength threshold may be preconfigured or may be indicated by the network device. In a possible implementation, if no signal strength threshold is preconfigured or indicated, the signal strength threshold may be determined based on the signal strength threshold $Th(P_{Rx}, P_{Tx})$ in the resource allocation process. If the signal strength threshold is preconfigured or indicated, the signal strength threshold may be determined based on the priority $P_{Rx}$ of the LTE information or the priority $P_{Tx}$ of the NR information.

Optionally, the default signal strength threshold is determined based on the signal strength threshold $Th(P_{Rx}, P_{Tx})$ or $Th(P_{Rx}, P_{Tx})$ - *delta* in the resource allocation process. If the signal strength threshold $Th(P_{Tx})$ or $Th(P_{Rx})$ is additionally configured or preconfigured, the signal strength threshold $Th(P_{Tx})$ or $Th(P_{Rx})$ is used.

That the first NR terminal apparatus determines, from the first resource set based on the LTE sidelink control information and signal strength information, a resource for transmitting the NR information is actually excluding an occupied resource and/or a reserved resource from the first resource set. A remaining resource in the first resource set other than the occupied resource and/or the reserved resource may be referred to as a candidate resource set. The candidate resource set includes the resource for transmitting the NR information. It may be understood that if an occupied resource and/or a reserved resource still exist in the candidate resource set, the first NR terminal apparatus continues to exclude the occupied resource and/or the reserved resource from the candidate resource set, to obtain a new candidate resource set. The new candidate resource set includes the resource for transmitting the NR information. That the first NR terminal apparatus determines, from the first resource set, a resource for transmitting the NR information may also be considered as a process in which the first NR terminal apparatus continuously updates the candidate resource set. The first resource set may be considered as an initial candidate resource set.

Specifically, that the first NR terminal apparatus determines the resource for transmitting the NR information includes the following three cases.

In a first case, when the signal strength of the second resource is greater than or equal to the signal strength threshold, the second resource is excluded from the candidate resource set. It may be understood that a remaining resource in the candidate resource set other than the second resource includes the resource for transmitting the NR information. Because the first NR terminal apparatus excludes only the second resource, as many resources as possible are left for the first NR terminal apparatus to use, and the first NR terminal apparatus can select as much as possible a resource with low interference, to meet an NR service requirement.

In a second case, when the signal strength of the second resource is greater than or equal to the signal strength threshold, a third resource is excluded from the candidate resource set, where the third resource is all resources in a slot in which the second resource is located. It may be understood that a remaining resource in the candidate resource set other than the third resource includes the resource for transmitting the NR information. In other words, only the NR information is transmitted in a slot in which a candidate resource selected by the first NR terminal apparatus is located, so that the first NR terminal apparatus needs to decode only NR sidelink control information on the candidate resource. This reduces complexity of the first NR terminal apparatus.

In a third case, when the signal strength of the second resource is greater than or equal to the signal strength threshold, a fourth resource is excluded from the candidate resource set, where the fourth resource is all resources in a subframe in which the second resource is located. It may be understood that a remaining resource in the candidate resource set other than the fourth resource includes the resource for transmitting the NR information. Similar to the second case, only the NR information is transmitted in a subframe in which the candidate resource selected by the first NR terminal apparatus is located, so that complexity of the first NR terminal apparatus can also be reduced.

It may be understood that if the first NR terminal apparatus includes the NR communication module and the LTE communication module, the first NR terminal apparatus may further exclude, from the candidate resource set, a resource that needs to be used by the LTE communication module in the first NR terminal apparatus to send or receive the LTE information. For example, the first NR terminal apparatus determines a resource to be used by the LTE communication module included in the first NR terminal apparatus to send the LTE information, and may exclude, from the first resource set, the resource or all resources in a slot or a subframe in which the resource is located. For another example, the first NR terminal apparatus determines a resource to be used by the LTE communication module included in the first NR terminal apparatus to receive the LTE information, and may exclude, from the first resource set, the resource or all resources in a slot or a subframe in which the resource is located.

In a possible implementation, the second resource, the third resource, or the fourth resource may be excluded from the candidate resource set through preconfiguration or through configuration by the network device. In other words, the first NR terminal apparatus may determine, through configuration by the network device or preconfiguration, to exclude the second resource, the third resource, or the fourth resource from the candidate resource set.

In a possible implementation, the first NR terminal apparatus may determine, based on the priority of the LTE information and/or the priority of the NR information, whether to exclude the second resource, the third resource, or the fourth resource from the candidate resource set. In this way, it can be avoided as much as possible that the NR communication module excludes a large quantity of resources, and transmission reliability of the NR information with a high priority can be ensured.

For example, if one or more of the following conditions are met, the first NR terminal apparatus excludes the second resource, the third resource, or the fourth resource from the candidate resource set. For ease of description, an example in which the third resource or the fourth resource is excluded is used below. It may be understood that the second resource is similar. In the following condition 1 to condition 14, the priority of the NR information is $P_{Tx}$, the priority of the LTE information is $P_{Rx}$, and a priority indicated by a first priority value is $P_{pre}$.

Condition 1: A priority value of the NR information is greater than or equal to a priority value of the LTE information. In other words, the priority $P_{Tx}$ of the NR information is lower than or equal to the priority $P_{Rx}$ of the LTE information. That is, the priority of the LTE information is higher. In this case, the first NR terminal apparatus may exclude the third resource or the fourth resource from the candidate resource set, to avoid using a resource that needs to be used by the LTE terminal apparatus, and improve transmission reliability of the LTE information. For example, the first NR terminal apparatus may exclude all resources in a slot (or a subframe) in which a retransmission resource and/or a reserved resource that are/is indicated by the LTE sidelink control information are/is located. On the contrary, the priority value of the NR information is less than or equal to the priority value of the LTE information. In other words, the priority $P_{Tx}$ of the NR information is higher than or equal to the priority $P_{Rx}$ of the LTE information. The first NR terminal apparatus does not exclude all resources in a slot (or a subframe) in which a retransmission resource and/or a reserved resource that are/is indicated by the LTE sidelink control information are/is located.

Condition 2: A priority value of the NR information is greater than or equal to a first priority value. In other words, the priority $P_{Tx}$ of the NR information is lower than or equal to the priority $P_{pre}$ indicated by the first priority value. The first priority value may be predefined or preconfigured, or may be indicated by the network device. For example, the first priority value belongs to {1, 2, ..., 8}. If the priority value of the NR information is greater than the first priority value, it may be considered that the priority of the NR information is low. In this case, the LTE information may be preferentially transmitted, and the first NR terminal apparatus may exclude the third resource or the fourth resource from the candidate resource set. On the contrary, if the priority value of the NR information is less than the first priority value, it may be considered that the priority of the NR information is high. In this case, the NR information may be preferentially transmitted, and the first NR terminal apparatus does not exclude the third resource or the fourth resource. It may be understood that a value range of the first priority value $P_{pre}$ is at least one of {1, 2, 3, 4, 5, 6, 7, 8}. 1 indicates the highest priority, and 8 indicates the lowest priority. For ease of description, a priority corresponding to the first priority value is the priority $P_{pre}$ indicated by the first priority value. The same applies to the following.

Condition 3: A priority value of the LTE information is less than or equal to a first priority value. In other words, the priority $P_{Rx}$ of the LTE information is higher than or equal to the priority $P_{pre}$ indicated by the first priority value. If the priority of the LTE information is higher than the priority indicated by the first priority value, it may be considered that the priority of the LTE information is high. In this case, the LTE information may be preferentially transmitted, and the first NR terminal apparatus may exclude the third resource or the fourth resource from the candidate resource set. On the contrary, if the priority of the LTE information is lower than the priority indicated by the first priority value, it may be considered that the priority of the NR information is high. In this case, the NR information may be preferentially transmitted, and the first NR terminal apparatus may not exclude the third resource or the fourth resource.

Optionally, the condition 1, the condition 2, and the condition 3 may be combined.

Condition 4: A priority value of the LTE information is less than or equal to a first priority value, and the priority value of the LTE information is less than or equal to a priority value of the NR information. In other words, the priority $P_{Rx}$ of the LTE information is higher than or equal to the priority $P_{pre}$ indicated by the first priority value, and the priority $P_{Rx}$ of the LTE information is higher than or equal to the priority $P_{Tx}$ of the NR information. That is, the priority of the LTE information is higher. In this case, the first NR terminal apparatus may exclude the second resource, the third resource, or the fourth resource from the candidate resource set, to avoid using a resource to be used by the LTE terminal device, and improve transmission reliability of the LTE information. On the contrary, the priority value of the LTE information is greater than or equal to the first priority value, or the priority value of the LTE information is greater than or equal to the priority value of the NR information. In other words, the priority $P_{Rx}$ of the LTE information is lower than or equal to the priority $P_{pre}$ indicated by the first priority value, and the priority $P_{Rx}$ of the LTE information is lower than or equal to the priority $P_{Tx}$ of the NR information. That is, the priority of the NR information is higher. In this case, the first NR terminal apparatus may not exclude the second resource, the third resource, or the fourth resource from the candidate resource set.

Condition 5: A priority value of the LTE information is less than or equal to a first priority value, and the first priority value is less than or equal to a priority value of the NR information. In other words, the priority $P_{Rx}$ of the LTE information is higher than or equal to the priority $P_{pre}$ indicated by the first priority value, and the priority $P_{pre}$ indicated

by the first priority value is higher than or equal to the priority $P_{Tx}$ of the NR information. The first NR terminal apparatus may exclude the second resource, the third resource, or the fourth resource from the candidate resource set. On the contrary, the priority $P_{Rx}$ of the LTE information is lower than the priority $P_{pre}$ indicated by the first priority value, or the priority $P_{pre}$ indicated by the first priority value is lower than the priority $P_{Tx}$ of the NR information. The first NR terminal apparatus may not exclude the second resource, the third resource, or the fourth resource from the candidate resource set.

Condition 6: A priority value of the NR information is greater than or equal to a first priority value, and a priority value of the LTE information is less than or equal to the priority value of the NR information. In other words, the priority $P_{Tx}$ of the NR information is lower than or equal to the priority $P_{pre}$ indicated by the first priority value, and the priority $P_{Rx}$ of the LTE information is higher than or equal to the priority $P_{Tx}$ of the NR information. The first NR terminal apparatus may exclude the second resource, the third resource, or the fourth resource from the candidate resource set. On the contrary, the priority $P_{Tx}$ of the NR information is higher than or equal to the priority $P_{pre}$ indicated by the first priority value, or the priority $P_{Rx}$ of the LTE information is lower than or equal to the priority $P_{Tx}$ of the NR information. The first NR terminal apparatus may not exclude the second resource, the third resource, or the fourth resource from the candidate resource set.

Optionally, in the condition 1 to the condition 3, the priority $P_{Tx}$ of the LTE information may be a priority of sending the LTE information by the LTE communication module included in the first NR terminal apparatus, or may be a priority of receiving the LTE information by the LTE communication module included in the first NR terminal apparatus. Optionally, the first NR terminal apparatus may further determine, based on a priority of sending the LTE information by the LTE communication module and/or a priority of receiving the LTE information by the LTE communication module included in the first NR terminal apparatus, whether to exclude the third resource or the fourth resource from the candidate resource set. In this case, there may be the following multiple cases. For ease of description, in condition 7 to condition 14 in the following, the priority of sending the LTE information by the LTE communication module included in the first NR terminal apparatus is $P_{Tx_LTE}$, and the priority of receiving the LTE information by the LTE communication module included in the first NR terminal apparatus is $P_{Rx_LTE}$.

Condition 7: $P_{Tx_LTE}$ is higher than or equal to $P_{Tx}$. In other words, a priority value corresponding to $P_{Tx_LTE}$ is less than or equal to a priority value corresponding to $P_{Tx}$. In this case, the first NR terminal apparatus may exclude the third resource or the fourth resource from the candidate resource set. On the contrary, if $P_{Tx_LTE}$ is lower than or equal to $P_{Tx}$, and the first terminal apparatus does not exclude the third resource or the fourth resource.

Condition 8: $P_{TX_LTE}$ is higher than or equal to $P_{Tx}$, and $P_{Tx}$ is lower than or equal to $P_{pre}$. In other words, a priority value corresponding to $P_{Tx_LTE}$ is less than or equal to a priority value corresponding to $P_{Tx}$, and a priority value corresponding to $P_{Tx}$ is greater than or equal to a first priority value. In this case, the first NR terminal apparatus may exclude the third resource or the fourth resource from the candidate resource set. On the contrary, if $P_{Tx_LTE}$ is lower than or equal to $P_{Tx}$, or $P_{Tx}$ is higher than or equal to $P_{pre}$, the first NR terminal apparatus does not exclude the third resource or the fourth resource.

Optionally, if $P_{Tx}$ is lower than or equal to $P_{pre}$, the first NR terminal apparatus may also exclude the third resource or the fourth resource from the candidate resource set.

Condition 9: $P_{Tx_LTE}$ is higher than or equal to $P_{Tx}$, and $P_{Tx_LTE}$ is higher than or equal to $P_{Pre}$. In other words, a priority value corresponding to $P_{Tx_LTE}$ is less than or equal to a priority value corresponding to $P_{Tx}$, and a priority value corresponding to $P_{Tx_LTE}$ is less than or equal to a first priority value. The first NR terminal apparatus may exclude the third resource or the fourth resource from the candidate resource set. On the contrary, if $P_{Tx_LTE}$ is lower than or equal to $P_{Tx}$, or $P_{Tx_LTE}$ is lower than or equal to $P_{pre}$, the first NR terminal apparatus does not exclude the third resource or the fourth resource.

Optionally, if $P_{Tx_LTE}$ is higher than or equal to $P_{pre}$, the first NR terminal apparatus may also exclude the third resource or the fourth resource from the candidate resource set.

Condition 10: $P_{Tx}$ is lower than or equal to $P_{pre}$, and $P_{Tx_LTE}$ is higher than or equal to $P_{Pre}$. In other words, a priority value corresponding to $P_{Tx}$ is greater than or equal to a first priority value, and a priority value corresponding to $P_{Tx_LTE}$ is less than or equal to the first priority value. The first NR terminal apparatus may exclude the third resource or the fourth resource from the candidate resource set. On the contrary, if $P_{Tx}$ is higher than or equal to $P_{pre}$, and $P_{Tx_LTE}$ is lower than or equal to $P_{pre}$, the first NR terminal apparatus does not exclude the third resource or the fourth resource.

Condition 11: $P_{Rx_LTE}$ is higher than or equal to $P_{Tx}$. In other words, a priority value corresponding to $P_{Rx_LTE}$ is less than or equal to a priority value corresponding to $P_{Tx}$. In this case, the first NR terminal apparatus may exclude the third resource or the fourth resource from the candidate resource set. On the contrary, if $P_{Rx_LTE}$ is lower than or equal to $P_{Tx}$, and a priority value corresponding to $P_{Rx_LTE}$ is greater than or equal to a priority value corresponding to $P_{Tx}$, the first NR terminal apparatus does not exclude the third resource or the fourth resource.

Condition 12: $P_{Rx_LTE}$ is higher than or equal to $P_{Tx}$, and $P_{Tx}$ is lower than or equal to $P_{Pre}$. In other words, a priority value corresponding to $P_{Rx_LTE}$ is less than or equal to a priority value corresponding to $P_{Tx}$, and a priority value corresponding to $P_{Tx}$ is greater than or equal to a first priority value. In this case, the first NR terminal apparatus may exclude the third resource or the fourth resource from the candidate resource set. On the contrary, if $P_{Rx_LTE}$ is lower than or equal to $P_{Tx}$, or $P_{Tx}$ is higher than or equal to $P_{pre}$, the first NR terminal apparatus does not exclude the third resource or the fourth resource.

Condition 13: $P_{Rx_LTE}$ is higher than or equal to $P_{Tx}$, and $P_{Rx_LTE}$ is higher than or equal to $P_{pre}$. In other words, a priority value corresponding to $P_{Rx_LTE}$ is less than or equal to a priority value corresponding to $P_{Tx}$, and a priority value corresponding to $P_{Rx_LTE}$ is less than or equal to a first priority value. The first NR terminal apparatus may exclude the third resource or the fourth resource from the candidate resource set. On the contrary, if $P_{Rx_LTE}$ is lower than or equal to $P_{Tx}$, or $P_{Rx_LTE}$ is lower than or equal to $P_{pre}$, the first NR terminal apparatus does not exclude the third resource or the fourth resource.

Optionally, if $P_{Rx_LTE}$ is higher than or equal to $P_{pre}$, the first NR terminal apparatus may exclude the third resource or the fourth resource from the candidate resource set.

Condition 14: $P_{Tx}$ is lower than or equal to $P_{pre}$, and $P_{Rx_LTE}$ is higher than or equal to $P_{Pre}$. In other words, a priority value corresponding to $P_{Tx}$ is greater than or equal to a first priority value, and a priority value corresponding to $P_{Rx_LTE}$ is less than or equal to the first priority value. The first NR terminal apparatus may exclude the third resource or the fourth resource from the candidate resource set. On the contrary, if $P_{Tx}$ is higher than or equal to $P_{pre}$, and $P_{Rx_LTE}$ is lower than or equal to $P_{pre}$, the first NR terminal apparatus does not exclude the third resource or the fourth resource.

The first NR terminal apparatus may determine, based on at least one of the condition 1 to the condition 14, whether to exclude the second resource, the third resource, or the fourth resource. Specifically, which conditions in the condition 1 to the condition 14 are met to enable the first NR terminal apparatus to exclude the second resource, the third resource, or the fourth resource may be predefined or preconfigured, or may be indicated by the network device. For example, if $P_{pre}$ is preconfigured or is indicated by the network device, the first NR terminal apparatus may determine, based on the condition 2 and/or the condition 3, whether to exclude the second resource, the third resource, or the fourth resource. If $P_{pre}$ is not preconfigured or is not indicated by the network device, the first NR terminal apparatus may determine, based on the condition 1, whether to exclude the second resource, the third resource, or the fourth resource. It should be noted that in this embodiment of this application, an example in which one or more conditions in the condition 1 to the condition 14 are met is used. Optionally, the plurality of conditions may be in an "or" relationship, or may be in an "and" relationship.

Optionally, the first priority value in the condition 4 and the condition 5 and the first priority value in the condition 8 to the condition 14 may be a same priority value or different priority values, depending on preconfiguration or indication by the network device.

Optionally, the first NR terminal apparatus may determine, based on a capability of the first NR terminal apparatus and at least one of the condition 1 to the condition 14, whether to exclude the second resource. In other words, a condition or conditions in the condition 1 to the condition 14 based on which the first NR terminal apparatus determines whether to exclude the second resource depend on the capability of the first NR terminal apparatus. For example, a correspondence between the condition 1 to the condition 14 and the capability of the terminal apparatus may be predefined or preconfigured, or may be indicated by the network device. The first NR terminal apparatus may determine, based on the capability of the first NR terminal apparatus and the correspondence, a condition or conditions based on which the first NR terminal apparatus determines whether to exclude the second resource.

Optionally, when excluding the reserved resource of the LTE information from the candidate resource set, the first NR terminal apparatus may perform preemption evaluation or re-evaluation on the reserved resource of the LTE information. If it is determined that the resource reserved for the LTE information is preempted, the resource reserved for the LTE information is excluded; or if it is determined that the resource reserved for the LTE information does not pass re-evaluation, the resource reserved for the LTE information is excluded. For example, the first NR terminal apparatus determines to send the NR information on the first resource, and the LTE sidelink control information obtained by the first NR terminal apparatus indicates the second resource. When the first resource and the second resource overlap with each other or partially overlap with each other, the first NR terminal apparatus performs preemption assessment or re-assessment on the first resource, the second resource, the third resource, or the fourth resource based on the condition 1 to the condition 14. Optionally, the first NR terminal apparatus may perform preemption assessment or re-assessment on the first resource, the second resource, the third resource, or the fourth resource based on the signal strength of the second resource and the signal strength threshold.

In a possible implementation, the first NR terminal apparatus may further determine a resource occupation ratio of the LTE terminal apparatus in the first resource set. The first NR terminal apparatus may send the resource occupation ratio to the network device. The network device may adjust sizes of time and frequency resources in the first resource pool and/or a second resource pool based on the resource occupation ratio, for example, a quantity of slots for a sidelink transmission, to properly allocate resources to the first NR terminal apparatus and/or the LTE terminal apparatus. This improves resource utilization and improves system throughput and reliability.

In this embodiment of this application, the resource occupation ratio of the LTE terminal apparatus in the first resource set may be represented by a ratio of a time unit occupied by the LTE information to the first resource set. It should be noted that a specific name of the resource occupation ratio is not limited in embodiments of this application.

The following describes how the first NR terminal apparatus determines the resource occupation ratio.

The first NR terminal device may determine a first measurement window, and determine the resource occupation ratio by using the first measurement window as a reference. A length of the first measurement window is configured by the network device or is preconfigured or predefined. For example, the time unit is a slot. For example, a start position of the first measurement window may be a slot n-a, and an end position of the measurement window may be a slot n-b. In other words, the first measurement window may be all slots included in [n-a, n-b]. Values of a and b are not limited in embodiments of this application. a and b may be integers. For example, a and b may be positive numbers. A value of a may alternatively be 0. a and b may be equal, or b may be less than a. For example, b=1. A value of a is related to a subcarrier spacing used by the first terminal apparatus. For example, a larger subcarrier spacing for sidelink communication indicates a larger value of a, where a=X or $X \times 2^{\mu}$, and a value of X may be 50 ms, 100 ms, 200 ms, 300 ms, 400 ms, 500 ms, 1000 ms, or the like. When the subcarrier spacings are 15 kHz, 30 kHz, 60 kHz, 120 kHz, and 240 kHz, values of $\mu$ are respectively 0, 1, 2, 3, and 4. A size of the first measurement window may be represented by absolute time, for example, a second or a millisecond, or may be represented by a slot. The slot may be a physical slot, or may be a logical slot in the first resource pool or the second resource pool. This is not limited in embodiments of this application. Optionally, the first measurement window may include a boundary n-a and/or a boundary n-b, or may not include n-a and n-b.

In an example, the resource occupation ratio may be a ratio of a quantity of slots occupied by the LTE information in the first measurement window to a total quantity of slots in the first resource set included in the first measurement window. It may be understood that the first NR terminal apparatus may receive at least one piece of LTE information, or may receive at least one piece of NR information in the first measurement window. The NR information and the LTE information are based on different radio access, and formats and included information content of the NR information and the LTE information are different. Therefore, the first NR terminal apparatus may distinguish whether the received information is the NR information or the LTE information. In other words, the first NR terminal apparatus decodes the NR information and the LTE information that are received in the first measurement window, and may determine which information in all information received in the first measurement window is the LTE information. Optionally, the first NR terminal apparatus may measure a signal strength of a slot occupied by the LTE information received in the first measurement window, and determine a slot whose signal strength is greater than a second signal strength threshold as the slot occupied by the LTE information. The second signal strength threshold is configured by the network device, or is preconfigured or predefined. The signal strength may be at least one of the following: a PSRP value, an RSSI value, an RSRQ value, a CQI value, or a CSI value. Optionally, the slot may be further understood as a subframe.

The first NR terminal apparatus may further send the NR information based on the resource occupation ratio. For example, when the LTE information occupies a large quantity of resources, the first NR terminal apparatus may send NR information with a low priority value, namely, NR information with a high priority. Correspondingly, when the LTE information occupies a small quantity of resources, the first NR terminal apparatus may send NR information with a high priority value, namely, NR information with a low priority. This ensures transmission reliability of the NR information as much as possible. For example, if the resource occupation ratio is greater than or equal to a preset threshold, and a priority value of the NR information is less than or equal to a second priority value, the first NR terminal apparatus sends the NR information. Alternatively, if the resource occupation ratio is less than or equal to a preset threshold, and a priority value of the NR information is greater than or equal to a second priority value, the first NR terminal apparatus sends the NR information. Optionally, that the priority of the NR information is high may be understood as that the priority value of the NR information is less than or equal to a priority value, for example, a third priority value. Correspondingly, that the priority of the NR information is low may be understood as that the priority value of the NR information is greater than or equal to the third priority value.

In a possible implementation, the first NR terminal apparatus may further send the NR information based on the capability information. The first NR terminal apparatus selects a resource based on the capability information, to select a resource that matches the capability information, so that impact on a transmission of the NR information is reduced. Optionally, the first NR terminal apparatus may store the capability information of the first NR terminal apparatus. In this case, the first NR terminal apparatus may query the stored capability information to determine the capability of the first NR terminal apparatus. Optionally, the first NR terminal apparatus may also send the capability information of the first NR terminal apparatus to the network device. In this case, before sending the NR information, the first NR terminal apparatus may request the network device to obtain the capability of the first NR terminal apparatus. For example, the network device sends second capability information to the first NR terminal apparatus, and the first NR terminal apparatus sends the NR information based on the second capability information. In other words, the first NR terminal apparatus sends the NR information based on a capability indicated by the second capability information. Optionally, the capability indicated by the second capability information is lower than or equal to the capability of the first NR terminal apparatus. Optionally, the capability is represented by a capability value. A capability value indicated by the second capability information is less than or equal to a capability value of the first NR terminal apparatus.

The first NR terminal apparatus may have one or more capabilities, for example, include one or more of the following capabilities.

Capability 1: A capability of blindly detecting LTE information, for example, a capability of blindly detecting an LTE PSCCH and/or an LTE PSSCH.

Capability 2: A capability of blindly detecting NR information, for example, a capability of blindly detecting an NR PSCCH and/or an NR PSSCH.

The first NR terminal apparatus may have the capability 1 and/or the capability 2. Optionally, the capability 1 and/or the capability 2 are two independent capabilities. Optionally, the first NR terminal apparatus has the capability 2, and the first NR terminal apparatus also has the capability 1 by default. For example, the first NR terminal apparatus reports the capability 2 to the network device, and the network device considers by default that the first NR terminal apparatus has the capability 1 and the capability 2.

Capability 3: A capability of blindly detecting a total quantity of LTE PSCCHs and/or LTE PSSCHs in one slot or subframe.

Capability 4: A capability of blindly detecting a total quantity of NR PSCCHs and/or NR PSSCHs in one slot or subframe.

Capability 5: A capability of blindly detecting a total quantity of PSCCHs and/or PSSCHs in one slot or subframe. It should be noted that blindly detecting the total quantity of PSCCHs is blindly detecting a total quantity of LTE PSCCHs and NR PSCCHs. Similarly, blindly detecting the total quantity of PSSCHs is blindly detecting a total quantity of LTE PSSCHs and NR PSSCHs. Optionally, a value of the capability 5 is less than or equal to a sum of a value of the capability 3 and a value of the capability 4.

Optionally, the capability 3, the capability 4, and the capability 5 are independent capabilities. Optionally, the first NR terminal apparatus may have at least one of the following: the capability 3, the capability 4, and the capability 5. For example, the first NR terminal apparatus stores capability information corresponding to one or more of the following: the capability 3, the capability 4, or the capability 5.

Capability 6: Whether a transmission of NR information and a transmission of LTE information are supported in different time units, for example, whether a transmission of NR information and a transmission of LTE information are supported in different slots or subframes.

Capability 7: Whether a transmission of NR information and a transmission of LTE information are supported in a same time unit, for example, whether a transmission of NR information and a transmission of LTE information are supported in a same slot or subframe.

Capability 8: Whether a transmission of NR information and a transmission of LTE information are supported in different time units, for example, whether a transmission of NR information and a transmission of LTE information are supported in different slots or subframes.

Capability 9: Whether a transmission of NR information and a transmission of LTE information are supported in a same frequency domain unit, for example, whether a transmission of NR information and a transmission of LTE information are supported on a same subchannel.

Optionally, the first NR terminal apparatus has at least one of the capability 6 to the capability 9. Capability information corresponding to at least one of the capability 6 to the capability 9 may be stored in the first NR terminal apparatus. The first NR terminal apparatus queries the stored capability information to determine the capability of the first NR terminal apparatus. Alternatively, the network device may send the capability information corresponding to the first NR terminal apparatus to the first NR terminal apparatus, and the first NR terminal apparatus determines, based on the capability information sent by the network device, a capability of sending NR information. Alternatively, the network device may send configuration information to the first NR terminal device, where the configuration information indicates a transmission mode of NR information and LTE information supported in the resource pool. This indirectly indicates how the first NR terminal apparatus sends the NR information.

The first NR terminal apparatus determines, based on the capability of the first NR terminal apparatus, the resource for transmitting the NR information. For example, the first NR terminal apparatus has the capability 6. When being configured to transmit the NR information, the first NR terminal apparatus may exclude the third resource from the candidate resource set in the second case or exclude the fourth resource from the candidate resource set in the third case. For another example, the first NR terminal apparatus has the capability 7. When being configured to transmit a resource for the NR information, the first NR terminal apparatus may exclude the second resource from the candidate resource set in the first case, exclude the third resource from the candidate resource set in the second case, or exclude the fourth resource from the candidate resource set in the third case.

Optionally, a resource in the candidate resource set for the NR information supports a blind transmission of the NR information. For example, after excluding the second resource, the third resource, or the fourth resource from the candidate resource set, the first NR terminal apparatus may blindly transmit the NR information on a remaining candidate resource. The blind transmission includes a transmission not based on HARQ feedback, or a "HARQ feedback enabled/disabled indicator (HARQ feedback enabled/disabled indicator)" field in SCI indicates disabled (disabled). The SCI may be a second-order SCI, an SCI format 2-A, or an SCI format 2-B. If the first NR terminal apparatus performs a HARQ-based transmission on the candidate resource, the solution in the fourth communication method mentioned below may be used. Details are not described herein.

In the embodiment shown in FIG. 18, the NR terminal apparatus excludes the resource occupied by and/or received for the LTE information in the candidate resource set, so that interference between the NR terminal apparatus and the LTE terminal apparatus can be reduced. During resource exclusion, exclusion may be performed with reference to the priority of the NR information and/or the priority of the LTE information, to ensure transmission reliability of the LTE information and the NR information as much as possible.

It should be noted that the procedure shown in FIG. 18 and the procedure shown in FIG. 10 may be combined, and a specific step execution sequence is not limited. For example, the first NR terminal apparatus may perform S1801 and S1802 after performing S1001 and S1002; the first NR terminal apparatus may perform S1001 and S1002 after performing S1801 and S1802; or the first NR terminal apparatus may perform S1002 after performing S1801, S1802, and S1001. Optionally, a sequence of S1801, S1802, and S1001 is not limited. The procedure shown in FIG. 18 and the procedure shown in FIG. 13 may also be combined, and a specific step execution sequence is not limited. For example, the first NR terminal apparatus may perform S1801 and S1802 after performing S1301 and S1302; the first NR terminal apparatus may perform S1301 and S1302 after performing S1801 and S1802; or the first NR terminal apparatus may perform S1302 after performing S1801, S1802, and S1301. Optionally, a sequence of S 1801, S1802, and S1301 is not limited. The procedure shown in FIG. 18, the procedure shown in FIG. 10, and the procedure shown in FIG. 13 may also be combined, and a specific step execution sequence is not limited. For example, the first NR terminal apparatus may perform S1301, S1302, S1801, and S1802 after performing S1001 and S1002; the first NR terminal apparatus may perform S1001, S1002, S1301, and S1302 after performing S1801 and S1802; or the first NR terminal apparatus may perform S1002 and S1302 after performing S1801, S1802, S1001, and S1301. Optionally, a sequence of S1801, S1802, S1001, and S1301 is not limited. Optionally, a sequence of S1002 and S1302 is not limited.

LTE-V2X supports the 15 kHz SCS, and NR-V2X supports the {15, 30, 60, 120, 240, 480} kHz SCS. When the first NR terminal apparatus and the LTE terminal apparatus share the first resource set, problems such as a resource conflict and a resource waste may be caused. For ease of understanding, the following uses an example in which an SCS of the resource for transmitting the LTE information in the first resource set is 15 kHz and an SCS of the resource for transmitting the NR information in the first resource set is 30 kHz to describe a problem that may exist when the first NR terminal apparatus and the LTE terminal apparatus share the first resource set.

FIG. 19 is a diagram in which a first resource set supports a 15 kHz SCS and a 30 kHz SCS. (a) in FIG. 19 shows a diagram in which an NR terminal apparatus 1 sends NR information on a resource r3 in the first resource set, and an NR terminal apparatus 2 sends NR information on resources r4 and r5 in the first resource set. (b) in FIG. 19 shows a diagram in which an LTE terminal apparatus sends LTE information on resources r1 and r2 in the first resource set. In (a) in FIG. 19, an example in which the first resource set includes two subchannels in frequency domain and includes 16 slots in time domain is used. Correspondingly, in (b) in FIG. 19, an example in which the first resource set includes four subchannels in frequency domain and includes eight subframes in time domain is used. Mapping of the resources on which the LTE terminal apparatus, the NR terminal apparatus 1, and the NR terminal apparatus 2 share the first resource set to transmit the information is shown in (c) in FIG. 19.

It may be learned from (a) in FIG. 19 that the resource r5 occupies a slot 15 in time domain, and occupies a subchannel 1 in frequency domain. However, the NR terminal apparatus sends the NR information to schedule a resource in a unit of a slot. If a time domain resource is scheduled at a granularity of a slot, a resource formed by a subframe 8 and the subchannel 1 (or a subchannel 2) cannot be used by the LTE terminal apparatus, causing a resource waste. In addition, the LTE terminal apparatus decodes the received information at a granularity of a subframe, but the NR terminal apparatus decodes the received information at a granularity of a slot. The first resource set supports a plurality of SCSs at the same time. As a result, the LTE terminal apparatus may not correctly decode the received SCI, and therefore cannot select a resource. For example, the LTE terminal apparatus may decode SCI carried by r2 as one piece of information. The LTE terminal apparatus considers the SCI carried by r3 and the SCI carried by r4 as one piece of SCI for decoding. However, the SCI carried by r3 and the SCI carried by r4 are respectively from the NR terminal apparatus 1 and the NR terminal apparatus 2. Therefore, the LTE terminal apparatus cannot correctly decode the SCI carried by r3 and the SCI carried by r4.

It may be understood that the LTE terminal apparatus performs AGC only on a signal strength of a first symbol in a subframe. If the first resource set supports a plurality of SCSs at the same time, accuracy of decoding the received information by the LTE terminal apparatus may be low. For example, the LTE terminal apparatus performs AGC only on a signal strength of the first two symbols of r3, but does not perform AGC on a signal strength of a first symbol of r4. However, r3 and r4 carry information about different NR terminal apparatuses, and signal strengths of r3 and r4 may be different. For example, a signal strength of r3 is large, and a signal strength of r4 is small. Therefore, the signal strength of r3 cannot be used to represent the signal strength of r4. In this way, the terminal apparatus decodes the received information only based on an AGC result of r3. Because the signal strength of r4 is low, accuracy of a decoding result is low.

Similarly, the LTE terminal apparatus measures the DMRS only on symbols l=2, 5, 8, 11 of the subframe by using a DMRS measurement method of the LTE terminal apparatus. However, the LTE terminal apparatus cannot accurately identify DMRS symbol positions of r3 and r4, and therefore cannot determine an RSRP value based on the DMRS. In this way, the LTE terminal apparatus cannot exclude the reserved resources r3 and r4 based on an RSRP measurement value in a resource selection process.

Optionally, LTE-V2X does not support a transmission of feedback information, but NR-V2X supports a transmission of feedback information. If the NR terminal apparatus transmits the feedback information in the first resource set, a resource for transmitting the feedback information may overlap with a resource for transmitting the LTE information, causing a resource conflict. For example, FIG. 20 is a diagram in which a resource for transmitting feedback information overlaps with a resource for transmitting LTE information. As shown in FIG. 20, in a slot/subframe k, an NR terminal apparatus sends feedback information on a PSFCH on a resource 2, and an LTE terminal apparatus receives or sends LTE information on a PSCCH or a PSSCH on the resource 2. Consequently, the resource for transmitting the feedback information overlaps with the resource for transmitting the LTE information. This causes interference to decoding of a feedback information receiving terminal and an LTE information receiving terminal. In addition, for a terminal apparatus in which an NR communication module and an LTE communication module are disposed, the NR communication module sends or receives a feedback message on a PSFCH on a resource 1, and the LTE communication module receives or sends LTE information on a PSCCH or a PSSCH on the resource 2, causing a half-duplex problem of the terminal apparatus.

In view of this, the fourth communication method provided in embodiments of this application is proposed. FIG. 21 is a schematic flowchart of a fourth communication method according to an embodiment of this application. In the following description, a time unit for transmitting LTE information may also be referred to as an LTE-V logical subframe, and a time unit for transmitting NR information may also be referred to as an NR-V logical slot. A resource for transmitting feedback information (or a feedback message) is referred to as a feedback resource. The feedback information includes, for example, a hybrid automatic repeat request (hybrid automatic repeat request, HARQ) (acknowledge, ACK) feedback message and/or a collision indication message and/or a half-duplex indication message.

S2101: A first NR terminal apparatus obtains configuration information, where the configuration information is used to configure a first resource set, the first resource set is used by the first NR terminal apparatus to transmit NR information, and a resource in the first resource set is further used to transmit LTE information.

S2102: The first NR terminal apparatus determines, based on the configuration information, a resource for transmitting the NR information.

The first resource set may be a set of resources shared by the first NR terminal apparatus and an LTE terminal apparatus. For example, a network device configures or preconfigures a resource pool. The resource pool is an NR-V2X resource pool for the first NR terminal, and is an LTE-V2X resource pool for the LTE terminal apparatus. The first NR terminal may transmit the NR information by using a resource in the resource pool. The LTE terminal apparatus may also use a resource in the resource pool to transmit the LTE information. In this case, the first resource set is the resource pool. For another example, a network device configures or preconfigures an NR-V2X resource pool for transmitting the NR information, and the network device configures or preconfigures an LTE-V2X resource pool for transmitting the LTE information. The NR terminal apparatus may use a resource in the NR-V2X resource pool, or may use a resource in the LTE-V2X resource pool. In this case, the first resource set includes an overlapping resource in the NR-V2X resource pool and the LTE-V2X resource pool or a resource in the LTE-V2X resource pool.

For example, the LTE-V2X resource pool and the NR-V2X resource pool are a same resource pool. In this case, the first resource set is the resource pool. Optionally, an SCS of the resource pool is 15 kHz. In this case, the NR terminal apparatus may select a resource from the first resource set based on the solution shown in FIG. 10, FIG. 13, or FIG. 18.

For example, the LTE-V2X resource pool and the NR-V2X resource pool are different resource pools. In this case, the first resource set includes an overlapping resource in the NR-V2X resource pool and the LTE-V2X resource pool. Alternatively, it may be understood that the first resource set is an NR-V2X resource pool and includes a resource in the LTE-V2X resource pool. In this case, the NR terminal apparatus may select a resource from the first resource set based on the solution shown in FIG. 10, FIG. 13, or FIG. 18. Because the LTE information is not transmitted on a remaining resource in the NR-V2X resource pool other than the overlapping resource in the LTE-V2X resource pool, the remaining resource may be designed for transmitting the NR information. For example, an SCS of the remaining resource is set to at least one of {30, 60, 120, 240, 480} kHz.

In this embodiment of this application, the time unit for transmitting the LTE information in the first resource set does not include the time unit for transmitting the feedback information, and the time unit includes a symbol, a slot, or a subframe. For example, a subframe for transmitting LTE information in the first resource set does not include a symbol for transmitting feedback information. A logical slot for transmitting feedback information may also be understood as a logical slot including a PSFCH. The logical slot for transmitting the feedback information may be used to transmit NR sidelink feedback information and/or NR collision indication information, and may be further used to transmit NR sidelink control information and/or NR sidelink data information. In other words, a logical subframe for transmitting LTE information is configured in a time unit in the NR-V logical slot other than the logical slot for transmitting the feedback information. Alternatively, it may be understood that a resource for transmitting the feedback information is configured on a resource that does not belong to the LTE-V2X resource pool. For example, it is ensured that an NR-V logical slot is included between physical subframes in which two adjacent LTE-V logical subframes are located. In other words, the LTE-V logical subframe is configured in the time unit in which the NR-V logical slot that does not include the feedback resource is located. This can avoid that the first NR terminal apparatus sends the feedback information in the time unit for transmitting the LTE information, that is, avoid mutual interference between the first NR terminal apparatus and the LTE terminal apparatus.

The time unit for transmitting the LTE information may also be considered as the LTE-V logical subframe, and the time unit for transmitting the NR information may also be considered as the NR-V logical slot. In a possible implementation, the NR-V logical slot and/or the LTE-V logical subframe may be configured, so that the time unit for transmitting the LTE information in the first resource set does not include the time unit for transmitting the feedback information. For example, a PSFCH resource is configured in an NR-V logical slot that does not belong to the LTE-V resource pool. For another example, an LTE-V logical subframe is configured in a time unit in which an NR-V logical slot that does not include a PSFCH resource is located. Optionally, the NR-V resource pool and/or the LTE-V resource pool correspond to different SCSs, and corresponding configuration solutions are also different. The following uses an example for description. In the following, $N_{PSFCH}$ is a period of a resource for transmitting feedback information and/or collision indication information in the first resource set, and p is an integer less than or equal to $N_{PSFCH}$. For example, $N_{PSFCH}$ is greater than or equal to 2. In the following, "adjacent" in "adjacent time units" means that logical slot indexes are adjacent or logical subframe indexes are adjacent. In addition, "A time units include B time units" in the following means "the B time units are configured or preconfigured in the A time units". For example, "$N_{PSFCH}$ adjacent time units for transmitting the NR information include $N_{LTE}$ time units for transmitting the LTE information" may be considered as "the $N_{LTE}$ time units for transmitting the LTE information are configured or preconfigured in the $N_{PSFCH}$ adjacent time units for transmitting the NR information". Similarly, "A time units do not include B time units" means "the B time units are not configured or preconfigured in the A time units". For example, "the $N_{LTE}$ time units for transmitting the LTE information do not include the time unit for transmitting the feedback information" may be considered as "the time unit for transmitting the feedback information is not configured or preconfigured in the $N_{LTE}$ time units for transmitting the LTE information".

In a first case, both an SCS supported by the NR-V2X resource pool and an SCS supported by the LTE-V2X resource pool are 15 kHz. The $N_{PSFCH}$ adjacent time units for transmitting the NR information may be configured to include the $N_{LTE}$ time units for transmitting the LTE information. The NLTE time units for transmitting the LTE information do not include a time unit for transmitting feedback information. In other words, time domain positions corresponding to the $N_{LTE}$ time units for transmitting the LTE information are located between time domain positions corresponding to the $N_{PSFCH}$ adjacent time units for transmitting the NR information. A time domain position corresponding to the time unit for transmitting the feedback information is not within a time domain position range corresponding to the $N_{LTE}$ time units for transmitting the LTE information. It should be understood that $N_{LTE}$ is greater than or equal to 1, and is less than $N_{PSFCH}$. $N_{PSFCH}$ is a period of a resource for transmitting feedback information in the first resource set. $N_{PSFCH}$ is greater than or equal to 2, for example, $N_{PSFCH}$=2 or 4. The following describes, by using specific examples, possible implementations of the time unit for transmitting the NR information and/or the time unit for transmitting the feedback information.

In a possible implementation, the PSFCH resource may be configured or preconfigured in the NR-V logical slot that does not belong to the LTE-V2X resource pool, so that the time unit for transmitting the LTE information in the first resource set does not include the time unit for transmitting the feedback information. For example, one or more of the following examples 1 to 3 may be configured.

Example 1: $N_{PSFCH}$ and $N_{LTE}$ satisfy: $N_{LTE}+p=N_{PSFCH}$. For example, $N_{PSFCH}$=2, $N_{LTE}$=1, and p=1. For another example, $N_{PSFCH}$=4, $N_{LTE}$=3, and p=1; $N_{PSFCH}$=4, $N_{LTE}$=2, and p=2; or $N_{PSFCH}$=4, $N_{LTE}$=1, and p=3.

Example 2: An index of a time unit for transmitting LTE information is k1. In other words, an index of an LTE-V logical slot is k1. When k1 satisfies: k1 mod ($N_{PSFCH}$ - $p$) = $N_{PSFCH}$ - $p$ - 1, one time unit for transmitting NR information is configured or preconfigured after the time unit k1. Optionally, the time unit for transmitting the NR information includes a PSFCH resource. P is an integer less than $N_{PSFCH}$. For example, $N_{PSFCH}$=2 or 4, and P=1, 2 or 3.

Example 3: An index of a time unit for transmitting LTE information is k2. In other words, an index of an LTE-V logical slot is k2. When k2 satisfies: k mod ($N_{PSFCH}$ - p) = 0, one time unit for transmitting NR information is configured or preconfigured before the time unit k2. Optionally, the time unit for transmitting the NR information includes a PSFCH resource. P is an integer less than $N_{PSFCH}$. For example, $N_{PSFCH}$=2 or 4, and P=1, 2 or 3.

In a possible implementation, the LTE-V logical subframe may be configured in the time unit in which the NR-V logical slot that does not include the PSFCH resource is located, so that the time unit for transmitting the LTE information in the first resource set does not include the time unit for transmitting the feedback information. For example, the following example 4 can be configured.

Example 4: In every $N_{PSFCH}$ consecutive NR-V logical slots, q LTE-V logical subframes may be preconfigured or may be configured by the network device in a time unit of an NR-V logical slot that does not include a feedback resource. q is a positive integer less than $N_{PSFCH}$, for example, {1, 2, 3}. Optionally, a quantity of LTE-V logical subframes included in a time unit in which $N_{PSFCH}$ adjacent NR-V logical slots are located is q.

The NR terminal apparatus may determine, based on at least one of Example 1, Example 2, Example 3, or Example 4, the time unit for transmitting the NR information. For example, the NR terminal apparatus may determine, based on Example 1 and Example 2, the time unit for transmitting the NR information. For another example, the NR terminal apparatus may determine, based on Example 1 and Example 3, the time unit for transmitting the NR information. For another example, the NR terminal apparatus may determine, based on Example 4, the time unit for transmitting the NR information.

For ease of understanding, the following describes, with reference to the accompanying drawings, how to ensure that physical subframes in which two adjacent LTE-V logical subframes are located include an NR-V logical slot in Example 1 to Example 4, to avoid that the first NR terminal apparatus sends the feedback information in the time unit for transmitting the LTE information, that is, avoid mutual interference between the first NR terminal apparatus and the LTE terminal apparatus.

For example, FIG. 22 is a configuration diagram of an NR-V2X resource pool and an LTE-V2X resource pool. In FIG. 22, $N_{PSFCH}$=2 is used as an example. It may be understood that $N_{LTE}$=1, and p=1. It may be learned from FIG. 22 that in the NR-V2X resource pool, a feedback resource does not overlap with a resource in the LTE-V2X resource pool.

For another example, FIG. 23 is a configuration diagram of an NR-V2X resource pool and an LTE-V2X resource pool. In FIG. 23, $N_{PSFCH}$=4 is used as an example. It may be understood that $N_{LTE}$=3, and p=1. It may be learned from FIG. 23 that in the NR-V2X resource pool, a feedback resource does not overlap with a resource in the LTE-V2X resource pool.

Similarly, FIG. 24 is a configuration diagram of an NR-V2X resource pool and an LTE-V2X resource pool. In FIG. 24, $N_{PSFCH}$=4 is used as an example. It may be understood that $N_{LTE}$=2, and p=2. It may be understood that $N_{LTE}$ LTE subframes may overlap, in time domain, with an NR slot that does not include a slot for transmitting feedback information. For example, in FIG. 24, LTE subframes 0 and 1 respectively overlap with NR slots 1 and 3 in time domain. For another example, LTE subframes 0 and 1 may respectively overlap with NR slots 1 and 2 in time domain, or LTE subframes 0 and 1 may respectively overlap with NR slots 2 and 3 in time domain.

FIG. 25 is a configuration diagram of an NR-V2X resource pool and an LTE-V2X resource pool. In FIG. 25, $N_{PSFCH}$=4 is used as an example. It may be understood that $N_{LTE}$=1, and p=3. It may be learned from FIG. 24 and FIG. 25 that in the NR-V2X resource pool, a feedback resource does not overlap with a resource in the LTE-V2X resource pool. It may be understood that $N_{LTE}$ LTE subframes may overlap, in time domain, with an NR slot that does not include a slot for transmitting feedback information. For example, in FIG. 25, an LTE subframe 0 overlaps with an NR slot 1 in time domain. For another example, an LTE subframe 0 may alternatively overlap with an NR slot 2 or an NR slot 3 in time domain.

In a second case, an SCS supported by the NR-V2X resource pool is different from an SCS supported by the LTE-V2X resource pool. For example, the SCS supported by the NR-V2X resource pool is 30 kHz. Optionally, the SCS supported by the NR-V2X resource pool and the SCS supported by the LTE-V2X resource pool satisfy the following relationship: $2^{\mu}=SCS_{NRV}/SCS_{LTEV}$, or $\mu = log_2\ SCS_{NRV}-log_2\ SCS_{LTEV}$. $SCS_{NRV}$ is the SCS supported by the NR-V2X resource pool, and $SCS_{LTEV}$ is the SCS supported by the LTE-V2X resource pool. In this case, because the SCS supported by the NR-V2X resource pool is 30 kHz, a time length of one LTE-V subframe corresponds to a time length of two NR-V slots. To ensure that there is no feedback resource in the time unit in which the LTE-V2X resource pool is located, a period value of an NR-V2X PSFCH is greater than or equal to four slots. For example, $N_{PSFCH}$ belongs to {4, 6, 8, 10, 12, 16, 32, 64} slots. Optionally, $N_{PSFCH}$ and the subcarrier spacing $\mu$ satisfy the following relationship: $N_{PSFCH} \geq 2^{\mu+1}$, and/or $N_{PSFCH}=A \times 2^{\mu+1}$, where A is a positive integer. For example, a set of values ofAis {1, 2, 3, 4}.

In an example, $2^{\mu}$ time units for transmitting NR information may be configured between time units in which two adjacent subframes for transmitting LTE information are located. For example, the time unit for transmitting the NR information is a slot. It may also be understood that $2^{\mu}$ NR-V2X logical slots are configured after a time unit in which each LTE-V2X logical subframe is located. Alternatively, $2^{\mu}$ NR-V2X logical slots are configured before a time unit in which each LTE-V2X logical subframe is located. It may be understood that a quantity of slots including feedback resources in the $2^{\mu}$ slots for transmitting the NR information is n, n includes 1, and $\mu$ indicates a subcarrier spacing. It should be noted that the slot including the feedback resource is a first slot that is used to transmit NR information and that is after the subframe for transmitting the LTE information, or the slot including the feedback resource is a first slot for transmitting the NR information in the $2^{\mu}$ slots for transmitting the NR information.

In another example, in every $N_{PSFCH}$ or $2^{\mu+1}$ consecutive NR-V2X logical slots, a LTE-V2X logical subframes are configured in a time unit in which the NR-V2X logical slot that does not include a feedback resource is located, where a includes 1. For example, a start position of an LTE-V2X logical subframe k is the same as a start position of an NR-V2X logical slot m. Optionally, m satisfies m mod ($N_{PSFCH}$)=$N_{PSFCH}$/2.

For example, FIG. 26 is a configuration diagram of an NR-V2X resource pool and an LTE-V2X resource pool.

In FIG. 26, an example in which an SCS supported by the NR-V2X resource pool is 30 kHz and $N_{FSFCH}$=4 is used. It may be learned from FIG. 26 that a feedback resource in the NR-V2X resource pool does not overlap with a resource in the LTE-V2X resource pool. For example, $2^{\mu}$ (namely, two) slots 4 and 5 for transmitting NR information are included between time units in which two adjacent subframes 0 and 1 for transmitting LTE information are located. The first slot 4 for transmitting the NR information in the $2^{\mu}$ (namely, two) slots for transmitting the NR information is a slot including a feedback resource. For another example, in every $N_{PSFCH}$ = 4 consecutive NR-V2X logical slots 0, 1, 2, and 3, one LTE-V2X logical subframe 0 is configured in a time unit in which an NR-V2X logical slot that does not include a feedback resource is located. A start position of an LTE-V2X logical subframe k=0 is the same as a start position of an NR-V2X logical slot m=2, and m satisfies m mod ($N_{PSFCH}$)=$N_{PSFCH}$/2.

For another example, FIG. 27 is a configuration diagram of an NR-V2X resource pool and an LTE-V2X resource pool. In FIG. 27, an example in which an SCS supported by the NR-V2X resource pool is 60 kHz and $N_{PSFCH}$=8 is used. It may be learned from FIG. 27 that in the NR-V2X resource pool, a feedback resource does not overlap with a resource in the LTE-V2X resource pool. For example, $2^{\mu}$ (namely, four) slots 8, 9, 10, and 11 for transmitting NR information are included between time units in which two adjacent subframes 0 and 1 for transmitting LTE information are located. The slot including the feedback resource is the first slot 8 for transmitting the NR information in the $2^{\mu}$ (namely, four) slots for transmitting the NR information. For another example, in every $N_{PSFCH}$ = 8 consecutive NR-V2X logical slots 0 to 7, one LTE-V2X logical subframe 0 is configured in a time unit in which an NR-V2X logical slot that does not include a feedback resource is located. A start position of an LTE-V2X logical subframe k=0 is the same as a start position of an NR-V2X logical slot m=4, and m satisfies m mod ($N_{PSFCH}$)=$N_{PSFCH}$/2.

It may be understood that when an SCS supported by the NR-V2X resource pool is different from an SCS supported by the LTE-V2X resource pool, because the first NR terminal apparatus sends NR information scheduling resources in a unit of a slot, and the LTE terminal apparatus sends LTE information scheduling resources in a unit of a subframe, causing a resource waste. Therefore, an embodiment of this application provides a new NR information scheduling (or mapping) solution, to avoid a resource waste as much as possible. In the following, an example in which the SCS supported by the LTE-V2X resource pool is 15 kHz and the SCS supported by the NR-V2X resource pool is 30 kHz is used. A time unit of 1 ms corresponds to one subframe in LTE-V, and the subframe includes 14 symbols whose indexes are {0, 1, 2, ..., 13}. Alternatively, the subframe may be divided into a first half frame and a second half frame, and both a symbol index of the first half frame and a symbol index of the second half frame are {0, 1, 2, ..., 6}. The symbol index of the first half frame corresponds to {0, 1, 2, ..., 6} in {0, 1, 2, ..., 13}, and the symbol index of the second half frame corresponds to {7, 8, 9, ..., 13} in {0, 1, 2, ..., 13}. A time unit of 1 ms corresponds to two NR-V slots. Each slot includes 14 symbols whose symbol indexes are {0, 1, 2, ..., 13}.

In this embodiment of this application, a granularity of the NR information scheduling resource may be configured as $2^{\mu}$ time units, for example, $2^{\mu}$ slots, or may be $2^{\mu}$ logical slots. It may also be considered that time units for transmitting NR information are $2^{\mu}$ consecutive slots. It may be understood that the $2^{\mu}$ time units may be used to transmit $2^{\mu}$ TBs, or the $2^{\mu}$ time units may be used to transmit $2^{\mu}$ PSSCHs. A start time unit index m of the $2^{\mu}$ time units satisfies: m mod ($2^{\mu}$) = 0. Alternatively, an end time unit index m of the $2^{\mu}$ time units satisfies: m mod ($2^{\mu}$) = $2^{\mu}$-1. For example, FIG. 28 is a configuration diagram of an NR-V2X resource pool and an LTE-V2X resource pool. In FIG. 28, an example in which an SCS supported by the NR-V2X resource pool is 30 kHz and an SCS supported by the LTE-V2X resource pool is 15 kHz is used. For example, $\mu$=1. To be specific, slots for transmitting NR information are two consecutive slots, and a start slot index m of the two slots satisfies: m mod ($2^{\mu}$) = 0. In this case, m=2. In other words, the slots for transmitting the NR information are two consecutive slots: a slot 2 and a slot 3. Alternatively, an end slot index m of the two slots satisfies: m mod ($2^{\mu}$) = $2^{\mu}$-1. In this case, m=3. In other words, the slots for transmitting the NR information are two consecutive slots: a slot 2 and a slot 3.

Optionally, the NR information carried in the $2^{\mu}$ slots may be sent to a same terminal apparatus, or may be sent to different terminal apparatuses. Optionally, the first NR terminal apparatus may send the first SCI in the first communication method in the $2^{\mu}$ slots. In this case, information carried in the $2^{\mu}$ slots has a same source ID and/or a same destination ID. For example, the first NR terminal apparatus sends the sidelink control information in the NR-V format and/or the NR information in the logical slot that belongs to the LTE-V resource pool. Optionally, the first NR terminal apparatus sends one or more of the sidelink control information in the NR-V format, the NR information, and the feedback information in the NR-V logical slot that does not belong to the LTE-V resource pool. For another example, the first NR terminal apparatus sends the sidelink control information in the LTE-V format and/or the NR information in the logical slot that belongs to the LTE-V resource pool. Optionally, the first NR terminal apparatus sends the sidelink control information in the LTE-V format and/or the NR information in the NR-V logical slot that does not belong to the LTE-V resource pool. Optionally, the first NR terminal apparatus sends the feedback information in the NR-V format in the NR-V logical slot that does not belong to the LTE-V resource pool. For another example, the LTE terminal apparatus sends the LTE information in the logical slot that belongs to the LTE-V resource pool by using the sidelink control information in the LTE-V format. Optionally, the sidelink control information in the NR-V format and/or the LTE information are/is sent on the NR-V logical resource that does not belong to the LTE-V resource pool.

In a possible implementation, the $2^\mu$ time units for transmitting the NR information include $2^\mu$ consecutive or adjacent AGC symbols. A first AGC symbol in the $2^\mu$ AGC symbols is a start symbol of the $2^\mu$ time units. It may also be understood that a start position of the $2^\mu$ AGC symbols is aligned with a start position of the $2^\mu$ time units, the $2^\mu$ AGC symbols are located in $2^\mu$ start symbols of the $2^\mu$ time units for transmitting the NR information, or a start position of the $2^\mu$ AGC symbols is aligned with a start position of LTE-V AGC symbols. The $2^\mu$ time units may be $2^\mu$ slots or $2^\mu$ logical slots. Optionally, the $2^\mu$ AGC symbols may be separately used for AGC of $2^\mu$ TBs, and one AGC symbol corresponds to one TB. Alternatively, the $2^\mu$ AGC symbols may be together used for AGC of $2^\mu$ TBs. In other words, AGC is performed on reception of each TB in the $2^\mu$ TBs by using a measurement result of a total signal strength of the $2^\mu$ AGC symbols. Because the $2^\mu$ AGC symbols in the $2^\mu$ time units are consecutive or adjacent, the terminal apparatus needs to perform AGC only in a time unit in which the first symbol of the LTE-V logical subframe is located, and does not need to perform AGC in another symbol. This reduces hardware overheads. In addition, it may be further ensured that the LTE terminal apparatus performs AGC on $2^\mu$ slots, so that accuracy of decoding sidelink control information and/or data information based on an AGC result can be improved as much as possible.

For example, FIG. 29 is a mapping diagram of an NR-V AGC symbol. In FIG. 29, an example in which an SCS supported by an NR-V2X resource pool is 30 kHz and an SCS supported by an LTE-V2X resource pool is 15 kHz is used. As shown in FIG. 29, a time unit of 1 ms corresponds to one subframe in LTE-V, there are 14 symbols in the subframe, and symbol indexes are {0, 1, 2, ..., 13}. A time unit of 1 ms corresponds to two NR-V slots. There are 14 symbols in each slot, and symbol indexes are {0, 1, 2, ..., 13}. In FIG. 29, $\mu$=1 is used as an example. It may be learned from FIG. 29 that the two slots for transmitting the NR information include two consecutive or adjacent AGC symbols, and a first AGC symbol in the $2^\mu$ AGC symbols is a start symbol of the two slots. In other words, the two consecutive or adj acent AGC symbols are located in a first slot of the two slots.

For another example, FIG. 30 is another mapping diagram of an NR-V AGC symbol. Similar to FIG. 29, in FIG. 30, $\mu$=1 is used as an example. Two slots for transmitting NR information include two consecutive or adjacent AGC symbols, and the two consecutive or adjacent AGC symbols are located in a first slot of the two slots.

In a possible implementation, the $2^\mu$ time units for transmitting the NR information include $2^\mu$ consecutive or adjacent GAP symbols. A last GAP symbol in the $2^\mu$ GAP symbols is an end symbol of the $2^\mu$ time units. It may also be understood that an end position of the $2^\mu$ GAP symbols is aligned with an end position of the $2^\mu$ time units, the $2^\mu$ GAP symbols are located in the last $2^\mu$ symbols of the $2^\mu$ time units for transmitting the NR information, or a start position of the $2^\mu$ GAP symbols is aligned with a start position of LTE-V GAP symbols, and the $2^\mu$ GAP symbols in the $2^\mu$ time units are consecutive or adjacent. It may be understood that the $2^\mu$ time units may be $2^\mu$ slots or $2^\mu$ logical slots. In this way, if the terminal apparatus performs sending in a time unit in which a last symbol of the LTE-V logical subframe is located, another terminal apparatus that performs transmission/reception conversion does not perform receiving. In this case, a transmission/reception conversion conflict between each first NR terminal apparatus and the second NR terminal apparatus can be avoided as much as possible, and a transmission/reception conversion conflict between the first NR terminal apparatus and the LTE terminal apparatus can also be avoided as much as possible.

For example, continue to refer to FIG. 29. It may be learned from FIG. 29 that the two slots for transmitting the NR information include two consecutive or adjacent GAP symbols, and a last GAP symbol of the two GAP symbols is an end symbol of the two slots. Similarly, still refer to FIG. 30. It may be learned from FIG. 30 that two consecutive or adjacent GAP symbols are located in a last slot of the two slots.

It should be noted that, in this embodiment of this application, FIG. 29 and FIG. 30 separately show mapping of an AGC symbol and a GAP symbol. It should be understood that mapping of the AGC symbol and mapping of the GAP symbol are independent. In other words, in FIG. 29 and FIG. 30, only mapping of the AGC symbol may be retained, or only mapping of the GAP symbol may be retained, or both the AGC symbol and the GAP symbol may be retained.

The following describes how to map a DMRS, a PSCCH, and a PSSCH when the granularity of the NR information scheduling resource is $2^\mu$ time units. It may be understood that the $2^\mu$ time units may be $2^\mu$ slots or $2^\mu$ logical slots. In the following, an index of a symbol to which the DMRS is mapped is l'. For example, one slot includes 14 symbols, and a value range of l' is {0, 1, 2, ..., 13}. The symbol l' may be a symbol y in a slot x. In this case, x and l' satisfy: $x=\lfloor l'/N_{sym} \rfloor$, and y and l' satisfy: y=l' mod ($N_{sym}$), where $N_{sym}$ indicates a quantity of symbols for transmitting sidelink information in the slot. Slot indexes are {0, 1, 2, ..., $2^\mu$-1}, and symbol indexes are {0, 1, 2, ..., $N_{sym}$-1}. Alternatively, l' indicates a time unit $\lceil l'/N_{sym} \rceil$ in the $2^\mu$ time units, and time unit indexes is {1, 2, ..., $2^\mu$}. Optionally, symbols carrying one PSSCH in the $2^\mu$ PSSCHs transmitted in the $2^\mu$ time units may be adjacent or may not be adjacent. Similarly, symbols carrying one PSCCH in the $2^\mu$ PSCCHs transmitted in the $2^\mu$ time units may be adjacent or may not be adjacent. Details are described in subsequent embodiments by using examples.

First, DMRS mapping is described. A DRMS of a first PSSCH and a DRMS of a non-first PSSCH in the $2^\mu$ time

units have different mapping manners. It should be noted that "first" in this embodiment of this application is a start index. For example, if an index number starts from 0, the first index number is 0. If an index number starts from 1, the first index number is 1. For example, if indexes of a plurality of TBs are numbered from 0, a first TB is a TB 0. Similarly, if indexes of a plurality of PSSCHs are numbered from 0, a first PSSCH is a PSSCH 0.

Mapping manner 1: In $2^{\mu}$ consecutive slots for sending NR information, a PSSCH DMRS of a first PSSCH is mapped to a symbol l', where l' includes $1+2^{\mu}$, $4+2^{\mu}$, $7+2^{\mu}$, and $10+2^{\mu}$; and/or in $2^{\mu}$ consecutive slots for sending NR information, a PSSCH DMRS of a non-first PSSCH is mapped to a symbol l, where l includes 2, 5, 8, and 11. Optionally, l' satisfies $l'=l+2^{\mu}-1$, and l is an index of a symbol to which a DMRS associated with LTE-V information is mapped. $\mu$ indicates a subcarrier spacing.

Specifically, a mapping position of a DRMS of the first PSSCH in the $2^{\mu}$ slots may be described in Table 11. In Table 11, slot indexes are {0, 1, 2, ..., $2^{\mu}-1$}, and symbol indexes are {0, 1, 2, ..., $N_{sym}-1$}. In Table 10, an example in which an SCS supported by an NR-V2X resource pool is 30 kHz is used. The DRMS of the first PSSCH in the $2^{\mu}$ slots is mapped to a symbol l'=3, 6, 9, 12 in a slot 0.

**Table 11**

| $\mu$ | 0 | 1 | 2 | 3 | 4 | 5 |
|---|---|---|---|---|---|---|
| $2^{\mu}$ | 1 | 2 | 4 | 8 | 16 | 32 |
| Subcarrier spacing (kHz) | 15 | 30 | 60 | 120 | 240 | 480 |
| l' | 2, 5, 8, 11 | 3, 6, 9, 12 | 5, 8, 11, 14 | 9, 12, 15, 18 | 17, 20, 23, 26 | 33, 36, 39, 42 |
| Indication content | Symbols 2, 5, 8, and 11 in a slot 0 | Symbols 3, 6, 9, and 12 in a slot 0 | Symbols 5, 8, and 11 in a slot 0 and a symbol 0 in a slot 1 | Symbols 9 and 12 in a slot 0 and symbols 1 and 4 in a slot 1 | Symbols 3, 6, 7, and 12 in a slot 1 | Symbols 5, 8, and 11 in a slot 2 and a symbol 0 in a slot 3 |

For example, continue to refer to FIG. 29. In FIG. 29, the start position of the $2^{\mu}$ AGC symbols is aligned with the start position of the $2^{\mu}$ slots, and the end position of the $2^{\mu}$ GAP symbols is aligned with the end position of the $2^{\mu}$ slots. For a transmission of the LTE information, LTE DRMSs in the $2^{\mu}$ slots are mapped to symbols 2, 5, 8, and 11. For a transmission of the NR information, an NR DRMS of a PSSCH 0 (namely, a first PSSCH) in the $2^{\mu}$ slots is mapped to symbols 3, 6, 9, and 12 in a slot 0 (namely, a first slot) in the $2^{\mu}$ slots, namely, symbols 2, 5, 8, and 11 in a slot corresponding to a TB 0 (namely, a first TB) in the $2^{\mu}$ TBs. In other words, a mapping position of the DMRS of the PSSCH sent by the first NR terminal apparatus is the same as a mapping position of the DMRS of the PSSCH sent by the LTE terminal apparatus. In this way, the LTE terminal apparatus does not need to measure the reference signal by using an NR sidelink reference signal measurement method, so that a requirement for a measurement capability of the LTE terminal apparatus is not additionally increased.

Mapping manner 2: In $2^{\mu}$ consecutive slots for sending NR information, an NR-V DMRS is mapped to a symbol l', where l' includes $1+12\times S+2^{\mu}$, $4+12\times S+2^{\mu}$, $7+12\times S+2^{\mu}$, and $10+12\times S+2^{\mu}$. S is a PSCCH/PSSCH S or a TB S in the $2^{\mu}$ time units, and indexes of S are {0, 1, 2, ..., $2^{\mu}-1$}. $\mu$ indicates a subcarrier spacing.

As an alternative solution, $l'=1+3\times i+2^{\mu}$. Herein, i is a DMRS i in the $2^{\mu}$ consecutive slots for sending the NR information, and an index of i is {0, 1, 2, ..., $2^{\mu+2}-1$}. Alternatively, it may be considered that the symbol l' is the symbol y in the slot x, where x and l' satisfy: $x=\lfloor l'/N_{sym} \rfloor$, and y and l' satisfy: y=l' mod ($N_{sym}$). $N_{sym}$ indicates a quantity of symbols for transmitting sidelink information in a slot. Slot indexes are {0, 1, 2, ..., $2^{\mu}-1$}, and symbol indexes are {0, 1, 2, ..., $N_{sym}-1$}.

In the mapping manner 2, a mapping position of a DRMS of the first PSSCH in the $2^{\mu}$ slots may be described in Table 10. A mapping position of a DRMS of a PSSCH S in the $2^{\mu}$ slots may be described in Table 12. In Table 12, slot indexes are {0, 1, 2, ..., $2^{\mu}-1$}, and symbol indexes are {0, 1, 2, ..., $N_{sym}-1$}.

**Table 12**

| $\mu$ | 0 | 1 | 2 | 3 |
|---|---|---|---|---|
| $2^{\mu}$ | 1 | 2 | 4 | 8 |

(continued)

| μ | 0 | 1 | 2 | 3 |
|---|---|---|---|---|
| Subcarrier spacing (kHz) | 15 | 30 | 60 | 120 |
| l' (S=0) | 2, 5, 8, 11 | 3, 6, 9, 12 | 5, 8, 11, 14 | 9, 12, 15, 18 |
| l' (S=1) | / | 15, 18, 21, 24 | 17, 20, 23, 26 | 21, 24, 27, 30 |
| l' (S=2) | / | / | 29, 32, 35, 38 | 33, 36, 39,42 |
| l' (S=3) | / | / | 41, 44, 47, 50 | 45, 48, 51, 54 |
| l' (S=4) | / | / | / | 57, 60, 63, 66 |
| l' (S=5) | / | / | / | 69, 72, 75, 78 |
| l' (S=6) | / | / | / | 81, 84, 87, 90 |
| l' (S=7) | / | / | / | 93, 96, 99, 102 |

For example, continue to refer to FIG. 29. In FIG. 29, the start position of the $2^{\mu}$ AGC symbols is aligned with the start position of the $2^{\mu}$ slots, and the end position of the $2^{\mu}$ GAP symbols is aligned with the end position of the $2^{\mu}$ slots. For a transmission of the LTE information, LTE DRMSs in the $2^{\mu}$ slots are mapped to symbols 2, 5, 8, and 11. For a transmission of the NR information, an NRDRMS of the PSSCH 0 (namely, the first PSSCH) in the $2^{\mu}$ slots is mapped to symbols 3, 6, 9, and 12 in the slot 0 (namely, the first slot) in the $2^{\mu}$ slots, namely, symbols 2, 5, 8, and 11 in a slot corresponding to the TB 0 (namely, the first TB) in the $2^{\mu}$ TBs. An NR DRMS on a PSSCH 1 (namely, anon-first PSSCH) in the $2^{\mu}$ slots is mapped to symbols 15, 18, 21, and 24 in the $2^{\mu}$ slots, or symbols 1, 4, 7, and 10 in a slot 1 (namely, a non-first slot), namely, symbols 2, 5, 8, and 11 in a slot corresponding to a TB 1 (namely, a non-first TB) in the $2^{\mu}$ TBs. In other words, a mapping position of the DMRS of the PSSCH sent by the first NR terminal apparatus is the same as a mapping position of the DMRS of the PSSCH sent by the LTE terminal apparatus. In this way, the LTE terminal apparatus does not need to measure the reference signal by using an NR sidelink reference signal measurement method, so that a requirement for a measurement capability of the LTE terminal apparatus is not additionally increased.

Mapping manner 3: In $2^{\mu}$ consecutive slots for sending NR information, an NR-V DMRS is mapped to a symbol l, where l includes $S+2\times 2^{\mu}$, $S+5\times 2^{\mu}$, $S+8\times 2^{\mu}$, and $S+11\times 2^{\mu}$. S is a PSCCH/PSSCH S or a TB S in the $2^{\mu}$ time units, and indexes of S are {0, 1, 2, ..., $2^{\mu}$-1}. It may also be understood that, for a DMRS of a PSSCH S in the $2^{\mu}$ time units, the DMRS of the PSSCH S in the $2^{\mu}$ time units is mapped to a symbol l', and S belongs to {0, 1, 2, ..., $2^{\mu}$ - 1}. Optionally, l' satisfies $l'=S+l \times 2^{\mu}$, and l is an index of a symbol to which the DMRS associated with the LTE-V information is mapped.

In an example, a mapping position of a DRMS of a PSSCH 0 (namely, a first PSSCH) in the $2^{\mu}$ slots may be described in Table 13. In Table 13, slot indexes are {0, 1, 2, ..., $2^{\mu}$-1}, and symbol indexes are {0, 1, 2, ..., $N_{sym}$-1}. In Table 13, an example in which an SCS supported by an NR-V2X resource pool is 30 kHz is used, and μ = 1 is used as an example.

**Table 13**

| μ | 0 | 1 | 2 | 3 | 4 | 5 |
|---|---|---|---|---|---|---|
| $2^{\mu}$ | 1 | 2 | 4 | 8 | 16 | 32 |
| Subcarrier spacing (kHz) | 15 | 30 | 60 | 120 | 240 | 480 |
| l' (S=0) | 2, 5, 8, 11 | 4, 10, 16, 22 | 8, 20, 32, 44 | 16, 40, 64, 88 | 32, 80, 128, 176 | 64, 160, 256, 352 |
| Indication content | Symbols 2, 5, 8, and 11 in a slot 0 | Symbols 4 and 10 in a slot 0 and symbols 2 and 8 in a slot 1 | Symbol 8 in a slot 0, a symbol 6 in a slot 1, a symbol 4 in a slot 2, and a symbol 2 in a slot 3 | Symbol 2 in a slot 1, a symbol 12 in a slot 2, a symbol 8 in a slot 4, and a symbol 4 in a slot 6 | Symbol 4 in a slot 2, a symbol 10 in a slot 5, a symbol 2 in a slot 9, and a symbol 8 in a slot 12 | Symbol 8 in a slot 4, a symbol 6 in a slot 11, a symbol 4 in a slot 18, and a symbol 2 in a slot 25 |

As shown in Table 13, in the $2^\mu$ slots for transmitting the NR information, slots for transmitting the PSSCH are a slot 0 and a slot 1. A DRMS of a PSSCH 0 (namely, a first PSSCH) in the two slots is mapped to symbols l'=4, 10, 16, and 22.

Optionally, that l' satisfies l'=2×l may also be understood as that the DRMS of the PSSCH 0 (namely, the first PSSCH) in the two slots is mapped to a symbol 4 and a symbol 10 in the slot 0 and a symbol 2 and a symbol 8 in the slot 1. Similarly, a DRMS of a PSSCH 1 (namely, a non-first PSSCH) in the two slots is mapped to symbols l'=5, 11, 17, and 23. Alternatively, it may be understood that the DRMS of the PSSCH 1 (namely, the non-first PSSCH) in the two slots is mapped to a symbol 5 and a symbol 11 in the slot 0 and a symbol 3 and a symbol 9 in the slot 1. Based on the mapping method in Table 13, the LTE terminal apparatus may also measure the DMRS by using the LTE sidelink reference signal measurement method. In other words, the LTE terminal apparatus does not need to measure the DMRS by using the NR sidelink reference signal measurement method, so that a requirement for a measurement capability of the LTE terminal apparatus is not additionally increased.

In another example, a mapping position of a DRMS of a PSSCH S in the $2^\mu$ slots may be described in Table 14. In Table 14, slot indexes are {0, 1, 2, ..., $2^\mu$-1}, and symbol indexes are {0, 1, 2, ..., $N_{sym}$-1}.

**Table 14**

| μ | 0 | 1 | 2 | 3 |
|---|---|---|---|---|
| $2^\mu$ | 1 | 2 | 4 | 8 |
| Subcarrier spacing (kHz) | 15 | 30 | 60 | 120 |
| l' (S=0) | 2, 5, 8, 11 | 4, 10, 16, 22 | 8, 20, 32, 44 | 16, 40, 64, 88 |
| l' (S=1) | / | 5, 11, 17, 23 | 9, 21, 33, 45 | 17, 41, 65, 89 |
| l' (S=2) | / | / | 10, 22, 34, 46 | 18, 42, 66, 90 |
| l' (S=3) | / | / | 11, 23, 35, 47 | 19, 43, 67, 91 |
| l' (S=4) | / | / | / | 20, 44, 68, 92 |
| l' (S=5) | / | / | / | 21, 45, 69, 93 |
| l' (S=6) | / | / | / | 22, 46, 70, 94 |
| l' (S=7) | / | / | / | 23, 47, 71, 95 |

As shown in Table 14, an example in which an SCS supported by an NR-V2X resource pool is 30 kHz is used. A DRMS of a PSSCH 0 in the $2^\mu$ time units is mapped to symbols l'=4, 10, 16, and 22. A DRMS of a PSSCH 1 in the $2^\mu$ time units is mapped to symbols l'=5, 11, 17, and 23.

For example, continue to refer to FIG. 30. In FIG. 30, the start position of the $2^\mu$ AGC symbols is aligned with the start position of the $2^\mu$ time units, and the end position of the $2^\mu$ GAP symbols is aligned with the end position of the $2^\mu$ time units. For a transmission of the LTE information, LTE DRMSs are mapped to symbols 2, 5, 8, and 11. For a transmission of the NR information, an NR DRMS of a PSSCH 0 in the $2^\mu$ time units is mapped to symbols 4, 10, 16, and 22, and a DRMS of a PSSCH 1 is mapped to symbols 5, 11, 17, and 23. An LTE symbol 2 overlaps with NR symbols 4 and 5 in time domain, an LTE symbol 5 overlaps with NR symbols 10 and 11 in time domain, an LTE symbol 8 overlaps with NR symbols 16 and 17 in time domain, and an LTE symbol 11 overlaps with NR symbols 22 and 23 in time domain. The LTE terminal apparatus also measures the DMRS by using the LTE sidelink reference signal measurement method. In other words, the LTE terminal apparatus does not need to measure the DMRS by using the NR sidelink reference signal measurement method, so that a requirement for a measurement capability of the LTE terminal apparatus is not additionally increased.

$2^\mu$ PSSCHs may be transmitted in the $2^\mu$ time units, and symbols carrying one PSSCH in the $2^\mu$ PSSCHs transmitted in the $2^\mu$ time units may be adjacent or may not be adjacent. For example, still refer to FIG. 29. In two TBs for transmitting NR information, a first TB corresponds to a symbol {0, 2, 3, 4, 5, 6, 7, 8, 9, 10, 11, 12, 13} in a first slot and a symbol 12 in a second slot, and a second TB corresponds to a symbol 1 in the first slot and a symbol {0, 1, 2, 3, 4, 5, 6, 7, 8, 9, 10, 11, 13} in the second slot. It may also be understood that symbols carrying one PSSCH in the $2^\mu$ PSSCHs transmitted in the $2^\mu$ time units may be adjacent.

In this embodiment of this application, a quantity of PSCCHs for scheduling the $2^\mu$ PSSCHs is not limited. For example, $2^\mu$ PSCCHs may be transmitted in the $2^\mu$ time units. Symbols carrying one PSCCH in the $2^\mu$ PSCCHs transmitted in the $2^\mu$ time units may be adjacent or may not be adjacent. For example, still refer to FIG. 30. In two TBs for transmitting NR information, a first TB corresponds to a symbol {0, 2, 4, 6, 8, 10, 12} in a first slot and a symbol {0, 2, 4, 6, 8, 10, 12} in a second slot, and a second TB corresponds to a symbol {1, 3, 5, 7, 9, 11, 13} in the first slot and a symbol {1, 3, 5, 7, 9, 11, 13} in the second slot. It may also be understood that symbols carrying one PSSCH in the $2^{\mu}$ PSSCHs transmitted in the $2^{\mu}$ time units may not be adjacent.

In an example, one PSCCH and $2^{\mu}$ PSSCHs may be transmitted in the $2^{\mu}$ time units. In other words, the one PSCCH and the $2^{\mu}$ PSSCHs exist in the $2^{\mu}$ time units. It may also be understood that the one PSCCH schedules the $2^{\mu}$ PSSCHs in the $2^{\mu}$ time units for sending the NR information. In this case, the $2^{\mu}$ PSSCHs may correspond to a same sending terminal. SCI carried by the one PSCCH corresponding to the $2^{\mu}$ PSSCHs indicates source ID information, and a MAC CE carried by each PSSCH in the $2^{\mu}$ PSSCHs indicates destination ID information. For example, the SCI carried by the one PSCCH may carry some or all bits of a source layer-2 ID, and the MAC CE carried by each PSSCH in the $2^{\mu}$ PSSCHs may carry some or all bits of the ID.

Optionally, the first NR terminal apparatus may send a PSCCH in an LTE-V format and/or a PSSCH in an NR-V format in the $2^{\mu}$ time units according to the foregoing first communication method. The first NR terminal apparatus may also send a PSCCH in an NR-V format and/or a PSSCH in an NR-V format in the $2^{\mu}$ time units according to the foregoing second communication method. The LTE terminal apparatus sends a PSCCH and/or a PSSCH in an LTE-V format in the $2^{\mu}$ time units.

In another example, $2^{\mu}$ PSCCHs and $2^{\mu}$ PSSCHs may be transmitted in the $2^{\mu}$ time units, and one PSCCH corresponds to one PSSCH. In other words, the $2^{\mu}$ PSCCHs and the $2^{\mu}$ PSSCHs exist in the $2^{\mu}$ time units. One PSCCH schedules one PSSCH. The following describes a mapping manner of the $2^{\mu}$ PSCCHs and a mapping manner of the $2^{\mu}$ PSSCHs in the $2^{\mu}$ time units by using a time unit as a slot.

In a possible implementation, a PSCCH S in the $2^{\mu}$ PSCCHs may be located in a slot $\lfloor l_c/N_{sym} \rfloor$ and/or a symbol $l_c$ mod ($N_{sym}$) in the $2^{\mu}$ slots. Herein, lc indicates the slot $\lfloor l_c/N_{sym} \rfloor$ and/or the symbol $l_c$ mod ($N_{sym}$) in the $2^{\mu}$ slots, slot indexes are {0, 1, 2, ..., $2^{\mu}$-1}, and symbol indexes are {0, 1, 2, ..., $N_{sym}$-1}. S belongs to {0, 1, 2, ..., $2^{\mu}$-1}. Optionally, $N'_{sym} = N_{sym} - 2$. $N'_{sym}$ may be a quantity of remaining symbols in one slot other than one or more of the following symbols: an AGC symbol, a GAP symbol, or a symbol in which a feedback resource is located. For example, $N'_{sym}$ may be a quantity of symbols for a PSCCH in a slot. Optionally, a symbol S is used for AGC, and content of a symbol S+$2^{\mu}$ is copied.

A mapping position of a PSCCH/PSSCH S in the $2^{\mu}$ PSCCHs/PSSCHs also varies according to whether the symbol carrying the PSSCH is an adjacent symbol or a non-adjacent symbol. The following uses a specific example for description.

PSCCH mapping example 1: A PSCCH S in the $2^{\mu}$ PSCCHs is mapped to a symbol lc, where lc includes at least one of $\{S,\ 2^{\mu} + S \times N'_{sym},\ 2^{\mu} + S \times N'_{sym} + 1, 2^{\mu} + S \times N'_{sym} + 2\}$. Correspondingly, when the first NR terminal apparatus transmits the SCI in the LTE-V format, namely, when the first NR terminal apparatus sends the SCI by using the foregoing first communication method, the PSCCH S in the $2^{\mu}$ PSCCHs is mapped to the symbol lc, where lc includes at least one of $\{S,\ 2^{\mu} + S \times N'_{sym},\ 2^{\mu} + S \times N'_{sym} + 1, 2^{\mu} + S \times N'_{sym} + 2, \ldots, 2^{\mu} + (S + 1) \times N'_{sym} - 1\}$. $N'_{sym}$ may be a quantity of symbols for a PSSCH in one slot. $N'_{sym}$ belongs to {0, 1, 2, 3, 4, 5, 6, 7, 8, 9, 10, 11, 12, 13, 14}. Optionally, the symbol S is used for AGC, and content of a PSCCH of a symbol $2^{\mu} + S \times N'_{sym}$ is copied. Optionally, the first NR terminal apparatus transmits the SCI in the NR-V format. In other words, the first NR terminal apparatus sends the SCI by using the foregoing third communication method.

For example, FIG. 29 is used as an example. In two consecutive slots for sending NR information, indexes of slots for sending a PSCCH are 0 and 1. A PSCCH 0 schedules a PSSCH 0, and a PSCCH 1 schedules a PSSCH 1. When the first NR terminal apparatus transmits the SCI in the NR-V format, the PSCCH 0 is mapped to at least one symbol in indexes {0, 2, 3, 4}. For example, the PSCCH 0 is mapped to a symbol 0, a symbol 2, a symbol 3, and a symbol 4 in a slot 0. The symbol 0 is an AGC symbol, and content of a PSCCH in the symbol 2 is copied. The PSCCH 1 is mapped to at least one symbol whose index is {1, 14, 15, 16}. For example, the PSCCH 1 is mapped to a symbol 1 in the slot 0 and a symbol 0, a symbol 1, a symbol 2, and a symbol 3 in a slot 1. The symbol 1 is an AGC symbol, and content of a PSCCH in a symbol 14 is copied. When the first NR terminal apparatus transmits the SCI in the LTE-V format, the PSCCH 0 is mapped to at least one symbol whose index is {0, 2, 3, 4, 5, 6, 7, 8, 9, 10, 11, 12, 13}, and the PSCCH 0 is mapped to a symbol {0, 2, 3, 4, 5, 6, 7, 8, 9, 10, 11, 12, 13} in the slot 0. The symbol 0 is an AGC symbol, and content of a PSCCH in the symbol 2 is copied. The PSCCH 1 is mapped to at least one symbol whose index is {1, 14, 15, 16, 17, 18, 19, 20, 21, 22, 23, 24, 25}, and the PSCCH 1 is mapped to the symbol 1 in the slot 0 and a symbol {0, 1, 2, 3, 4, 5, 6, 7, 8, 9, 10, 11} in the slot 1. The symbol 1 is an AGC symbol, and content of the PSCCH in the symbol 14 is copied.

PSCCH mapping example 2: A PSCCH S in the $2^{\mu}$ PSCCHs is mapped to lc, where lc includes at least one of {S, $2^{\mu}$ + S, 2 × $2^{\mu}$ + S, 3 × $2^{\mu}$ + S}. Correspondingly, when the first NR terminal apparatus transmits the SCI in the LTE-V format, namely, when the first NR terminal apparatus sends the SCI by using the foregoing first communication method, the PSCCH S in the $2^{\mu}$ PSCCHs is mapped to lc, where lc includes at least one of {S, $2^{\mu}$ + S, 2×$2^{\mu}$ + S, 3×$2^{\mu}$ + $S, \ldots, N'_{\mathrm{sym}} \times 2^{\mu} + S\}$. $N'_{\mathrm{sym}}$ may be a quantity of symbols for a PSSCH in one slot. $N'_{sym}$ belongs to {0, 1, 2, 3, 4, 5, 6, 7, 8, 9, 10, 11, 12, 13, 14}. Optionally, the symbol S is used for AGC, and content of a PSCCH of a symbol $2^{\mu}$ + S is copied. Optionally, the first NR terminal apparatus transmits the SCI in the NR-V format. In other words, the first NR terminal apparatus sends the SCI by using the foregoing third communication method.

FIG. 30 is used as an example. In two consecutive slots for sending NR information of slots for sending a PSCCH are 0 and 1. A PSCCH 0 schedules a PSSCH 0, and a PSCCH 1 schedules a PSSCH 1. The PSCCH 0 is mapped to at least one symbol whose index is {0, 2, 4, 6, 8, 10, 12, 14, 16, 18, 20, 22, 24}. For example, the PSCCH 0 is mapped to a symbol {0, 2, 4, 6, 8, 10, 12, 14, 16, 18, 20, 22, 24}. The symbol 0 is used for AGC, and content of a PSCCH of a symbol 2 is copied. The PSCCH 1 is mapped to at least one symbol whose index is {1, 3, 5, 7, 9, 11, 13, 15, 17, 19, 21, 23, 25}. The PSCCH 1 is mapped to a symbol {1, 3, 5, 7, 9, 11, 13, 15, 17, 19, 21, 23, 25}. The symbol 1 is used for AGC, and content of a PSCCH of a symbol 3 is copied.

PSSCH mapping example 1: APSSCH S in the $2^{\mu}$ PSSCHs is mapped to a symbol lc, where lc includes at least one of $\{S,\ 2^{\mu} + S \times N'_{\mathrm{sym}},\ 2^{\mu} + S \times N'_{\mathrm{sym}} + 1, 2^{\mu} + S \times N'_{\mathrm{sym}} + 2, \ldots, 2^{\mu} +\ (S+1) \times N'_{\mathrm{sym}} - 1\}$. $N'_{\mathrm{sym}}$ may be a quantity of symbols for a PSSCH in one slot. $N'_{sym}$ belongs to {0, 1, 2, 3, 4, 5, 6, 7, 8, 9, 10, 11, 12, 13, 14}. Optionally, the symbol S is used for AGC, and content of a PSSCH of a symbol $2^{\mu} + S \times N'_{\mathrm{sym}}$ is copied. Optionally, the first NR terminal apparatus transmits the SCI in the NR-V format or the LTE-V format. In other words, the first NR terminal apparatus sends the SCI by using the first communication method.

For example, FIG. 29 is used as an example. In two consecutive slots for sending NR information, indexes of slots for sending a PSSCH are 0 and 1. APSCCH 0 schedules a PSSCH 0, and a PSCCH 1 schedules a PSSCH 1. The PSSCH 0 is mapped to at least one symbol whose index is {0, 2, 3, 4, 5, 6, 7, 8, 9, 10, 11, 12, 13}. For example, the PSSCH 0 is mapped to a symbol {0, 2, 3, 4, 5, 6, 7, 8, 9, 10, 11, 12, 13} in the slot 0. The symbol 0 is an AGC symbol, and content of a PSSCH in a symbol 2 is copied. The PSSCH 1 is mapped to at least one symbol whose index is {1, 14, 15, 16, 17, 18, 19, 20, 21, 22, 23, 24, 25}. For example, the PSSCH 1 is mapped to the symbol 1 in the slot 0 and a symbol {0, 1, 2, 3, 4, 5, 6, 7, 8, 9, 10, 11} in the slot 1. The symbol 1 is an AGC symbol, and content of a PSSCH in a symbol 14 is copied.

PSSCH mapping example 2: APSSCH Sin the $2^{\mu}$ PSSCHs is mapped to a symbol lc, where lc includes at least one of $\{S,\ 2^{\mu} + S,\ 2 \times 2^{\mu} + S, 3 \times 2^{\mu} + S, \ldots, N'_{\mathrm{sym}} \times 2^{\mu} + S\}$. $N'_{\mathrm{sym}}$ may be a quantity of symbols for a PSSCH in one slot. $N'_{sym}$ belongs to {0, 1, 2, 3, 4, 5, 6, 7, 8, 9, 10, 11, 12, 13, 14}. Optionally, the symbol S is used for AGC, and content of a PSSCH of a symbol $2^{\mu} + S \times N'_{\mathrm{sym}}$ is copied. Optionally, when the first NR terminal apparatus transmits the SCI in the NR-V format or the LTE-V format, the first NR terminal apparatus sends the SCI in the first communication method.

For example, FIG. 30 is used as an example. In two consecutive slots for sending NR information, indexes of slots for sending a PSSCH are 0 and 1. APSCCH 0 schedules a PSSCH 0, and a PSCCH 1 schedules a PSSCH 1. The PSSCH 0 is mapped to at least one symbol whose index is {0, 2, 4, 6, 8, 10, 12, 14, 16, 18, 20, 22, 24}. For example, the PSSCH 0 is mapped to a symbol {0, 2, 4, 6, 8, 10, 12} in the slot 0 and a symbol {0, 2, 4, 6, 8, 10, 12} in the slot 1. The symbol 0 is an AGC symbol, and content of a PSSCH in a symbol 2 is copied. The PSSCH 1 is mapped to at least one symbol whose index is {1, 3, 5, 7, 9, 11, 13, 15, 17, 19, 21, 23, 25}. For example, the PSSCH 1 is mapped to a symbol {1, 3, 5, 7, 9, 11, 13} in the slot 0 and a symbol {1, 3, 5, 7, 9, 11, 13} in the slot 1. The symbol 1 is an AGC symbol, and content of a PSSCH in a symbol 2 is copied.

It should be noted that, in this embodiment of this application, FIG. 29 and FIG. 30 separately show mapping of an AGC symbol, a GAP symbol, a PSSCH, a PSCCH, a DMRS, and the like. It should be understood that mapping of the AGC symbol, the GAP symbol, the PSSCH, and the PSCCH is independent of each other. In other words, FIG. 29 and FIG. 30 may retain one or more of the following: an AGC symbol, a GAP symbol, a PSSCH, a PSCCH, and a DMRS.

It should be noted that the network device may configure a subcarrier spacing of 15 kHz on a time domain resource, for example, a slot or a subframe, in the LTE-V resource pool, and a subcarrier spacing configured on a time domain resource in the NR-V resource pool other than an LTE-V resource may be one or more of {15, 30, 60, 120, 240, 480} kHz. Optionally, a subcarrier spacing of 15 kHz is configured in the NR-V resource pool by default. Optionally, a subcarrier spacing other than the subcarrier spacing of 15 kHz is configured in the NR-V resource pool by default. For example, one or more subcarrier spacings in {30, 60, 120, 240, 480} kHz are configured. For example, FIG. 31 is a diagram of subcarrier spacing configuration in an LTE-V resource pool and an NR-V resource pool. As shown in FIG. 31, a subcarrier spacing corresponding to the LTE-V resource pool is 15 kHz, and subcarrier spacings corresponding to the NR-V resource pool are 15 kHz and 30 kHz. A slot 1 and a slot 2 in the NR-V resource pool are used as an example. The slot 2 belongs to the LTE-V resource pool, and the slot 1 does not belong to the LTE-V resource pool. In the NR-V resource pool, a subcarrier spacing corresponding to the slot 1 is 30 kHz, and a subcarrier spacing corresponding to the slot 2 is 15 kHz.

It should be noted that the procedure shown in FIG. 21 may be combined with one or more procedures shown in FIG. 10, FIG. 13, and FIG. 18, and a specific step execution sequence is not limited. For example, the first terminal apparatus may perform S2101 and S2102 after performing S1001 and S1002; or the first terminal apparatus may perform S1001 and S1002 after performing S2101 and S2102. For another example, the first terminal apparatus may perform S2101 and S2102 after performing S1001; or the first terminal apparatus may perform S1001 after performing S2101 and S2102. For another example, the first terminal apparatus may perform S2101 and S2102 after performing S1301 and S1302; or the first terminal apparatus may perform S1301 and S1302 after performing S2101 and S2102. For another example, the first terminal apparatus may perform S2101 and S2102 after performing S1301; or the first terminal apparatus may perform S1301 after performing S2101 and S2102. For example, the first terminal apparatus may perform S1801 and S1802 after performing S2101 and S2102; the first terminal apparatus may perform S2101 and S2102 after performing S1801 and S1802; or the first terminal apparatus may perform S1802 and S2102 after performing S1801 and S2101. For another example, the first terminal apparatus may perform S2101 and S2102 after performing S1001 and S1301.

In embodiments provided in this application, the methods provided in embodiments of this application are described from a perspective of interaction between an NR terminal apparatus and an LTE terminal apparatus. To implement functions in the method provided in the foregoing embodiments of this application, the first terminal apparatus and the second terminal apparatus may include a hardware structure and/or a software module, to implement the functions in a form of the hardware structure, the software module, or a combination of the hardware structure and the software module. Whether one of the foregoing functions is performed in the manner of a hardware structure, a software module, or a hardware structure and a software module depends on a specific application and design constraints of the technical solutions.

An embodiment of this application further provides a communication apparatus. The following describes, with reference to the accompanying drawings, communication apparatuses configured to implement the foregoing methods in embodiments of this application.

FIG. 32 is a block diagram of a communication apparatus 3200 according to an embodiment of this application. The communication apparatus 3200 may include a processing module 3210 and a transceiver module 3220. Optionally, a storage unit may be further included. The storage unit may be configured to store instructions (code or a program) and/or data. The processing module 3210 and the transceiver module 3220 may be coupled to the storage unit. For example, the processing module 3210 may read the instructions (the code or the program) and/or the data in the storage unit, to implement a corresponding method. The foregoing units may be independently disposed, or may be partially or completely integrated.

In some possible implementations, the communication apparatus 3200 can correspondingly implement behavior and functions of the first NR terminal apparatus in the foregoing method embodiments. The communication apparatus 3200 may be the first NR terminal apparatus, or may be a component (for example, a chip or a circuit) used in the first terminal apparatus, or may be a chip, a chipset, or a part for performing a related method function in a chip in the first NR terminal apparatus. In some other possible implementations, the communication apparatus 3200 can correspondingly implement behavior and functions of the LTE terminal apparatus in the foregoing method embodiments. The communication apparatus 3200 may be the LTE terminal apparatus, or may be a component (for example, a chip or a circuit) used in the LTE terminal apparatus, or may be a chip, a chipset, or a part for performing a related method function in a chip in the LTE terminal apparatus.

For example, the communication apparatus 3200 implements the method performed by the first NR terminal apparatus in the embodiment in FIG. 8. The processing module 3210 may be configured to determine first sidelink control information. The transceiver module 3220 may be configured to send the first sidelink control information. The first sidelink control information indicates that a data channel associated with the first sidelink control information carries NR information. The first sidelink control information is used by the LTE terminal apparatus to select a resource. The NR information is transmitted on the resource in the first resource set. The resource in the first resource set is further used to transmit the LTE information. Correspondingly, the communication apparatus 3200 implements the method performed by the LTE terminal apparatus in the embodiment in FIG. 8. The transceiver module 3220 may be configured to receive the first sidelink control information. The processing module 3210 may be configured to determine, based on the first sidelink control information, a candidate resource for transmitting LTE information. The first sidelink control information indicates that a data channel associated with the first sidelink control information carries NR information. The first sidelink control information is used by the LTE terminal apparatus to select a resource. The NR information is transmitted on the resource in the first resource set. The resource in the first resource set is further used to transmit the LTE information.

In an optional implementation, the first sidelink control information indicates, by using at least one of the following, that the data channel associated with the first sidelink control information carries the NR information: a reserved index value of an MCS field, a reserved value of a resource reservation field, or at least one reserved bit.

In an optional implementation, the first sidelink control information further includes a retransmission field and/or a transmit format indication field, and that the first sidelink control information indicates that the data channel associated with the first sidelink control information carries the NR information includes: The first sidelink control information indicates an $i^{th}$ transmission of the NR information, where i is an integer greater than or equal to 1.

In an optional implementation, the reserved value of the resource reservation field indicates that a resource reservation period of the NR information is 2 ms, 5 ms, or 10 ms.

For another example, the communication apparatus 3200 implements the method performed by the first NR terminal apparatus in the embodiment in FIG. 10. The processing module 3210 may be configured to determine a reference signal associated with the NR information. The transceiver module 3220 may be configured to send the reference signal on the first resource in the first resource set. Correspondingly, the communication apparatus 3200 implements the method performed by the LTE terminal apparatus in the embodiment in FIG. 10. The transceiver module 3220 may be configured to receive the reference signal on the first resource in the first resource set according to a first mapping rule. The reference signal is associated with the NR information. A resource in the first resource set is further used to transmit LTE information. The reference signal is mapped to the first resource according to the first mapping rule. The first mapping rule may be used by the LTE terminal apparatus to determine a mapping position of the reference signal associated with the NR information. It may also be understood as that the first mapping rule may be used by the LTE terminal apparatus to select a resource.

In an optional implementation, when a subcarrier spacing of resources for transmitting NR information in the first resource set is different from a subcarrier spacing of resources for transmitting LTE information in the first resource set, the resource for transmitting the LTE information is preconfigured or is indicated by a network device to support only a transmission of a non-adjacent PSCCH or PSSCH, or the resource for transmitting the LTE information is preconfigured or is indicated by a network device to support only a transmission of an adjacent PSCCH or PSSCH.

In an optional implementation, the processing module 3210 is further configured to obtain configuration information, where the configuration information may indicate the first mapping rule. The configuration information may be predefined or preconfigured or may be indicated by the network device. Optionally, the configuration information includes capability information of the NR terminal apparatus.

For another example, the communication apparatus 3200 implements the method performed by the first NR terminal apparatus in the embodiment in FIG. 18. The processing module 3210 may be configured to obtain LTE sidelink control information, and determine, from the first resource set based on the LTE sidelink control information and signal strength information, a resource for transmitting NR information. Correspondingly, the communication apparatus 3200 implements the method performed by the LTE terminal apparatus in the embodiment in FIG. 18. The processing module 3210 may be configured to determine the LTE sidelink control information. The transceiver module 3220 may be configured to send the LTE sidelink control information on a second resource in the first resource set. The LTE sidelink control information indicates the second resource in the first resource set, and the second resource includes a resource occupied by LTE information and/or reserved for LTE information. A resource in the first resource set is further used to transmit NR information. The signal strength information indicates a signal strength of the second resource.

In an optional implementation, the processing module 3210 is specifically configured to exclude the second resource from a candidate resource set when the signal strength of the second resource is greater than or equal to a signal strength threshold.

In an optional implementation, the processing module 3210 is specifically configured to exclude a third resource from a candidate resource set when the signal strength of the second resource is greater than or equal to a signal strength threshold, where the third resource is all resources in a slot in which the second resource is located.

In an optional implementation, the processing module 3210 is specifically configured to exclude a fourth resource from a candidate resource set when the signal strength of the second resource is greater than or equal to a signal strength threshold, where the fourth resource is all resources in a subframe in which the second resource is located.

In an optional implementation, the communication apparatus 3200 is configured to implement a function of the first NR terminal apparatus. The processing module 3210 is further configured to send the NR information based on the capability information. The capability information indicates one or more of the following: whether a capability of blindly detecting NR information and/or a capability of blindly detecting LTE information is available; a maximum quantity of pieces of NR sidelink control information and/or LTE sidelink control information blindly detected in a time unit; whether a transmission of NR information and a transmission of LTE information are supported in a same time unit or different time units; or whether a transmission of NR information and a transmission of LTE information are supported in a same frequency domain unit or different frequency domain units.

For another example, the communication apparatus 3200 implements the method performed by the first NR terminal apparatus in the embodiment in FIG. 21. The processing module 3210 may be configured to obtain configuration information, and determine, based on the configuration information, a resource for transmitting NR information. The communication apparatus 3200 implements the method performed by the LTE terminal apparatus in the embodiment in FIG. 21. The processing module 3210 may be configured to obtain configuration information, and determine, based on the configuration information, a resource for transmitting LTE information. The configuration information is used to configure the first resource set. The first resource set is used by the NR terminal apparatus to transmit NR information. The resource in the first resource set is further used to transmit LTE information. A time unit for transmitting the LTE information in the first resource set does not include (configure or preconfigure) a time unit for transmitting feedback information.

In an optional implementation, the first resource set includes a second resource set. The second resource set is used to transmit LTE information. The second resource set does not include a resource for transmitting feedback information. An index of a time unit for transmitting LTE information in the second resource set is k. When k satisfies $\mathbf{k \bmod (N_{PSFCH} - \mathit{p}) = N_{PSFCH} - \mathit{p} - 1}$, one time unit for transmitting NR information is included (configured or preconfigured) after the time unit k. When k satisfies $\mathbf{k \bmod (N_{PSFCH} - \mathit{p}) = 0}$, one time unit for transmitting NR information is included (configured or preconfigured) before the time unit k. $\mathbf{N_{PSFCH}}$ is a period of a resource for transmitting feedback information in the first resource set, and p is an integer less than or equal to $\mathbf{N_{PSFCH}}$.

In an optional implementation, $\mathbf{2^{\mu}}$ time units for transmitting the NR information are included (configured or preconfigured) between two adjacent time units for transmitting the LTE information. A quantity of time units including feedback resources in the $\mathbf{2^{\mu}}$ time units for transmitting the NR information is n, n includes 1, and $\mu$ indicates a subcarrier spacing. It may be understood that the time unit including the feedback resource is a first time unit that is used to transmit the NR information and that is after the time unit for transmitting the LTE information, or the time unit including the feedback resource is a first time unit for transmitting the NR information in the $\mathbf{2^{\mu}}$ time units for transmitting the NR information.

In an optional implementation, the transceiver module 3220 is further configured to send a DMRS in the $\mathbf{2^{\mu}}$ time units for transmitting the NR information. A DMRS i in the $\mathbf{2^{\mu}}$ time units is mapped to a symbol l'=1+3xi+$\mathbf{2^{\mu}}$, and i belongs to {0, 1, 2, ..., $\mathbf{2^{\mu+2}}$-1}.

FIG. 33 is a block diagram of a communication apparatus 3300 according to an embodiment of this application. The communication apparatus 3300 may be a terminal device, and can implement a function of the first NR terminal apparatus or the LTE terminal apparatus in the method provided in embodiments of this application. Alternatively, the communication apparatus 3300 may be an apparatus that can support the first NR terminal apparatus or the LTE terminal apparatus in implementing a corresponding function in the method provided in embodiments of this application. The communication apparatus 3300 may be a chip system. In this embodiment of this application, the chip system may include a chip, or may include a chip and another discrete component. For a specific function, refer to the descriptions in the foregoing method embodiments.

The communication apparatus 3300 includes one or more processors 3301, configured to implement or support the communication apparatus 3300 in implementing a function of the first NR terminal apparatus or the LTE terminal apparatus in the method provided in embodiments of this application. For details, refer to the detailed descriptions in the method example. Details are not described herein again. The processor 3301 may also be referred to as a processing unit or a processing module, and may implement a specific control function. The processor 3301 may be a general-purpose processor, a dedicated processor, or the like, for example, a central processing unit, an application processor, a modem processor, a graphics processing unit, an image signal processor, a digital signal processor, a video codec processor, a controller, a memory, a neural network processing unit, and/or the like. The central processing unit may be configured to control the communication apparatus 3300, execute a software program, and/or process data. Different processors may be independent components, or may be integrated into one or more processors, for example, integrated into one or more application-specific integrated circuits.

Optionally, the communication apparatus 3300 includes one or more memories 3302, configured to store an instruction 3304. The instruction may be run on the processor 3301, so that the communication apparatus 3300 performs the method described in the foregoing method embodiment. The memory 3302 is coupled to the processor 3301. The coupling in this embodiment of this application is indirect coupling or a communication connection between apparatuses, units, or modules for information exchange between the apparatuses, the units, or the modules, and may be in electrical, mechanical, or other forms. The processor 3301 may cooperate with the memory 3302. At least one of the at least one memory may be included in the processor. It should be noted that the memory 3302 is not mandatory, and therefore is shown by using a dashed line in FIG. 33.

Optionally, the memory 3302 may further store data. The processor and the memory may be separately disposed, or may be integrated together. In this embodiment of this application, the memory 3302 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction structure or a data structure and that can be accessed by a computer, but is not limited thereto. The memory in this embodiment of this application may alternatively be a circuit or any other apparatus that can implement a storage function, and is configured to store program instructions and/or data.

Optionally, the communication apparatus 3300 may include an instruction 3303 (which may also be referred to as code or a program sometimes). The instruction 3303 may be run on the processor, so that the communication apparatus 3300 performs the method described in the foregoing embodiment. The processor 3301 may store data.

Optionally, the communication apparatus 3300 may further include a transceiver 3305 and an antenna 3306. The transceiver 3305 may be referred to as a transceiver unit, a transceiver module, a transceiver machine, a transceiver circuit, a transceiver, an input/output interface, or the like, and is configured to implement a transceiver function of the communication apparatus 3300 by using the antenna 3306.

The processor 3301 and the transceiver 3305 described in this application may be implemented in an integrated circuit (integrated circuit, IC), an analog IC, a radio frequency integrated circuit (radio frequency integrated circuit, RFIC), a mixed-signal IC, an ASIC, a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 3300 may further include one or more of the following components: a wireless communication module, an audio module, an external memory interface, an internal memory, a universal serial bus (universal serial bus, USB) port, a power management module, an antenna, a speaker, a microphone, an input/output module, a sensor module, a motor, a camera, a display, or the like. It may be understood that in some embodiments, the communication apparatus 3300 may include more or fewer components, or some components are integrated, or some components are split. These components may be implemented by hardware, software, or a combination of software and hardware.

It should be noted that the communication apparatus in the foregoing embodiment may be the first NR terminal apparatus (or the LTE terminal apparatus), or may be a circuit, or may be a chip used in the first NR terminal apparatus (or the LTE terminal apparatus), or may be another combined part or component having the first NR terminal apparatus (or the LTE terminal apparatus), or the like. When the communication apparatus is the first NR terminal apparatus (or the LTE terminal apparatus), the transceiver module may be a transceiver, and may include an antenna, a radio frequency circuit, and the like. The processing module may be a processor, for example, a central processing unit (central processing unit, CPU). When the communication apparatus is a component having a function of the first terminal device (or the network device), the transceiver module may be a radio frequency unit, and the processing module may be the processor. When the communication apparatus is a chip system, the communication apparatus may be a field programmable gate array (field programmable gate array, FPGA), an application specific integrated chip (application specific integrated circuit, ASIC), a system on chip (system on chip, SoC), a CPU, a network processor (network processor, NP), a digital signal processor (digital signal processor, DSP), a microcontroller unit (microcontroller unit, MCU), a programmable logic device (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes at least one first terminal apparatus, or may include at least one first NR terminal apparatus and at least one LTE terminal apparatus, or may further include at least one network device. For example, the communication system includes a first NR terminal apparatus and an LTE terminal apparatus that are configured to implement related functions of one or more of FIG. 10, FIG. 13, FIG. 18, and FIG. 21. For details, refer to the related descriptions in the method embodiments. Details are not described herein again.

An embodiment of this application further provides a computer-readable storage medium, including instructions. When the instructions are run on a computer, the computer is enabled to perform the method performed by the first NR terminal apparatus in one or more of FIG. 10, FIG. 13, FIG. 18, and FIG. 21. Alternatively, when the instructions are run on a computer, the computer is enabled to perform the method performed by the LTE terminal apparatus in one or more of FIG. 10, FIG. 13, FIG. 18, and FIG. 21.

An embodiment of this application further provides a computer program product, including instructions. When the instructions are run on a computer, the computer is enabled to perform the method performed by the first NR terminal apparatus in one or more of FIG. 10, FIG. 13, FIG. 18, and FIG. 21. Alternatively, when the instructions are run on a computer, the computer is enabled to perform the method performed by the LTE terminal apparatus in one or more of FIG. 10, FIG. 13, FIG. 18, and FIG. 21.

An embodiment of this application provides a chip system. The chip system includes a processor, and may further include a memory, configured to implement functions of the LTE terminal apparatus or the first NR terminal apparatus in the foregoing method, or configured to implement functions of the network device and the terminal in the foregoing method. The chip system may include a chip, or include a chip and another discrete component.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part with contributions, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium, for example, a USB flash drive, a removable hard disk, a read-only memory (read-only memory, ROM), a RAM, a magnetic disk, or an optical disc, that can store program code.

It is clear that a person skilled in the art may make various modifications and variations to this application. This application is intended to cover these modifications and variations of this application provided that they fall within the scope of protection defined by the following claims and their equivalent technologies.

## Claims

**1.** A communication method, comprising:

determining first sidelink control information, wherein the first sidelink control information indicates that a data channel associated with the first sidelink control information carries new radio NR information, the first sidelink control information is used by a long term evolution LTE terminal apparatus to select a resource, the NR information is transmitted by using a resource in a first resource set, and the resource in the first resource set is further used to transmit LTE information; and
sending the first sidelink control information.

2. The method according to claim 1, wherein the first sidelink control information indicates, by using at least one of the following, that the data channel associated with the first sidelink control information carries the NR information:
a reserved index value of a modulation and coding scheme MCS field, a reserved value of a resource reservation field, or at least one reserved bit.

3. The method according to claim 2, wherein the first sidelink control information further comprises a retransmission field and/or a transmit format indication field, and that the first sidelink control information indicates that the data channel associated with the first sidelink control information carries the NR information comprises:
the first sidelink control information indicates an $i^{th}$ transmission of the NR information, wherein i is an integer greater than or equal to 1.

4. The method according to claim 2 or 3, wherein the reserved value of the resource reservation field indicates that a resource reservation period of the NR information is 2 ms, 5 ms, or 10 ms.

5. The method according to any one of claims 2 to 4, wherein the at least one reserved bit indicates one or more of the following:

some or all bits of a source identity;
some or all bits of a destination identity;
a modulation and demodulation reference signal DMRS pattern;
a quantity of ports of the data channel associated with the first sidelink control information;
an additional MCS table; or
a quantity of symbols occupied by a physical sidelink feedback channel PSFCH.

6. The method according to any one of claims 1 to 5, wherein the first sidelink control information further comprises one or more of the following fields:

a frequency domain resource position field for indicating frequency domain resource position information of the $i^{th}$ transmission and an $(i+1)^{th}$ transmission of the NR information, wherein i is an odd number or an even number, and the $(i+1)^{th}$ transmission is a retransmission of the $i^{th}$ transmission;
a time gap field for indicating a time domain resource gap between the $i^{th}$ transmission and an $(i+1)^{th}$ transmission of the NR information, wherein i is an odd number or an even number, and the $(i+1)^{th}$ transmission is a retransmission of the $i^{th}$ transmission; or
a retransmission index field for indicating an initial transmission or the $i^{th}$ transmission of the NR information, wherein i is an odd number or an even number.

7. The method according to any one of claims 1 to 6, wherein the method further comprises:
sending a first TB by using a first period, and sending a second TB by using a second period, wherein service data associated with the first TB and the second TB belongs to service data associated with a third TB, a period of the third TB is a third period, and the third period is less than the first period or the second period.

8. The method according to any one of claims 1 to 7, wherein the method further comprises:
sending, on a first resource in the first resource set, a reference signal associated with the NR information, wherein the reference signal is mapped to the first resource according to a first mapping rule, and the first mapping rule comprises one or more of the following:

the NR information is a physical sidelink control channel PSCCH and/or a physical sidelink shared channel PSSCH, and the reference signal of the NR information is located on a symbol 2 and a symbol 5 in a time unit k and a symbol 1 and a symbol 4 in a time unit k+1;
the NR information is a PSCCH and/or a PSSCH, and the reference signal of the NR information is located on a symbol 2, a symbol 5, a symbol 8, and a symbol 11 in a time unit, wherein k is an integer greater than or equal to 1;

the NR information is a physical sidelink control channel PSBCH, and the reference signal of the NR information is located on a symbol 4 and a symbol 6 in a time unit k and a symbol 2 in a time unit k+1;
the NR information is a PSBCH, and the reference signal of the NR information is located on a symbol 4, a symbol 6, and a symbol 9 in a time unit, wherein k is an integer greater than or equal to 1;
the NR information is a PSCCH and/or a PSSCH, and duration of a scheduling resource for the NR information satisfies $l_d = N_{symb}^{slot} - N_{LTEDM-RS} - 1$, wherein $N_{symb}^{slot}$ is a quantity of symbols for transmitting the NR information in one slot, $N_{LTEDM-RS}$ is a quantity of symbols for transmitting a reference signal of LTE information in one slot, and an index of a symbol for transmitting the NR information in each slot satisfies $\bar{l} = \{0, 1, 2, \ldots, N_{symb}^{slot} - N_{LTEDM-RS} - 1\}$; or
the NR information is a PSCCH and/or a PSSCH, and duration $l_d$ of a scheduling resource for the NR information belongs to {1, 2, ..., $N_{symb}^{slot}$ - 1}, wherein $N_{symb}^{slot}$ is a quantity of symbols for transmitting the NR information in one slot, and an index of a symbol for transmitting the NR information in each slot satisfies $\bar{l} = \{0, 1, 2, \ldots, N_{symb}^{slot} - 1\}$.

**9.** The method according to any one of claims 1 to 8, wherein a time domain position of the reference signal of the NR information does not comprise symbols whose indexes are 2, 5, 8, and 11.

**10.** The method according to any one of claims 1 to 9, wherein the method further comprises:

obtaining LTE sidelink control information, wherein the LTE sidelink control information indicates a second resource, the second resource comprises a resource occupied by LTE information and/or reserved for LTE information, and the second resource belongs to the first resource set; and
determining, from the first resource set based on the LTE sidelink control information and signal strength information, a resource for transmitting the NR information, wherein the signal strength information indicates a signal strength of the second resource.

**11.** The method according to claim 10, wherein the determining, from the first resource set based on the LTE sidelink control information and signal strength information, a resource for transmitting the NR information comprises:

if the signal strength of the second resource is greater than or equal to a signal strength threshold, excluding the second resource from a candidate resource set, wherein a remaining resource in the candidate resource set other than the second resource comprises the resource for transmitting the NR information;
if the signal strength of the second resource is greater than or equal to a signal strength threshold, excluding a third resource from a candidate resource set, wherein the third resource is all resources in a slot in which the second resource is located, and a remaining resource in the candidate resource set other than the third resource comprises the resource for transmitting the NR information; or
if the signal strength of the second resource is greater than or equal to a signal strength threshold, excluding a fourth resource from a candidate resource set, wherein the fourth resource is all resources in a subframe in which the second resource is located, and a remaining resource in the candidate resource set other than the fourth resource comprises the resource for transmitting the NR information.

**12.** The method according to claim 11, wherein the LTE sidelink control information further indicates a priority of the LTE information, and the determining, from the first resource set based on the LTE sidelink control information and signal strength information, a resource for transmitting the NR information further comprises:
excluding the second resource, the third resource, or the fourth resource from the candidate resource set if one or more of the following conditions are met:

a priority value of the NR information is greater than or equal to a priority value of the LTE information;
a priority value of the NR information is greater than or equal to a first priority value; or
a priority value of the LTE information is less than or equal to a first priority value.

**13.** The method according to claim 11 or 12, wherein the signal strength threshold is determined based on one or more of the following:

a signal strength threshold that is preconfigured or that is indicated by a network device;
a priority of the NR information;
the priority of the LTE information; or
an offset value, wherein the offset value is preconfigured or is indicated by a network device.

**14.** The method according to any one of claims 11 to 13, wherein the method further comprises:
determining a resource occupation ratio of the LTE terminal apparatus in the first resource set, wherein the resource occupation ratio is a ratio of a quantity of time units occupied by the LTE information in a first measurement window to a total quantity of time units in the first resource set comprised in the first measurement window, and a length of the first measurement window is configured by the network device, or preconfigured, or predefined.

**15.** The method according to claim 14, wherein the method further comprises:
sending the NR information based on capability information, wherein the capability information indicates one or more of the following:

whether a capability of blindly detecting NR information and/or a capability of blindly detecting LTE information is available;
a maximum quantity of pieces of NR sidelink control information and/or LTE sidelink control information blindly detected in a time unit;
whether a transmission of NR information and a transmission of LTE information are supported in a same time unit or different time units; or
whether a transmission of NR information and a transmission of LTE information are supported in a same frequency domain unit or different frequency domain units.

**16.** The method according to any one of claims 1 to 15, wherein the method further comprises:

obtaining configuration information, wherein the configuration information is used to configure the first resource set, and a time unit for transmitting the LTE information in the first resource set does not comprise a time unit for transmitting feedback information; and
determining, based on the configuration information, the resource for transmitting the NR information.

**17.** The method according to claim 16, wherein an index of the time unit for transmitting the LTE information in the first resource set is k1, k1 satisfies k1 mod $(\mathbf{N_{PSFCH}} - p) = \mathbf{N_{PSFCH}} - p - 1$, and one time unit for transmitting NR information is comprised after the time unit k1; and/or

an index of the time unit for transmitting the LTE information in the first resource set is k2, k2 satisfies k mod $(\mathbf{N_{PSFCH}} - p) = 0$, and one time unit for transmitting NR information is comprised before the time unit k2, wherein $\mathbf{N_{PSFCH}}$ is a period of a resource for transmitting feedback information in the first resource set, the time unit comprises the resource for transmitting the feedback information, and p is an integer less than or equal to $N_{PSFCH}$.

**18.** The method according to claim 17, wherein the $\mathbf{N_{PSFCH}}$ adjacent time units for transmitting the NR information comprise $N_{LTE}$ time units for transmitting the LTE information, and $\mathbf{N_{PSFCH}}$ and $N_{LTE}$ satisfy: $N_{LTE}+p=N_{PSFCH}$.

**19.** The method according to claim 16, wherein two adjacent time units for transmitting the LTE information comprise $2^{\mu}$ time units for transmitting the NR information, a quantity of time units comprising feedback resources in the $2^{\mu}$ time units for transmitting the NR information is n, n comprises 1, and $\mu$ indicates a subcarrier spacing, wherein the time unit comprising the feedback resource is a first time unit that is used to transmit the NR information and that is after the time unit for transmitting the LTE information, or the time unit comprising the feedback resource is a first time unit for transmitting the NR information in the $2^{\mu}$ time units for transmitting the NR information.

**20.** The method according to any one of claims 16 to 19, wherein
the $2^{\mu}$ time units for transmitting the NR information comprise $2^{\mu}$ AGC symbols, and a first AGC symbol in the $2^{\mu}$ AGC symbols is a start symbol of the $2^{\mu}$ time units.

**21.** The method according to any one of claims 16 to 20, wherein the $2^{\mu}$ time units for transmitting the NR information comprise $2^{\mu}$ GAP symbols, and a last GAP symbol in the $2^{\mu}$ GAP symbols is an end symbol of the $2^{\mu}$ time units.

**22.** A communication method, comprising:

receiving first sidelink control information, wherein the first sidelink control information indicates that a data channel associated with the first sidelink control information carries new radio NR information, the first sidelink control information is used by a long term evolution LTE terminal apparatus to select a resource, the NR information is transmitted by using a resource in a first resource set, and the resource in the first resource set is further used to transmit LTE information; and

determining, based on the first sidelink control information, a candidate resource for transmitting the LTE information.

**23.** The method according to claim 22, wherein the first sidelink control information indicates, by using at least one of the following, that the data channel associated with the first sidelink control information carries the NR information: a reserved index value of a modulation and coding scheme MCS field, a reserved value of a resource reservation field, or at least one reserved bit.

**24.** The method according to either of claims 22 and 23, wherein the method further comprises: receiving, on a first resource in the first resource set, a reference signal associated with the NR information, wherein the reference signal is mapped to the first resource according to a first mapping rule, and the first mapping rule comprises one or more of the following:

the NR information is a physical sidelink control channel PSCCH and/or a physical sidelink shared channel PSSCH, and the reference signal of the NR information is located on a symbol 2 and a symbol 5 in a time unit k and a symbol 1 and a symbol 4 in a time unit k+1;

the NR information is a PSCCH and/or a PSSCH, and the reference signal of the NR information is located on a symbol 2, a symbol 5, a symbol 8, and a symbol 11 in a time unit, wherein k is an integer greater than or equal to 1;

the NR information is a physical sidelink broadcast channel PSBCH, and the reference signal of the NR information is located on a symbol 4 and a symbol 6 in a time unit k and a symbol 2 in a time unit k+1;

the NR information is a PSBCH, and the reference signal of the NR information is located on a symbol 4, a symbol 6, and a symbol 9 in a time unit, wherein k is an integer greater than or equal to 1;

the NR information is a PSCCH and/or a PSSCH, and duration of a scheduling resource for the NR information satisfies , wherein $N_{symb}^{slot}$ is a quantity of symbols for transmitting the NR information in one slot, $N_{LTEDM\text{-}RS}$ is a quantity of symbols for transmitting a reference signal of LTE information in one slot, and an index of a symbol for transmitting the NR information in each slot satisfies $\bar{l} = \{0, 1, 2, \ldots, N_{symb}^{slot} - N_{LTEDM-RS} - 1\}$; or

the NR information is a PSCCH and/or a PSSCH, and duration $l_d$ of a scheduling resource for the NR information belongs to {1, 2, ..., $N_{symb}^{slot}$ - 1}, wherein $N_{symb}^{slot}$ is a quantity of symbols for transmitting the NR information in one slot, and an index of a symbol for transmitting the NR information in each slot satisfies $\bar{l} = \{0, 1, 2, \ldots, N_{symb}^{slot} - 1\}$.

**25.** The method according to claim 24, wherein a time domain position of the reference signal of the NR information does not comprise symbols whose indexes are 2, 5, 8, and 11.

**26.** The method according to any one of claims 22 to 25, wherein the method further comprises:

obtaining configuration information, wherein the configuration information is used to configure the first resource set, and a time unit for transmitting the LTE information in the first resource set does not comprise a time unit for transmitting feedback information; and

determining, based on the configuration information, the resource for transmitting the LTE information.

**27.** The method according to claim 26, wherein an index of the time unit for transmitting the LTE information in the first resource set is k1, k1 satisfies k1 mod ($N_{PSFCH}$ - $p$) = $N_{PSFCH}$ - $p$ - 1, and one time unit for transmitting NR information is comprised after the time unit k1; and/or
k satisfies k mod ($N_{PSFCH}$ - p) = 0, and one time unit for transmitting NR information is comprised before the time unit k, wherein $N_{PSFCH}$ is a period of a resource for transmitting feedback information in the first resource set, the time unit comprises the resource for transmitting the feedback information, and p is an integer less than or equal to $N_{PSFCH}$.

**28.** A communication method, comprising:

obtaining LTE sidelink control information, wherein the LTE sidelink control information indicates a second resource, the second resource comprises a resource occupied by LTE information and/or reserved for LTE information, the second resource belongs to a first resource set, and a resource in the first resource set is used to transmit LTE information and/or new radio NR information; and
determining, from the first resource set based on the LTE sidelink control information and signal strength information, a resource for transmitting the NR information, wherein the signal strength information indicates a signal strength of the second resource.

**29.** The method according to claim 28, wherein the determining, from the first resource set based on the LTE sidelink control information and signal strength information, a resource for transmitting the NR information comprises:

if the signal strength of the second resource is greater than or equal to a signal strength threshold, excluding the second resource from a candidate resource set, wherein a remaining resource in the candidate resource set other than the second resource comprises the resource for transmitting the NR information;
if the signal strength of the second resource is greater than or equal to a signal strength threshold, excluding a third resource from a candidate resource set, wherein the third resource is all resources in a slot in which the second resource is located, and a remaining resource in the candidate resource set other than the third resource comprises the resource for transmitting the NR information; or
if the signal strength of the second resource is greater than or equal to a signal strength threshold, excluding a fourth resource from a candidate resource set, wherein the fourth resource is all resources in a subframe in which the second resource is located, and a remaining resource in the candidate resource set other than the fourth resource comprises the resource for transmitting the NR information.

**30.** The method according to claim 29, wherein a priority of the LTE information is indicated by the LTE sidelink control information, and the determining, from the first resource set based on the LTE sidelink control information and signal strength information, a resource for transmitting the NR information further comprises:
excluding the second resource, the third resource, or the fourth resource from the candidate resource set if one or more of the following conditions are met:

a priority value of the NR information is greater than or equal to a priority value of the LTE information;
a priority value of the NR information is greater than or equal to a first priority value; or
a priority value of the LTE information is less than or equal to a first priority value.

**31.** The method according to claim 29 or 30, wherein the signal strength threshold is determined based on one or more of the following:

a signal strength threshold that is preconfigured or that is indicated by a network device;
a priority of the NR information;
the priority of the LTE information; or
an offset value, wherein the offset value is preconfigured or is indicated by a network device.

**32.** The method according to any one of claims 29 to 31, wherein the method further comprises:
determining a resource occupation ratio of an LTE terminal apparatus in the first resource set, wherein the resource occupation ratio is a ratio of a quantity of time units occupied by the LTE information in a first measurement window to a total quantity of time units in the first resource set comprised in the first measurement window, and a length of the first measurement window is configured by the network device, or preconfigured, or predefined.

**33.** The method according to claim 32, wherein the method further comprises:
sending the NR information based on capability information, wherein the capability information indicates one or more of the following:

whether a capability of blindly detecting NR information and/or a capability of blindly detecting LTE information is available;

a maximum quantity of pieces of NR sidelink control information and/or LTE sidelink control information blindly detected in a time unit;
whether a transmission of NR information and a transmission of LTE information are supported in a same time unit or different time units; or
whether a transmission of NR information and a transmission of LTE information are supported in a same frequency domain unit or different frequency domain units.

**34.** The method according to any one of claims 28 to 32, wherein the method further comprises:
determining, based on a capability, the resource for transmitting the NR information, wherein the capability comprises one or more of the following:

whether a capability of blindly detecting NR information and/or a capability of blindly detecting LTE information is available;
a maximum quantity of pieces of NR sidelink control information and/or LTE sidelink control information blindly detected in a time unit;
whether a transmission of NR information and a transmission of LTE information are supported in a same time unit or different time units; or
whether a transmission of NR information and a transmission of LTE information are supported in a same frequency domain unit or different frequency domain units.

**35.** The method according to claim 34, wherein the determining, based on a capability, the resource for transmitting the NR information comprises:

supporting a transmission of NR information and a transmission of LTE information in a same time unit, and excluding the second resource from the candidate resource set;
skipping supporting a transmission of NR information and a transmission of LTE information in a same time unit, and excluding the third resource from the candidate resource set; or
skipping supporting a transmission of NR information and a transmission of LTE information in a same time unit, and excluding the fourth resource from the candidate resource set.

**36.** The method according to any one of claims 28 to 35, wherein the method further comprises:

obtaining configuration information, wherein the configuration information is used to configure the first resource set; and
determining, based on the configuration information, the resource for transmitting the NR information.

**37.** The method according to any one of claims 28 to 36, wherein an index of the time unit for transmitting the LTE information in the first resource set is k1, k1 satisfies k1 mod $(\mathbf{N_{PSFCH}} - p) = \mathbf{N_{PSFCH}} - p - 1$, and one time unit for transmitting NR information is comprised after the time unit k1; and/or

an index of the time unit for transmitting the LTE information in the first resource set is k2, k2 satisfies k mod $(\mathbf{N_{PSFCH}} - \mathrm{p}) = 0$, and one time unit for transmitting NR information is comprised before the time unit k2, wherein $\mathbf{N_{PSFCH}}$ is a period of a resource for transmitting feedback information in the first resource set, the time unit comprises the resource for transmitting the feedback information, and p is an integer less than or equal to $N_{PSFCH}$.

**38.** The method according to claim 37, wherein the $\mathbf{N_{PSFCH}}$ adjacent time units for transmitting the NR information comprise $N_{LTE}$ time units for transmitting the LTE information, and $\mathbf{N_{PSFCH}}$ and $N_{LTE}$ satisfy: $N_{LTE}+p=N_{PSFCH}$.

**39.** The method according to claim 36, wherein two adjacent time units for transmitting the LTE information comprise $2^{\mu}$ time units for transmitting the NR information, n comprises 1, and $\mu$ indicates a subcarrier spacing.

**40.** The method according to any one of claims 28 to 39, wherein

time units for transmitting NR information are $2^{\mu}$ consecutive slots; or
in a subframe in which the second resource is located, time units for transmitting NR information are $2^{\mu}$ consecutive slots.

**41.** The method according to claim 40, wherein

a start slot index m of the $2^\mu$ consecutive slots satisfies: m mod ($2^\mu$) = 0, or an end slot index m of the $2^\mu$ slots satisfies: m mod ($2^\mu$) = $2^\mu$-1.

**42.** The method according to any one of claims 28 to 41, wherein
the $2^\mu$ time units for transmitting the NR information comprise $2^\mu$ AGC symbols, and a first AGC symbol in the $2^\mu$ AGC symbols is a start symbol of the $2^\mu$ time units.

**43.** The method according to any one of claims 28 to 42, wherein the $2^\mu$ time units for transmitting the NR information comprise $2^\mu$ GAP symbols, and a last GAP symbol in the $2^\mu$ GAP symbols is an end symbol of the $2^\mu$ time units.

**44.** The method according to any one of claims 28 to 43, wherein the determining, from the first resource set, a resource for transmitting NR information further comprises:

determining a resource to be used by an LTE communication module comprised in a first NR terminal apparatus to send LTE information; and
excluding, from the candidate resource set, the resource to be used to send the LTE information; excluding, from the candidate resource set, all resources in a slot in which the resource to be used to send the LTE information is located; or excluding, from the candidate resource set, all resources in a subframe in which the resource to be used to send the LTE information is located.

**45.** The method according to any one of claims 28 to 44, wherein the determining, from the first resource set, a resource for transmitting NR information further comprises:

determining a resource to be used by the LTE communication module comprised in the first NR terminal apparatus to receive LTE information; and
excluding, from the candidate resource set, the resource to be used to receive the LTE information; excluding, from the candidate resource set, all resources in a slot in which the resource to be used to receive the LTE information is located; or excluding, from the candidate resource set, all resources in a subframe in which the resource to be used to receive the LTE information is located.

**46.** A communication apparatus, comprising a processing module and a transceiver module, wherein

the processing module is configured to determine first sidelink control information, wherein the first sidelink control information indicates that a data channel associated with the first sidelink control information carries new radio NR information, the first sidelink control information is used by a long term evolution LTE terminal apparatus to select a resource, the NR information is transmitted by using a resource in a first resource set, and the resource in the first resource set is further used to transmit LTE information; and
the transceiver module is configured to send the first sidelink control information.

**47.** The apparatus according to claim 46, wherein the first sidelink control information indicates, by using at least one of the following, that the data channel associated with the first sidelink control information carries the NR information: a reserved index value of a modulation and coding scheme MCS field, a reserved value of a resource reservation field, or at least one reserved bit.

**48.** The apparatus according to claim 47, wherein the first sidelink control information further comprises a retransmission field and/or a transmit format indication field, and that the first sidelink control information indicates that the data channel associated with the first sidelink control information carries the NR information comprises:
the first sidelink control information indicates an $i^{th}$ transmission of the NR information, wherein i is an integer greater than or equal to 1.

**49.** The apparatus according to claim 47 or 48, wherein the reserved value of the resource reservation field indicates that a resource reservation period of the NR information is 2 ms, 5 ms, or 10 ms.

**50.** The apparatus according to any one of claims 47 to 49, wherein the at least one reserved bit indicates one or more of the following:

some or all bits of a source identity;
some or all bits of a destination identity;

a modulation and demodulation reference signal DMRS pattern;
a quantity of ports of the data channel associated with the first sidelink control information;
an additional MCS table; or
a quantity of symbols occupied by a physical sidelink feedback channel PSFCH.

**51.** The apparatus according to any one of claims 46 to 50, wherein the first sidelink control information further comprises one or more of the following fields:

a frequency domain resource position field for indicating frequency domain resource position information of the $i^{th}$ transmission and an $(i+1)^{th}$ transmission of the NR information, wherein i is an odd number or an even number, and the $(i+1)^{th}$ transmission is a retransmission of the $i^{th}$ transmission;
a time gap field for indicating a time domain resource gap between the $i^{th}$ transmission and an $(i+1)^{th}$ transmission of the NR information, wherein i is an odd number or an even number, and the $(i+1)^{th}$ transmission is a retransmission of the $i^{th}$ transmission; or
a retransmission index field for indicating an initial transmission or the $i^{th}$ transmission of the NR information, wherein i is an odd number or an even number.

**52.** The apparatus according to any one of claims 46 to 51, wherein the transceiver module is further configured to: send a first TB by using a first period, and send a second TB by using a second period, wherein service data associated with the first TB and the second TB belongs to service data associated with a third TB, a period of the third TB is a third period, and the third period is less than the first period or the second period.

**53.** The apparatus according to any one of claims 46 to 52, wherein the transceiver module is further configured to: send, on a first resource in the first resource set, a reference signal associated with the NR information, wherein the reference signal is mapped to the first resource according to a first mapping rule, and the first mapping rule comprises one or more of the following:

the NR information is a physical sidelink control channel PSCCH and/or a physical sidelink shared channel PSSCH, and the reference signal of the NR information is located on a symbol 2 and a symbol 5 in a time unit k and a symbol 1 and a symbol 4 in a time unit k+1;
the NR information is a PSCCH and/or a PSSCH, and the reference signal of the NR information is located on a symbol 2, a symbol 5, a symbol 8, and a symbol 11 in a time unit, wherein k is an integer greater than or equal to 1;
the NR information is a physical sidelink control channel PSBCH, and the reference signal of the NR information is located on a symbol 4 and a symbol 6 in a time unit k and a symbol 2 in a time unit k+1;
the NR information is a PSBCH, and the reference signal of the NR information is located on a symbol 4, a symbol 6, and a symbol 9 in a time unit, wherein k is an integer greater than or equal to 1;
the NR information is a PSCCH and/or a PSSCH, and duration of a scheduling resource for the NR information satisfies $l_d = N_{symb}^{slot} - N_{LTEDM-RS} - 1$, wherein $N_{symb}^{slot}$ is a quantity of symbols for transmitting the NR information in one slot, $N_{LTEDM-RS}$ is a quantity of symbols for transmitting a reference signal of LTE information in one slot, and an index of a symbol for transmitting the NR information in each slot satisfies $\bar{l} = \{0, 1, 2, \ldots, N_{symb}^{slot} - N_{LTEDM-RS} - 1\}$; or
the NR information is a PSCCH and/or a PSSCH, and duration $l_d$ of a scheduling resource for the NR information belongs to {1, 2, ..., $N_{symb}^{slot}$ - 1}, wherein $N_{symb}^{slot}$ is a quantity of symbols for transmitting the NR information in one slot, and an index of a symbol for transmitting the NR information in each slot satisfies $\bar{l} = \{0, 1, 2, \ldots, N_{symb}^{slot} - 1\}$.

**54.** The apparatus according to any one of claims 46 to 53, wherein a time domain position of the reference signal of the NR information does not comprise symbols whose indexes are 2, 5, 8, and 11.

**55.** The apparatus according to any one of claims 46 to 53, wherein the processing module is further configured to:

obtain LTE sidelink control information, wherein the LTE sidelink control information indicates a second resource, the second resource comprises a resource occupied by LTE information and/or reserved for LTE information, and the second resource belongs to the first resource set; and
determine, from the first resource set based on the LTE sidelink control information and signal strength information, a resource for transmitting the NR information, wherein the signal strength information indicates a signal strength of the second resource.

**56.** The apparatus according to claim 55, wherein that the processing module is configured to determine, from the first resource set based on the LTE sidelink control information and signal strength information, a resource for transmitting the NR information specifically comprises:

if the signal strength of the second resource is greater than or equal to a signal strength threshold, excluding the second resource from a candidate resource set, wherein a remaining resource in the candidate resource set other than the second resource comprises the resource for transmitting the NR information;
if the signal strength of the second resource is greater than or equal to a signal strength threshold, excluding a third resource from a candidate resource set, wherein the third resource is all resources in a slot in which the second resource is located, and a remaining resource in the candidate resource set other than the third resource comprises the resource for transmitting the NR information; or
if the signal strength of the second resource is greater than or equal to a signal strength threshold, excluding a fourth resource from a candidate resource set, wherein the fourth resource is all resources in a subframe in which the second resource is located, and a remaining resource in the candidate resource set other than the fourth resource comprises the resource for transmitting the NR information.

**57.** The apparatus according to claim 56, wherein the LTE sidelink control information further indicates a priority of the LTE information, and that the processing module determines, from the first resource set based on the LTE sidelink control information and signal strength information, a resource for transmitting the NR information further comprises:
excluding the second resource, the third resource, or the fourth resource from the candidate resource set if one or more of the following conditions are met:

a priority value of the NR information is greater than or equal to a priority value of the LTE information;
a priority value of the NR information is greater than or equal to a first priority value; or
a priority value of the LTE information is less than or equal to a first priority value.

**58.** The apparatus according to claim 56 or 57, wherein the signal strength threshold is determined based on one or more of the following:

a signal strength threshold that is preconfigured or that is indicated by a network device;
a priority of the NR information;
the priority of the LTE information; or
an offset value, wherein the offset value is preconfigured or is indicated by a network device.

**59.** The apparatus according to any one of claims 46 to 58, wherein the processing module is further configured to:
determine a resource occupation ratio of an LTE terminal apparatus in the first resource set, wherein the resource occupation ratio is a ratio of a quantity of time units occupied by the LTE information in a first measurement window to a total quantity of time units in the first resource set comprised in the first measurement window, and a length of the first measurement window is configured by the network device, or preconfigured, or predefined.

**60.** The apparatus according to claim 59, wherein the transceiver module is further configured to:
send the NR information based on capability information, wherein the capability information indicates one or more of the following:

whether a capability of blindly detecting NR information and/or a capability of blindly detecting LTE information is available;
a maximum quantity of pieces of NR sidelink control information and/or LTE sidelink control information blindly detected in a time unit;
whether a transmission of NR information and a transmission of LTE information are supported in a same time unit or different time units; or
whether a transmission of NR information and a transmission of LTE information are supported in a same frequency domain unit or different frequency domain units.

**61.** The apparatus according to any one of claims 46 to 60, wherein the processing module is further configured to:

obtain configuration information, wherein the configuration information is used to configure the first resource set, and a time unit for transmitting the LTE information in the first resource set does not comprise a time unit for transmitting feedback information; and
determine, based on the configuration information, the resource for transmitting the NR information.

**62.** The apparatus according to claim 61, wherein an index of the time unit for transmitting the LTE information in the first resource set is k1, k1 satisfies k1 mod ($N_{PSFCH}$ - $p$) = $N_{PSFCH}$ - $p$ - 1, and one time unit for transmitting NR information is comprised after the time unit k1; and/or

an index of the time unit for transmitting the LTE information in the first resource set is k2, k2 satisfies k mod ($N_{PSFCH}$ - $p$) = 0, and one time unit for transmitting NR information is comprised before the time unit k2, wherein $N_{PSFCH}$ is a period of a resource for transmitting feedback information in the first resource set, the time unit comprises the resource for transmitting the feedback information, and p is an integer less than or equal to $N_{PSFCH}$.

**63.** The apparatus according to claim 62, wherein the $N_{PSFCH}$ adjacent time units for transmitting the NR information comprise $N_{LTE}$ time units for transmitting the LTE information, and $N_{PSFCH}$ and $N_{LTE}$ satisfy: $N_{LTE}$+p=$N_{PSFCH}$.

**64.** The apparatus according to claim 61, wherein two adjacent time units for transmitting the LTE information comprise $2^{\mu}$ time units for transmitting the NR information, a quantity of time units comprising feedback resources in the $2^{\mu}$ time units for transmitting the NR information is n, n comprises 1, and $\mu$ indicates a subcarrier spacing, wherein the time unit comprising the feedback resource is a first time unit that is used to transmit the NR information and that is after the time unit for transmitting the LTE information, or the time unit comprising the feedback resource is a first time unit for transmitting the NR information in the $2^{\mu}$ time units for transmitting the NR information.

**65.** The apparatus according to any one of claims 61 to 64, wherein
the $2^{\mu}$ time units for transmitting the NR information comprise $2^{\mu}$ AGC symbols, and a first AGC symbol in the $2^{\mu}$ AGC symbols is a start symbol of the $2^{\mu}$ time units.

**66.** The apparatus according to any one of claims 61 to 65, wherein the $2^{\mu}$ time units for transmitting the NR information comprise $2^{\mu}$ GAP symbols, and a last GAP symbol in the $2^{\mu}$ GAP symbols is an end symbol of the $2^{\mu}$ time units.

**67.** A communication apparatus, comprising a processing module and a transceiver module, wherein

the transceiver module is configured to receive first sidelink control information, wherein the first sidelink control information indicates that a data channel associated with the first sidelink control information carries new radio NR information, the first sidelink control information is used by a long term evolution LTE terminal apparatus to select a resource, the NR information is transmitted by using a resource in a first resource set, and the resource in the first resource set is further used to transmit LTE information; and
the processing module is configured to determine, based on the first sidelink control information, a candidate resource for transmitting the LTE information.

**68.** The apparatus according to claim 67, wherein the first sidelink control information indicates, by using at least one of the following, that the data channel associated with the first sidelink control information carries the NR information: a reserved index value of a modulation and coding scheme MCS field, a reserved value of a resource reservation field, or at least one reserved bit.

**69.** The apparatus according to either of claims 67 and 68, wherein the transceiver module is further configured to: receive, on a first resource in the first resource set, a reference signal associated with the NR information, wherein the reference signal is mapped to the first resource according to a first mapping rule, and the first mapping rule comprises one or more of the following:

the NR information is a physical sidelink control channel PSCCH and/or a physical sidelink shared channel PSSCH, and the reference signal of the NR information is located on a symbol 2 and a symbol 5 in a time unit k and a symbol 1 and a symbol 4 in a time unit k+1;
the NR information is a PSCCH and/or a PSSCH, and the reference signal of the NR information is located on a symbol 2, a symbol 5, a symbol 8, and a symbol 11 in a time unit, wherein k is an integer greater than or equal to 1;

the NR information is a physical sidelink broadcast channel PSBCH, and the reference signal of the NR information is located on a symbol 4 and a symbol 6 in a time unit k and a symbol 2 in a time unit k+1;
the NR information is a PSBCH, and the reference signal of the NR information is located on a symbol 4, a symbol 6, and a symbol 9 in a time unit, wherein k is an integer greater than or equal to 1;

the NR information is a PSCCH and/or a PSSCH, and duration of a scheduling resource for the NR information satisfies $l_d = N_{symb}^{slot} - N_{LTEDM-RS} - 1$, wherein $N_{symb}^{slot}$ is a quantity of symbols for transmitting the NR information in one slot, $N_{LTEDM-RS}$ is a quantity of symbols for transmitting a reference signal of LTE information in one slot, and an index of a symbol for transmitting the NR information in each slot satisfies $\bar{l} = \{0, 1, 2, \dots, N_{symb}^{slot} - N_{LTEDM-RS} - 1\}$; or
the NR information is a PSCCH and/or a PSSCH, and duration $l_d$ of a scheduling resource for the NR information belongs to {1, 2, ..., $N_{symb}^{slot}$ - 1}, wherein $N_{symb}^{slot}$ is a quantity of symbols for transmitting the NR information in one slot, and an index of a symbol for transmitting the NR information in each slot satisfies $\bar{l} = \{0, 1, 2, \dots, N_{symb}^{slot} - 1\}$.

**70.** The apparatus according to claim 69, wherein a time domain position of the reference signal of the NR information does not comprise symbols whose indexes are 2, 5, 8, and 11.

**71.** The apparatus according to any one of claims 67 to 70, wherein the processing module is further configured to:

obtain configuration information, wherein the configuration information is used to configure the first resource set, and a time unit for transmitting the LTE information in the first resource set does not comprise a time unit for transmitting feedback information; and
determine, based on the configuration information, the resource for transmitting the LTE information.

**72.** The apparatus according to claim 71, wherein an index of the time unit for transmitting the LTE information in the first resource set is k1, k1 satisfies k1 mod **($N_{PSFCH}$** - $p$) = **$N_{PSFCH}$** - $p$ - 1, and one time unit for transmitting NR information is comprised after the time unit k1; and/or
k satisfies k mod ($N_{PSFCH}$ - $p$) = 0, and one time unit for transmitting NR information is comprised before the time unit k, wherein $N_{PSFCH}$ is a period of a resource for transmitting feedback information in the first resource set, the time unit comprises the resource for transmitting the feedback information, and p is an integer less than or equal to $N_{PSFCH}$.

**73.** A communication apparatus, comprising a processing module and a transceiver module, wherein

the processing module is configured to: obtain LTE sidelink control information, and determine, from a first resource set based on the LTE sidelink control information and signal strength information, a resource for transmitting NR information, wherein the LTE sidelink control information indicates a second resource, the second resource comprises a resource occupied by LTE information and/or reserved for LTE information, the second resource belongs to the first resource set, a resource in the first resource set is used to transmit LTE information and/or new radio NR information, and the signal strength information indicates a signal strength of the second resource; and
the transceiver module is configured to send the NR information.

**74.** The apparatus according to claim 73, wherein the processing module is specifically configured to:

if the signal strength of the second resource is greater than or equal to a signal strength threshold, exclude the second resource from a candidate resource set, wherein a remaining resource in the candidate resource set other than the second resource comprises the resource for transmitting the NR information;
if the signal strength of the second resource is greater than or equal to a signal strength threshold, exclude a third resource from a candidate resource set, wherein the third resource is all resources in a slot in which the second resource is located, and a remaining resource in the candidate resource set other than the third resource comprises the resource for transmitting the NR information; or

if the signal strength of the second resource is greater than or equal to a signal strength threshold, exclude a fourth resource from a candidate resource set, wherein the fourth resource is all resources in a subframe in which the second resource is located, and a remaining resource in the candidate resource set other than the fourth resource comprises the resource for transmitting the NR information.

**75.** The apparatus according to claim 74, wherein a priority of the LTE information is indicated by the LTE sidelink control information, and the processing module is further configured to:
exclude the second resource, the third resource, or the fourth resource from the candidate resource set if one or more of the following conditions are met:

a priority value of the NR information is greater than or equal to a priority value of the LTE information;
a priority value of the NR information is greater than or equal to a first priority value; or
a priority value of the LTE information is less than or equal to a first priority value.

**76.** The apparatus according to claim 74 or 75, wherein the signal strength threshold is determined based on one or more of the following:

a signal strength threshold that is preconfigured or that is indicated by a network device;
a priority of the NR information;
the priority of the LTE information; or
an offset value, wherein the offset value is preconfigured or is indicated by a network device.

**77.** The apparatus according to any one of claims 74 to 76, wherein the processing module is further configured to:
determine a resource occupation ratio of an LTE terminal apparatus in the first resource set, wherein the resource occupation ratio is a ratio of a quantity of time units occupied by the LTE information in a first measurement window to a total quantity of time units in the first resource set comprised in the first measurement window, and a length of the first measurement window is configured by the network device, or preconfigured, or predefined.

**78.** The apparatus according to claim 77, wherein the processing module is further configured to:
send the NR information based on capability information, wherein the capability information indicates one or more of the following:

whether a capability of blindly detecting NR information and/or a capability of blindly detecting LTE information is available;
a maximum quantity of pieces of NR sidelink control information and/or LTE sidelink control information blindly detected in a time unit;
whether a transmission of NR information and a transmission of LTE information are supported in a same time unit or different time units; or
whether a transmission of NR information and a transmission of LTE information are supported in a same frequency domain unit or different frequency domain units.

**79.** The apparatus according to any one of claims 73 to 77, wherein the processing module is further configured to:
determine, based on a capability, the resource for transmitting the NR information, wherein the capability comprises one or more of the following:

whether a capability of blindly detecting NR information and/or a capability of blindly detecting LTE information is available;
a maximum quantity of pieces of NR sidelink control information and/or LTE sidelink control information blindly detected in a time unit;
whether a transmission of NR information and a transmission of LTE information are supported in a same time unit or different time units; or
whether a transmission of NR information and a transmission of LTE information are supported in a same frequency domain unit or different frequency domain units.

**80.** The apparatus according to claim 78, wherein the processing module is specifically configured to:

support a transmission of NR information and a transmission of LTE information in a same time unit, and exclude the second resource from the candidate resource set;

skip supporting a transmission of NR information and a transmission of LTE information in a same time unit, and exclude the third resource from the candidate resource set; or
skip supporting a transmission of NR information and a transmission of LTE information in a same time unit, and exclude the fourth resource from the candidate resource set.

**81.** The apparatus according to any one of claims 73 to 80, wherein the processing module is further configured to:

obtain configuration information, wherein the configuration information is used to configure the first resource set; and
determine, based on the configuration information, the resource for transmitting the NR information.

**82.** The apparatus according to any one of claims 73 to 81, wherein an index of the time unit for transmitting the LTE information in the first resource set is k1, k1 satisfies k1 mod ($N_{PSFCH}$ - $p$) = $N_{PSFCH}$ - $p$ - 1, and one time unit for transmitting NR information is comprised after the time unit k1; and/or

an index of the time unit for transmitting the LTE information in the first resource set is k2, k2 satisfies k mod ($N_{PSFCH}$ - $p$) = 0, and one time unit for transmitting NR information is comprised before the time unit k2, wherein $N_{PSFCH}$ is a period of a resource for transmitting feedback information in the first resource set, the time unit comprises the resource for transmitting the feedback information, and p is an integer less than or equal to $N_{PSFCH}$.

**83.** The apparatus according to claim 82, wherein the $N_{PSFCH}$ adjacent time units for transmitting the NR information comprise $N_{LTE}$ time units for transmitting the LTE information, and $N_{PSFCH}$ and $N_{LTE}$ satisfy: $N_{LTE}$+p=$N_{PSFCH}$.

**84.** The apparatus according to claim 81, wherein two adjacent time units for transmitting the LTE information comprise $2^{\mu}$ time units for transmitting the NR information, n comprises 1, and $\mu$ indicates a subcarrier spacing.

**85.** The apparatus according to any one of claims 73 to 84, wherein

time units for transmitting NR information are $2^{\mu}$ consecutive slots; or
in a subframe in which the second resource is located, time units for transmitting NR information are $2^{\mu}$ consecutive slots.

**86.** The apparatus according to claim 85, wherein
a start slot index m of the $2^{\mu}$ consecutive slots satisfies: m mod ($2^{\mu}$) = 0, or an end slot index m of the $2^{\mu}$ slots satisfies: m mod ($2^{\mu}$) = $2^{\mu}$-1.

**87.** The apparatus according to any one of claims 73 to 86, wherein
the $2^{\mu}$ time units for transmitting the NR information comprise $2^{\mu}$ AGC symbols, and a first AGC symbol in the $2^{\mu}$ AGC symbols is a start symbol of the $2^{\mu}$ time units.

**88.** The apparatus according to any one of claims 73 to 87, wherein the $2^{\mu}$ time units for transmitting the NR information comprise $2^{\mu}$ GAP symbols, and a last GAP symbol in the $2^{\mu}$ GAP symbols is an end symbol of the $2^{\mu}$ time units.

**89.** The apparatus according to any one of claims 73 to 88, wherein the processing module is further configured to:

determine a resource to be used by an LTE communication module comprised in a first NR terminal apparatus to send LTE information; and
exclude, from the candidate resource set, the resource to be used to send the LTE information;
exclude, from the candidate resource set, all resources in a slot in which the resource to be used to send the LTE information is located; or
exclude, from the candidate resource set, all resources in a subframe in which the resource to be used to send the LTE information is located.

**90.** The apparatus according to any one of claims 73 to 89, wherein the processing module is further configured to:

determine a resource to be used by the LTE communication module comprised in the first NR terminal apparatus to receive LTE information; and
exclude, from the candidate resource set, the resource to be used to receive the LTE information;

exclude, from the candidate resource set, all resources in a slot in which the resource to be used to receive the LTE information is located; or
exclude, from the candidate resource set, all resources in a subframe in which the resource to be used to receive the LTE information is located.

**91.** A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 21 through a logic circuit or by executing code instructions.

**92.** A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 22 to 27 through a logic circuit or by executing code instructions.

**93.** A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 28 to 45 through a logic circuit or by executing code instructions.

**94.** A computer-readable storage medium, wherein the computer-readable storage medium stores computer instructions, and when the computer instructions are executed, a computer is enabled to perform the method according to any one of claims 1 to 21, perform the method according to any one of claims 22 to 27, or perform the method according to any one of claims 28 to 45.

**95.** A computer program product, wherein the computer program product comprises a computer program, and when the computer program is run, the method according to any one of claims 1 to 21 is performed, the method according to any one of claims 22 to 27 is performed, or the method according to any one of claims 28 to 45 is performed.

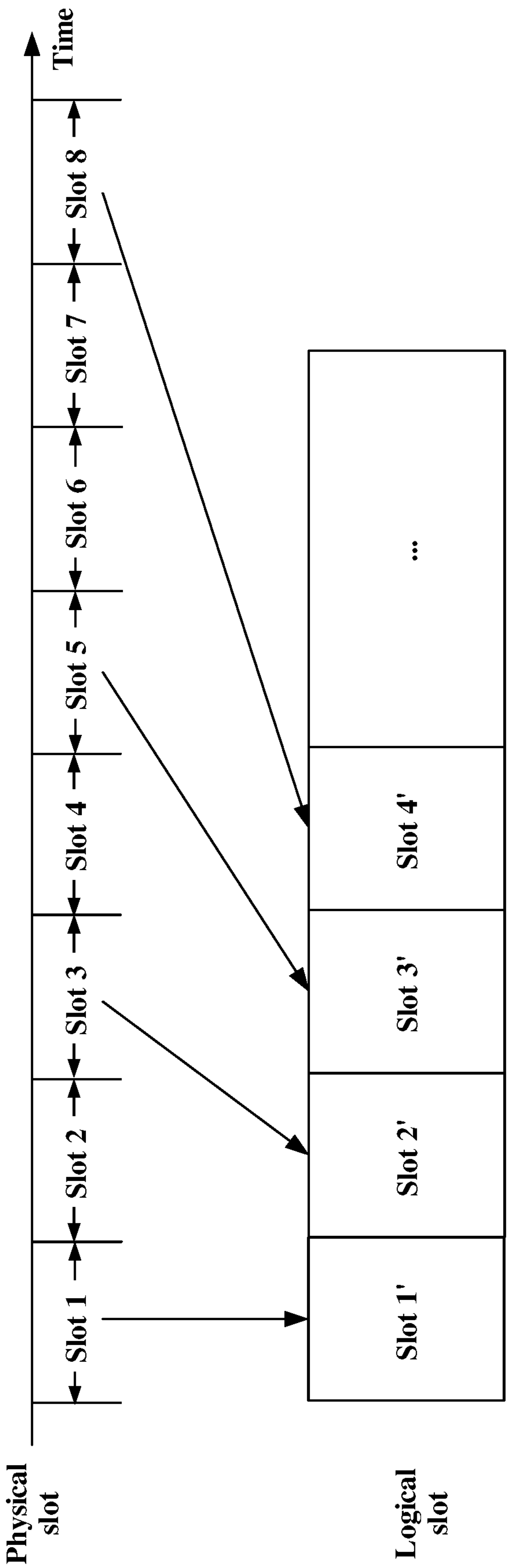
Time
Physical slot
Slot 1
Slot 2
Slot 3
Slot 4
Slot 5
Slot 6
Slot 7
Slot 8
Logical slot
Slot 1'
Slot 2'
Slot 3'
Slot 4'
...

FIG. 1

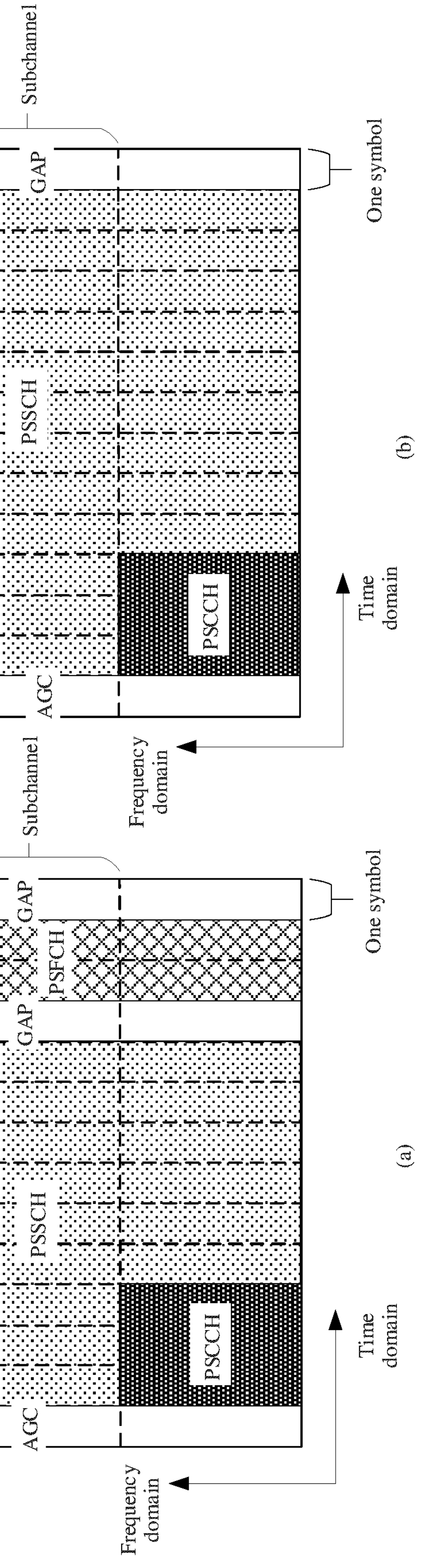
Subchannel
GAP
PSFCH
GAP
PSSCH
PSCCH
AGC
One symbol
Time domain
Frequency domain
(a)
Subchannel
GAP
PSSCH
PSCCH
AGC
One symbol
Time domain
Frequency domain
(b)

FIG. 2

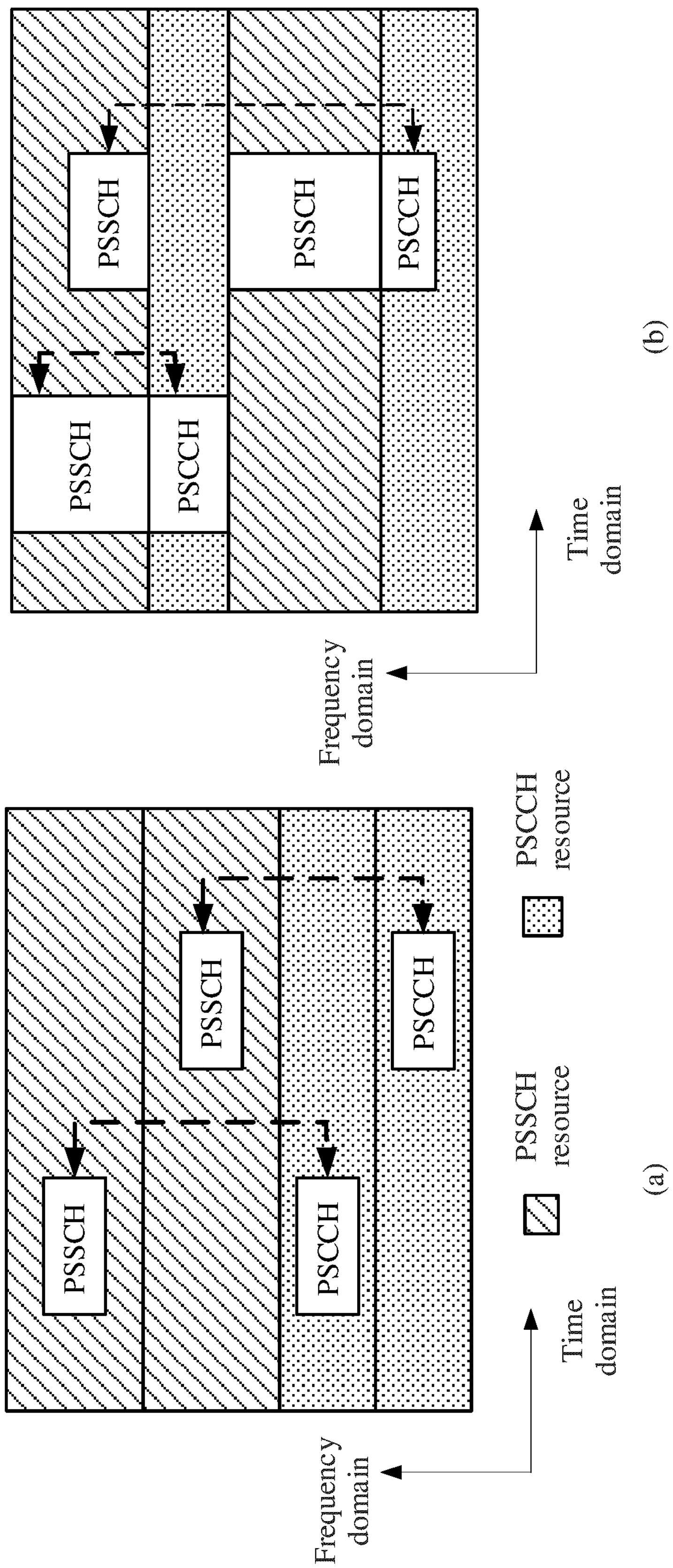
PSSCH
PSCCH
PSSCH
PSCCH
Frequency domain
Time domain
PSSCH resource
PSCCH resource
(a)
PSSCH
PSCCH
PSSCH
PSCCH
Frequency domain
Time domain
(b)

FIG. 3

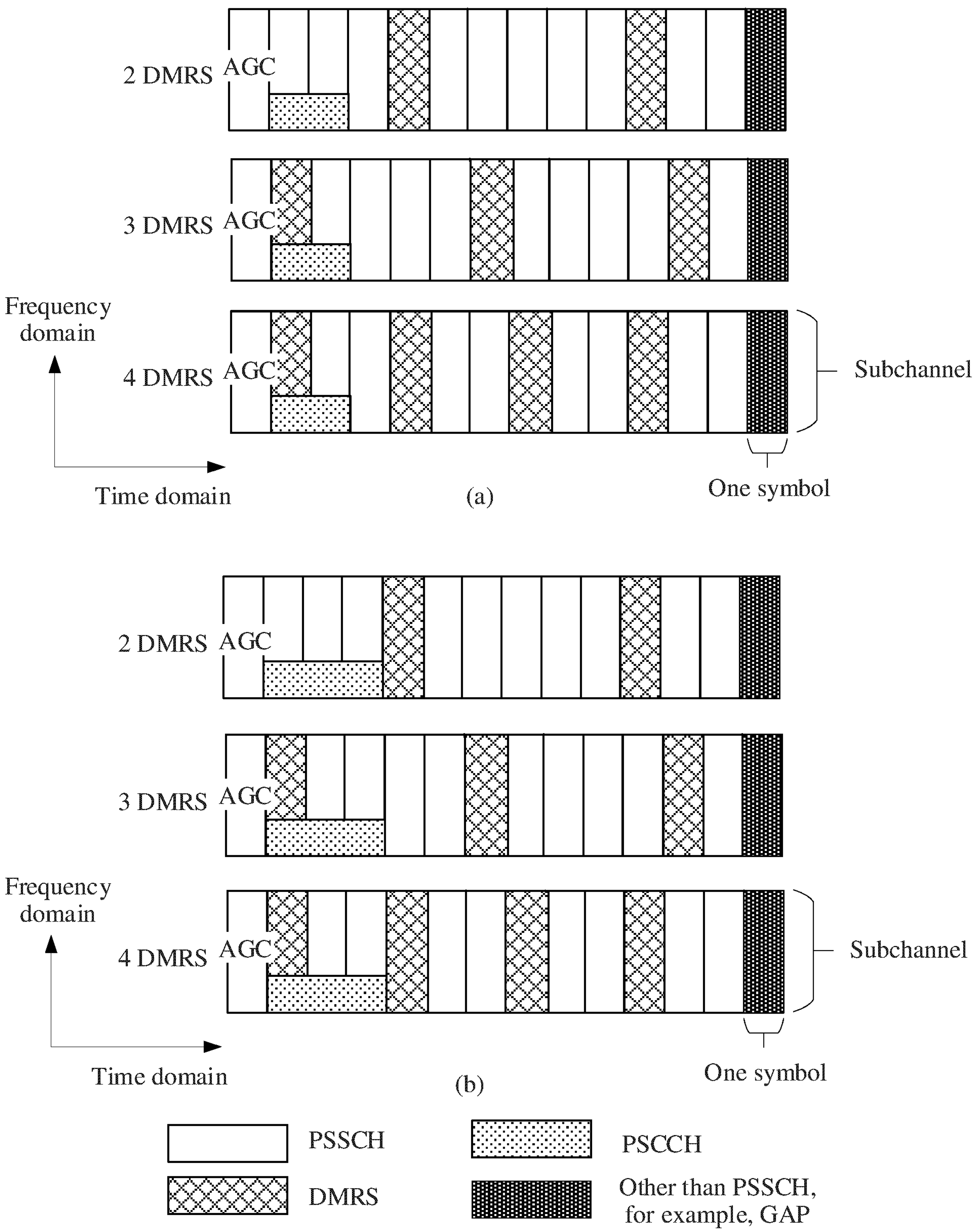
2 DMRS
AGC
3 DMRS
AGC
Frequency domain
4 DMRS
AGC
Subchannel
One symbol
Time domain
(a)
2 DMRS
AGC
3 DMRS
AGC
Frequency domain
4 DMRS
AGC
Subchannel
One symbol
Time domain
(b)
PSSCH
PSCCH
DMRS
Other than PSSCH, for example, GAP

FIG. 4

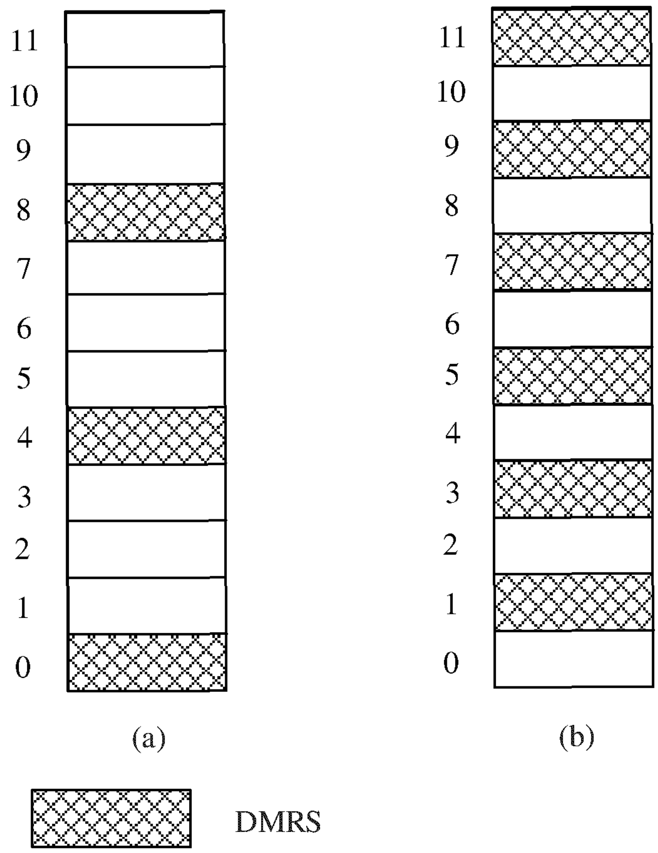
11
10
9
8
7
6
5
4
3
2
1
0
(a)
11
10
9
8
7
6
5
4
3
2
1
0
(b)
DMRS

FIG. 5

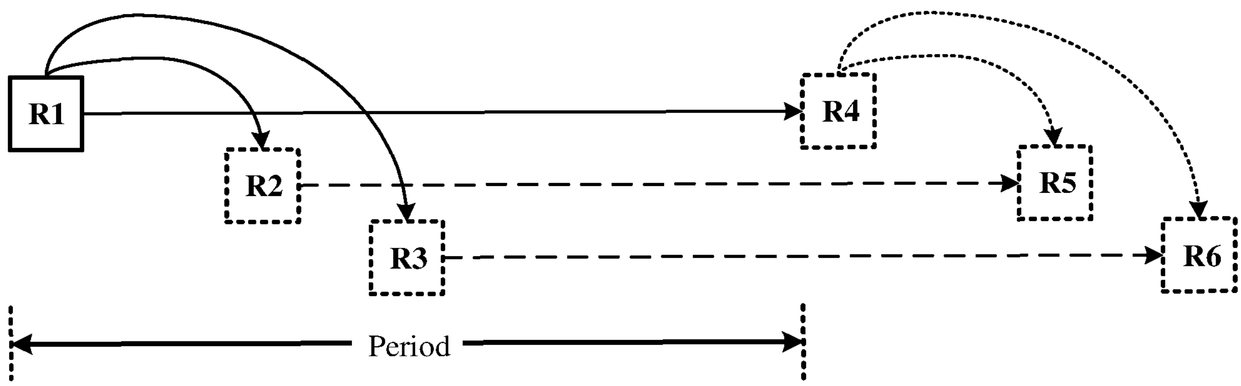
R1
R2
R3
R4
R5
R6
Period

FIG. 6

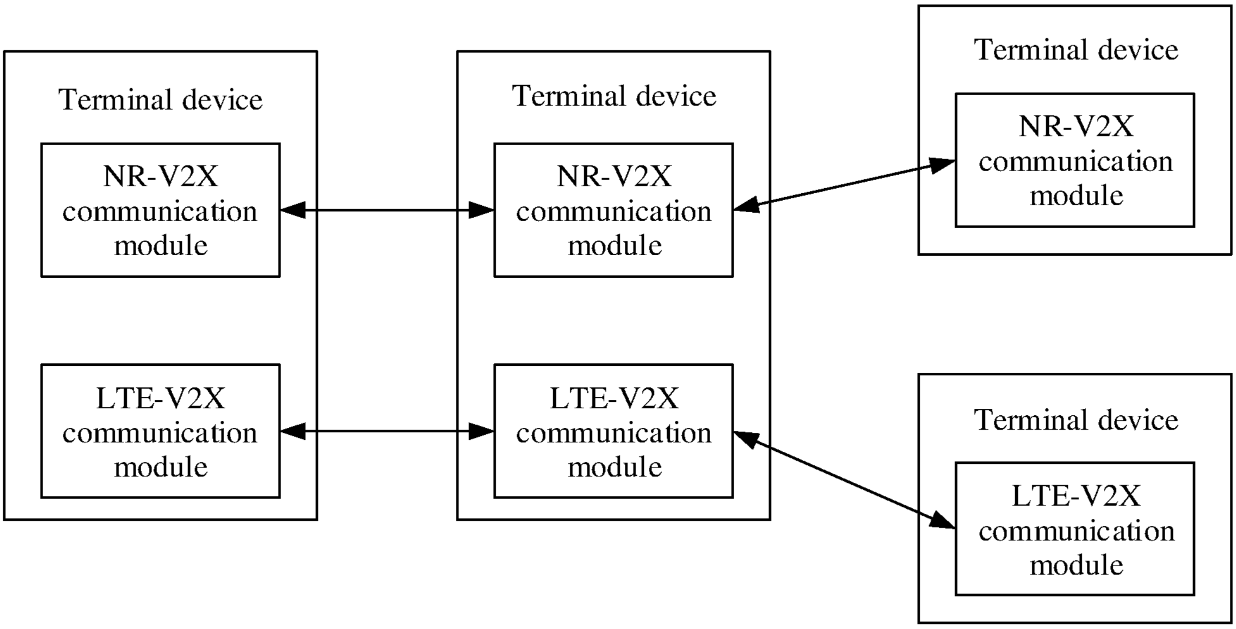
Terminal device
NR-V2X communication module
LTE-V2X communication module
Terminal device
NR-V2X communication module
LTE-V2X communication module
Terminal device
NR-V2X communication module
Terminal device
LTE-V2X communication module

FIG. 7

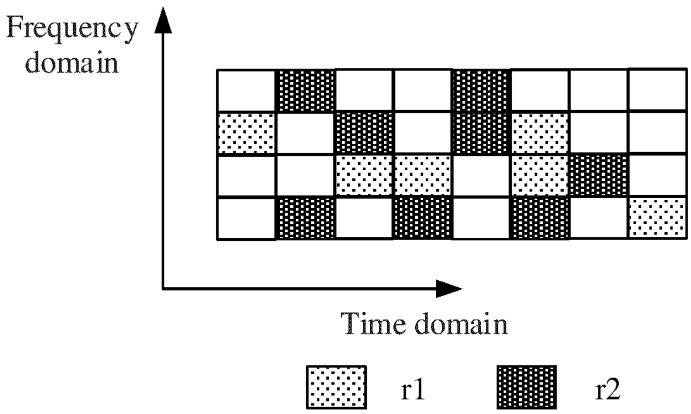
Frequency domain
Time domain
r1
r2

FIG. 8

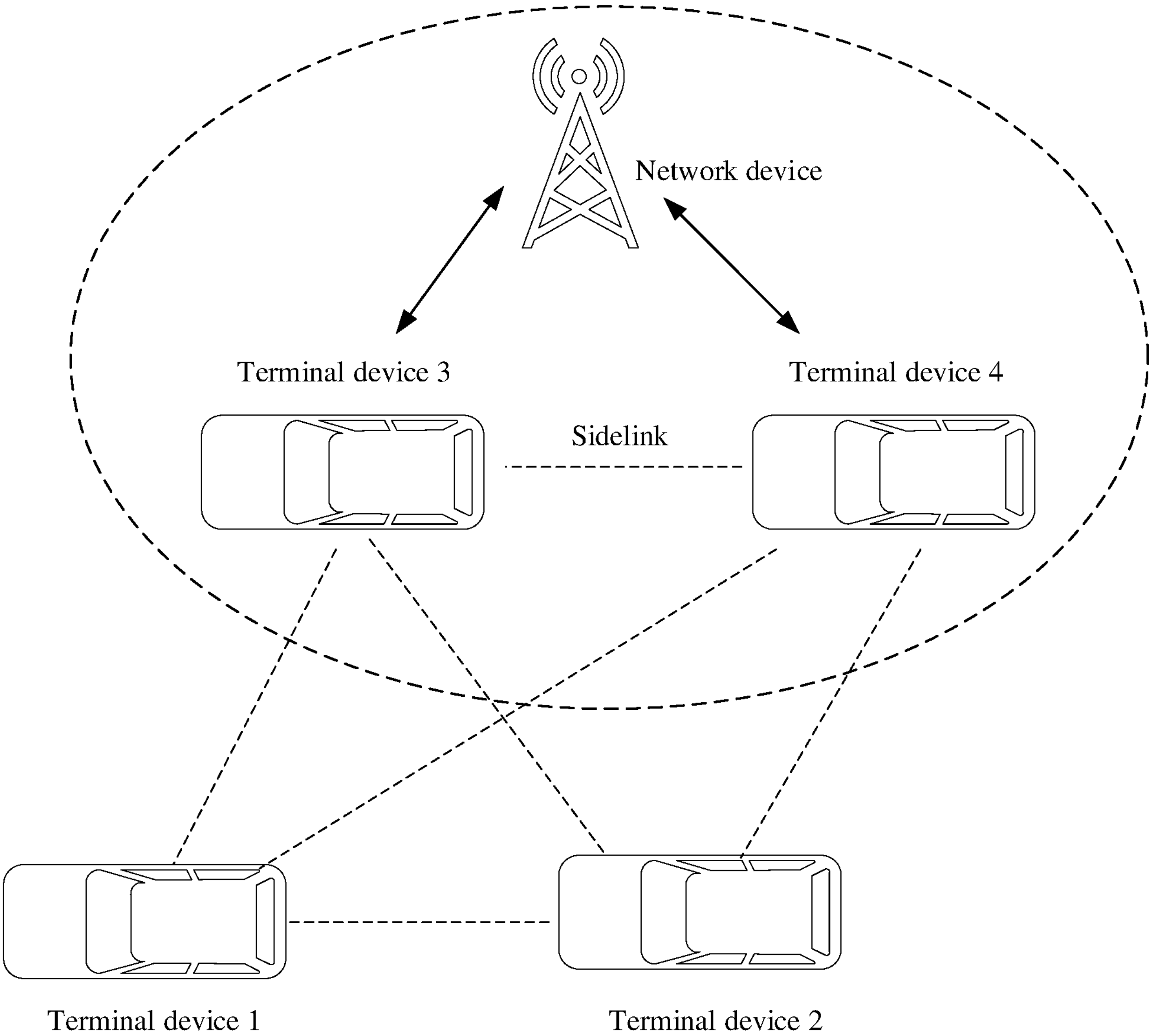
Network device
Terminal device 3
Terminal device 4
Sidelink
Terminal device 1
Terminal device 2

FIG. 9

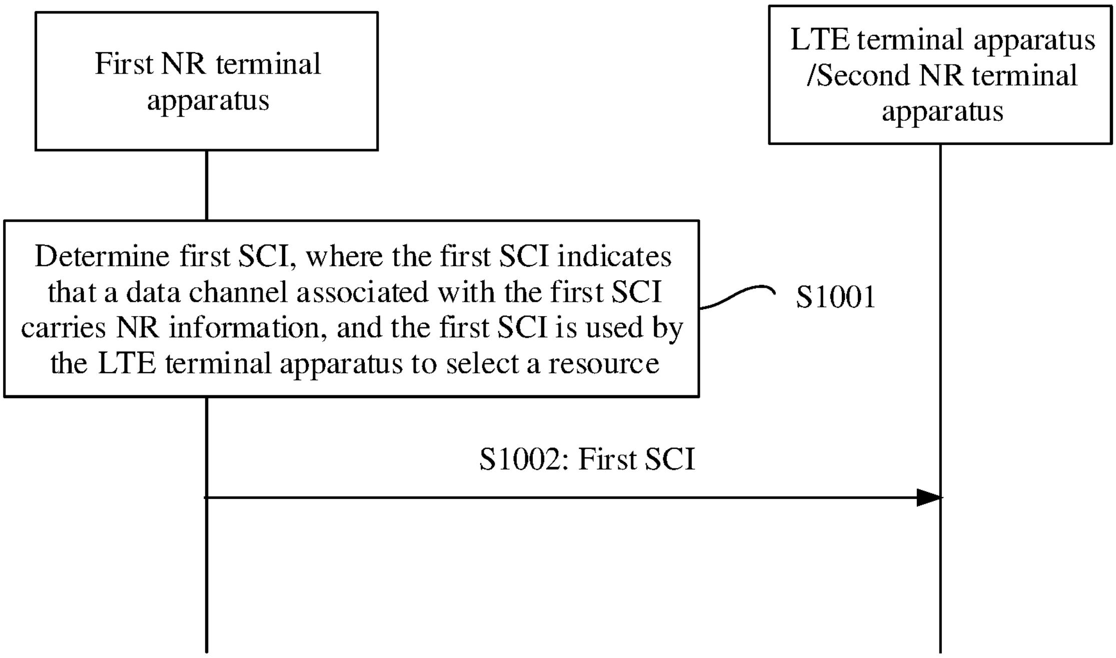
First NR terminal apparatus
LTE terminal apparatus /Second NR terminal apparatus
Determine first SCI, where the first SCI indicates that a data channel associated with the first SCI carries NR information, and the first SCI is used by the LTE terminal apparatus to select a resource
S1001
S1002: First SCI

FIG. 10

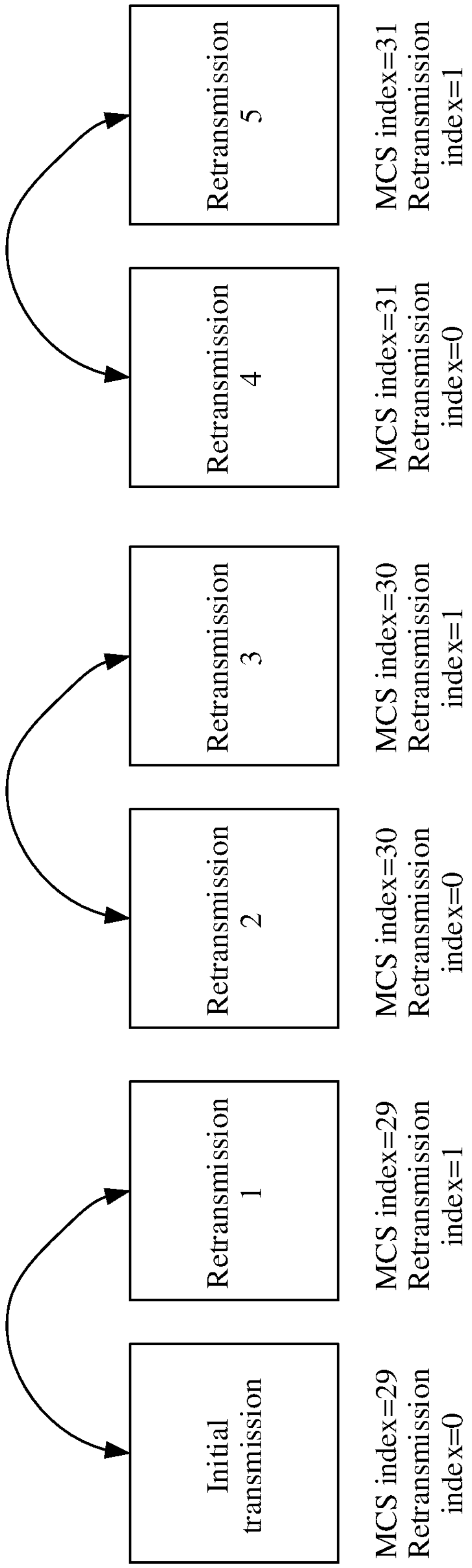
Initial transmission
MCS index=29 Retransmission index=0
Retransmission 1
MCS index=29 Retransmission index=1
Retransmission 2
MCS index=30 Retransmission index=0
Retransmission 3
MCS index=30 Retransmission index=1
Retransmission 4
MCS index=31 Retransmission index=0
Retransmission 5
MCS index=31 Retransmission index=1

FIG. 11

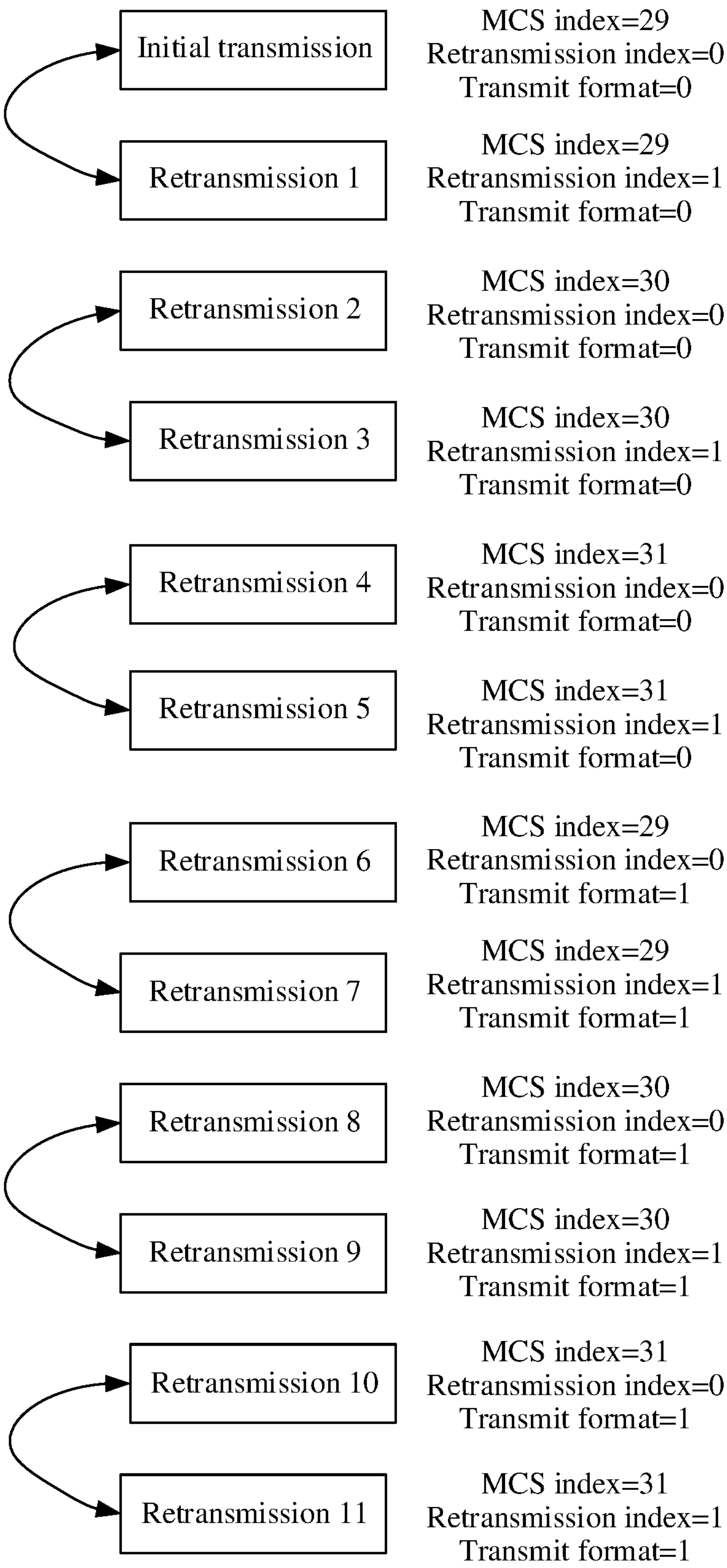
Initial transmission
MCS index=29
Retransmission index=0
Transmit format=0
Retransmission 1
MCS index=29
Retransmission index=1
Transmit format=0
Retransmission 2
MCS index=30
Retransmission index=0
Transmit format=0
Retransmission 3
MCS index=30
Retransmission index=1
Transmit format=0
Retransmission 4
MCS index=31
Retransmission index=0
Transmit format=0
Retransmission 5
MCS index=31
Retransmission index=1
Transmit format=0
Retransmission 6
MCS index=29
Retransmission index=0
Transmit format=1
Retransmission 7
MCS index=29
Retransmission index=1
Transmit format=1
Retransmission 8
MCS index=30
Retransmission index=0
Transmit format=1
Retransmission 9
MCS index=30
Retransmission index=1
Transmit format=1
Retransmission 10
MCS index=31
Retransmission index=0
Transmit format=1
Retransmission 11
MCS index=31
Retransmission index=1
Transmit format=1

FIG. 12

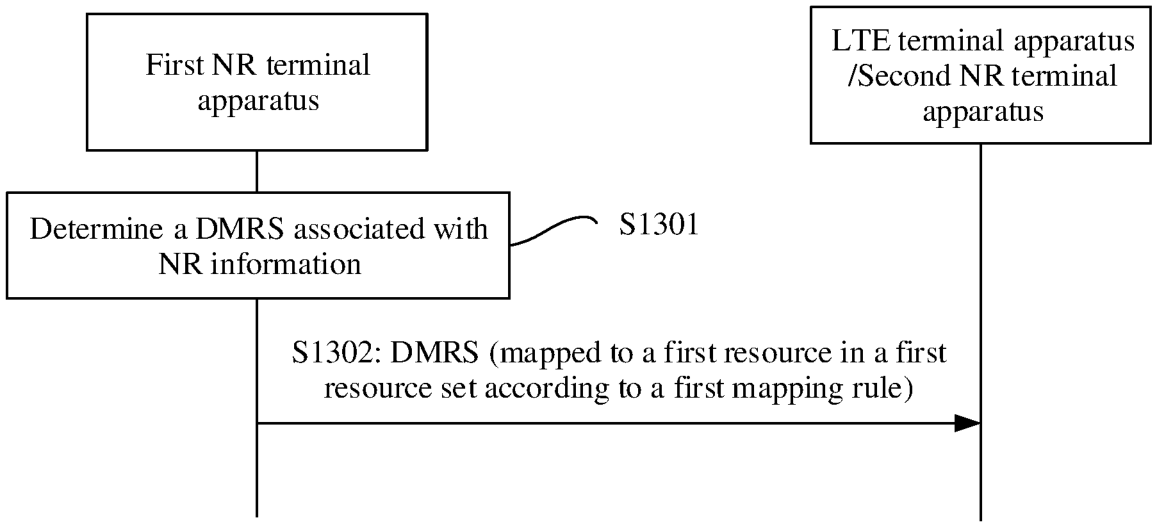
First NR terminal apparatus
LTE terminal apparatus /Second NR terminal apparatus
Determine a DMRS associated with NR information
S1301
S1302: DMRS (mapped to a first resource in a first resource set according to a first mapping rule)

FIG. 13

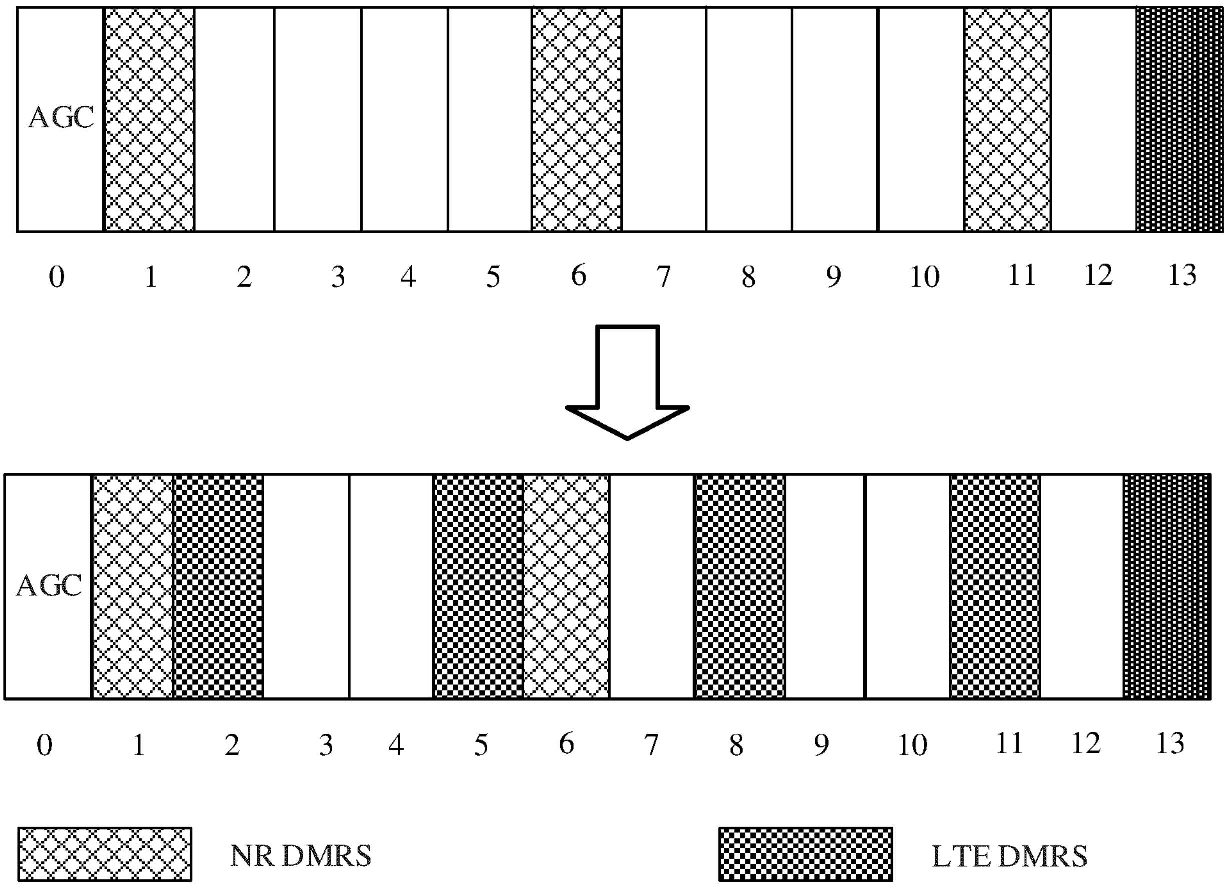
AGC
0 1 2 3 4 5 6 7 8 9 10 11 12 13
AGC
0 1 2 3 4 5 6 7 8 9 10 11 12 13
NR DMRS
LTE DMRS

FIG. 14

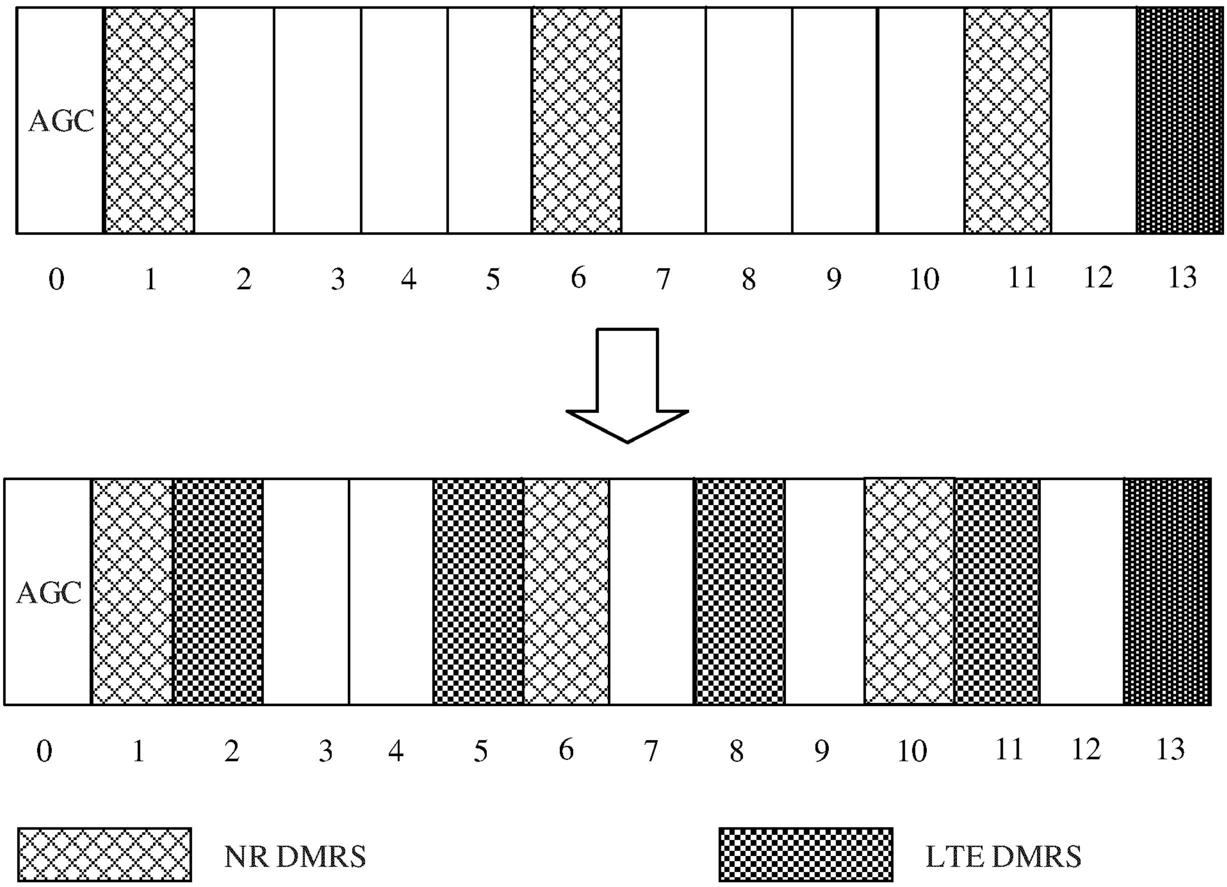
AGC
0
1
2
3
4
5
6
7
8
9
10
11
12
13
AGC
0
1
2
3
4
5
6
7
8
9
10
11
12
13
NR DMRS
LTE DMRS

FIG. 15

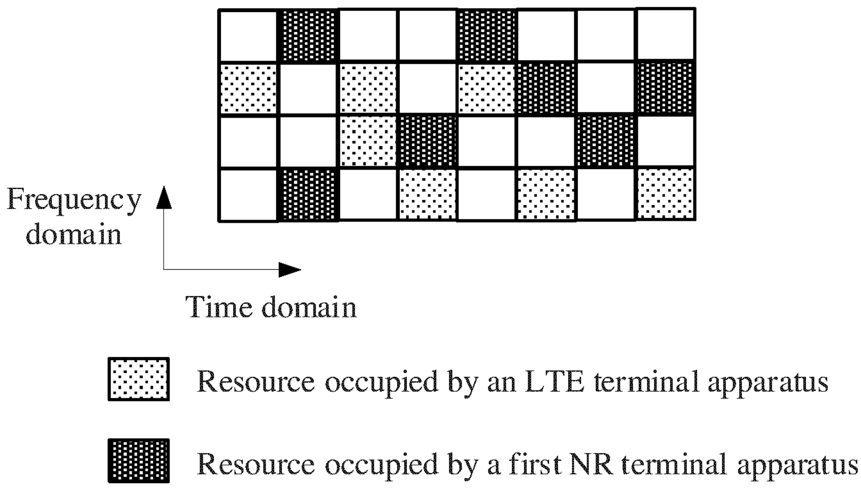
Frequency domain
Time domain
Resource occupied by an LTE terminal apparatus
Resource occupied by a first NR terminal apparatus

FIG. 16

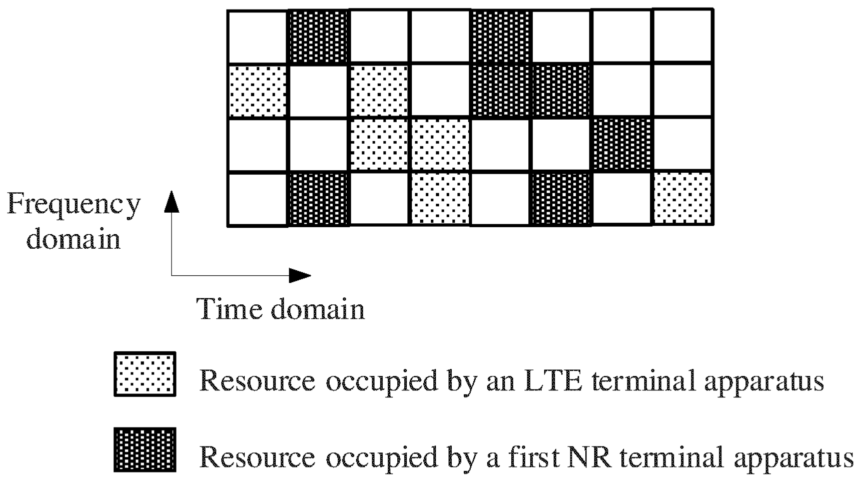
Frequency domain
Time domain
Resource occupied by an LTE terminal apparatus
Resource occupied by a first NR terminal apparatus

FIG. 17

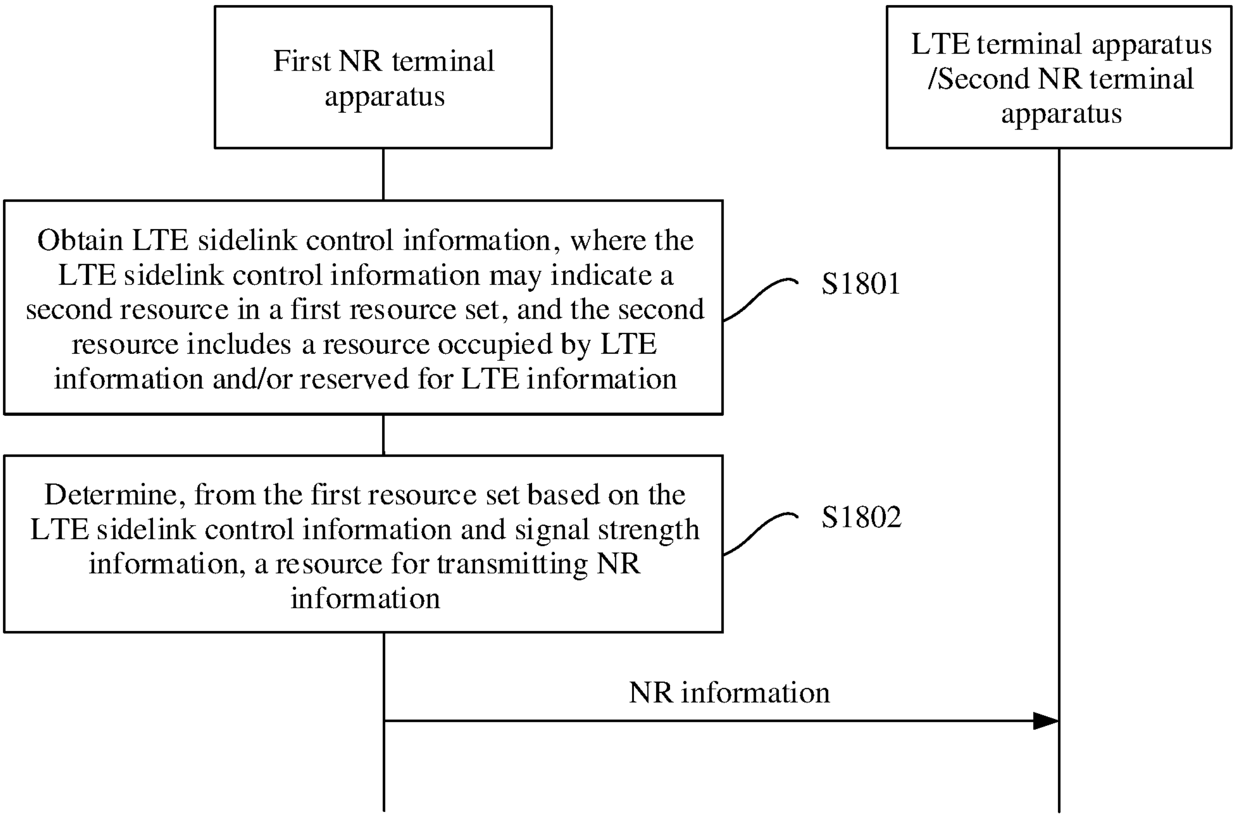
First NR terminal apparatus
LTE terminal apparatus /Second NR terminal apparatus
Obtain LTE sidelink control information, where the LTE sidelink control information may indicate a second resource in a first resource set, and the second resource includes a resource occupied by LTE information and/or reserved for LTE information
S1801
Determine, from the first resource set based on the LTE sidelink control information and signal strength information, a resource for transmitting NR information
S1802
NR information

FIG. 18

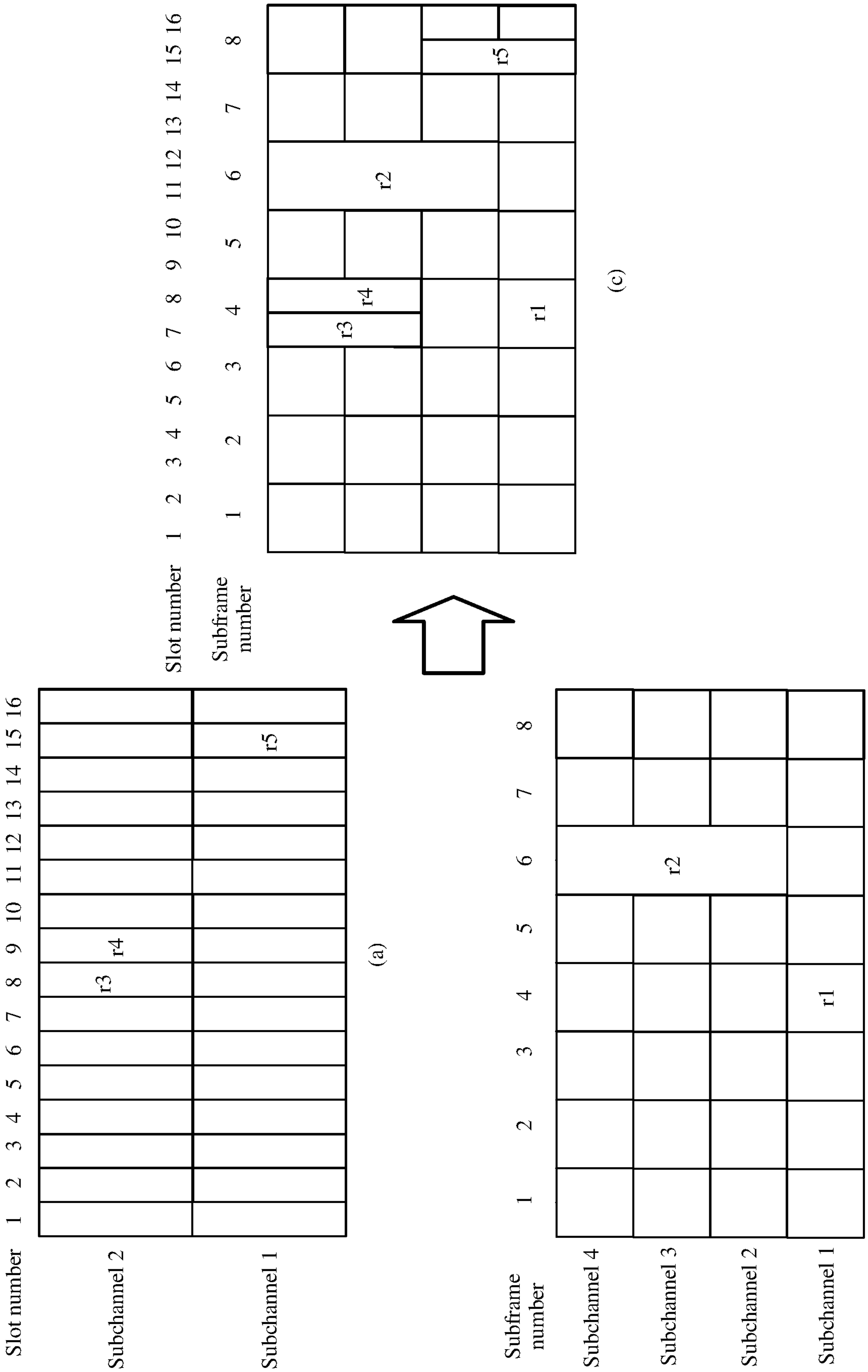
Slot number
1 2 3 4 5 6 7 8 9 10 11 12 13 14 15 16
Subchannel 2
Subchannel 1
r3
r4
r5
(a)
Subframe number
1 2 3 4 5 6 7 8
Subchannel 4
Subchannel 3
Subchannel 2
Subchannel 1
r1
r2
(b)
Slot number
Subframe number
(c)

FIG. 19

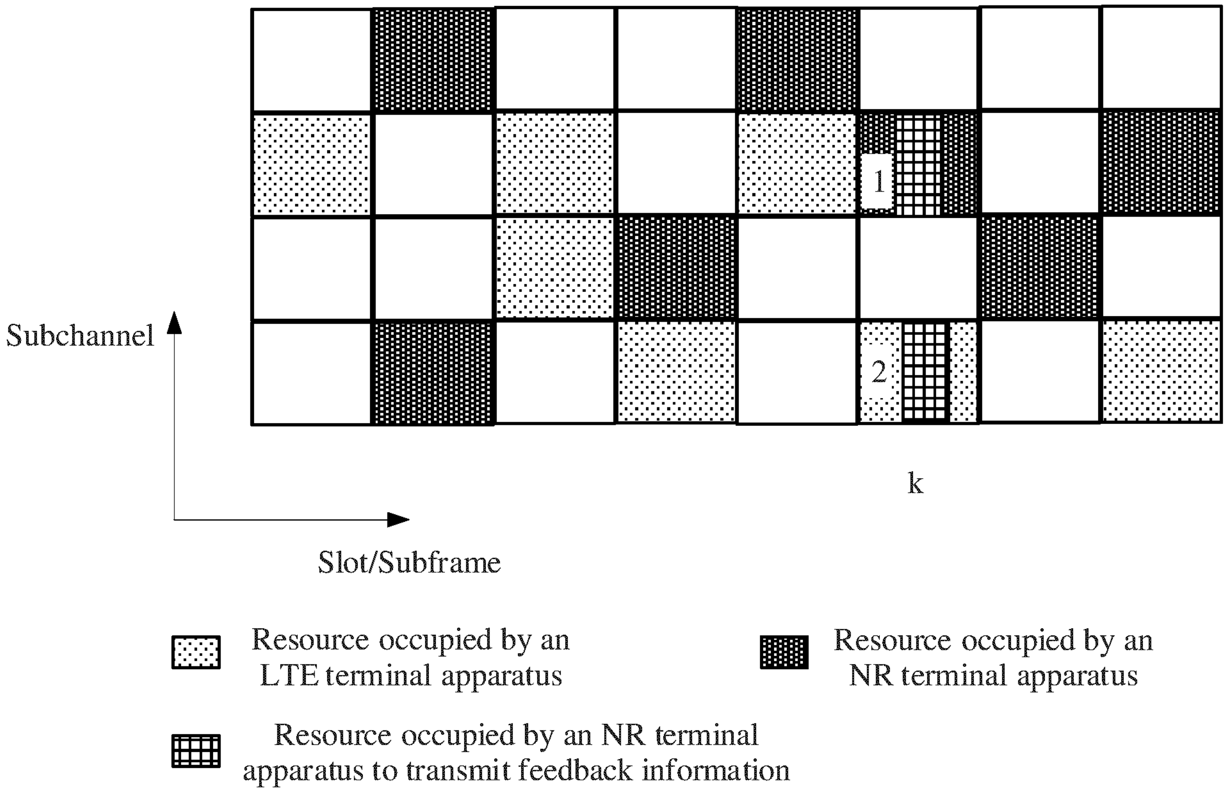
Subchannel
1
2
k
Slot/Subframe
Resource occupied by an LTE terminal apparatus
Resource occupied by an NR terminal apparatus
Resource occupied by an NR terminal apparatus to transmit feedback information

FIG. 20

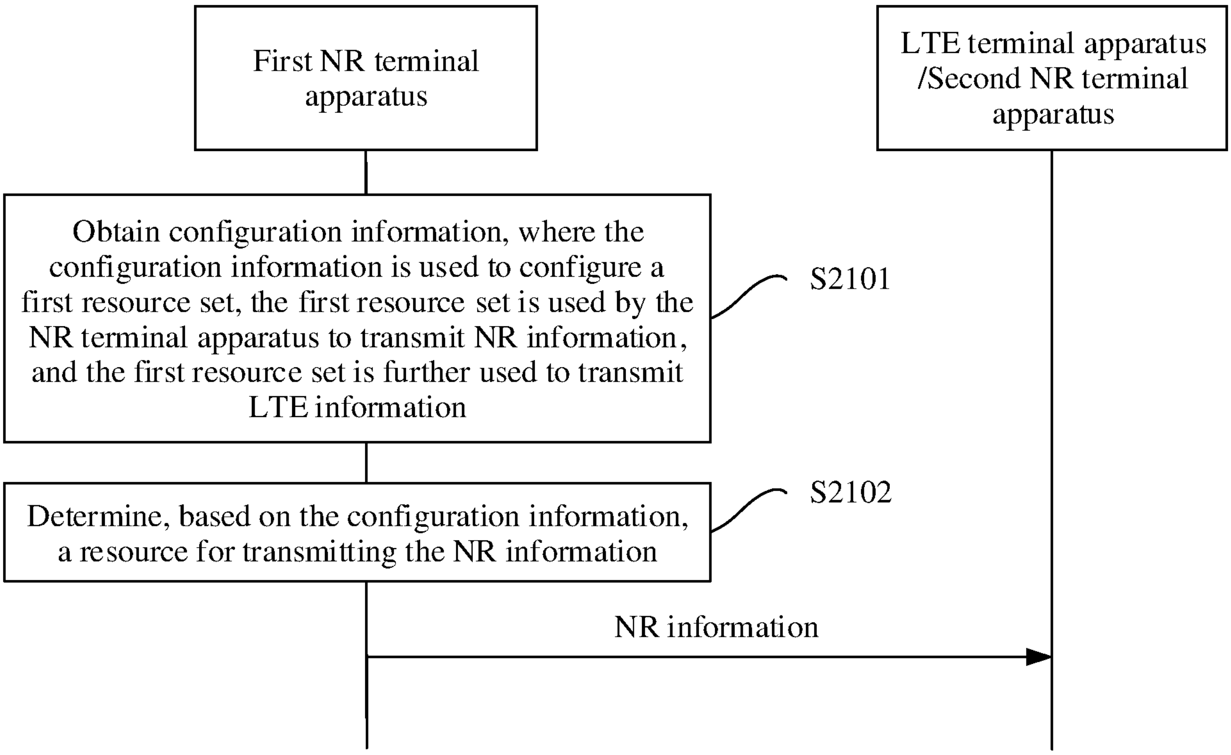
First NR terminal apparatus
LTE terminal apparatus /Second NR terminal apparatus
Obtain configuration information, where the configuration information is used to configure a first resource set, the first resource set is used by the NR terminal apparatus to transmit NR information, and the first resource set is further used to transmit LTE information
S2101
Determine, based on the configuration information, a resource for transmitting the NR information
S2102
NR information

FIG. 21

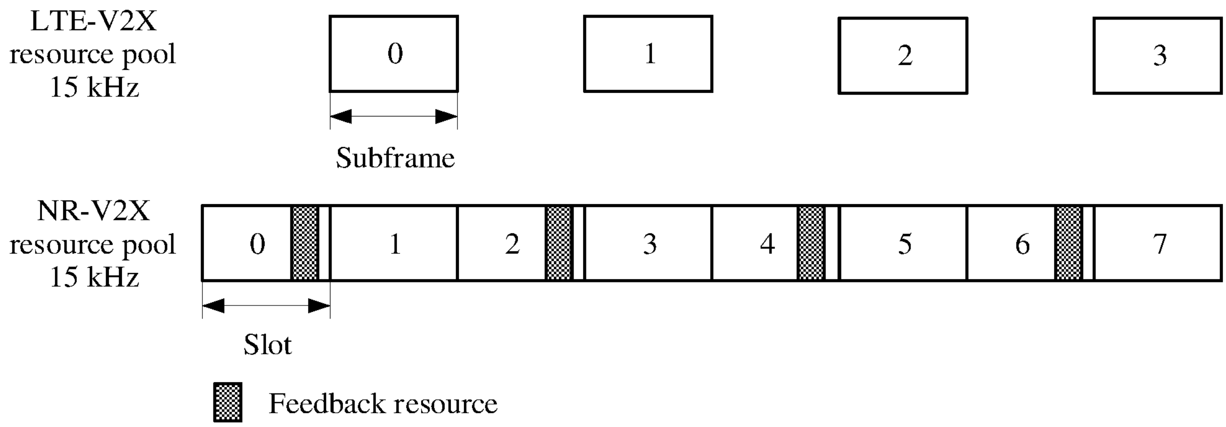
LTE-V2X
resource pool
15 kHz
0
1
2
3
Subframe
NR-V2X
resource pool
15 kHz
0
1
2
3
4
5
6
7
Slot
Feedback resource

FIG. 22

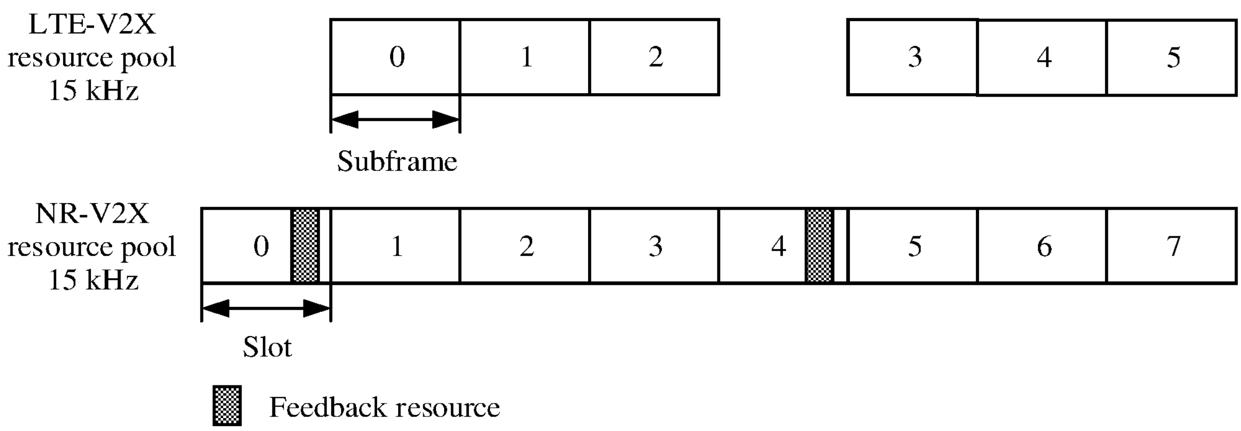
LTE-V2X
resource pool
15 kHz
0
1
2
3
4
5
Subframe
NR-V2X
resource pool
15 kHz
0
1
2
3
4
5
6
7
Slot
Feedback resource

FIG. 23

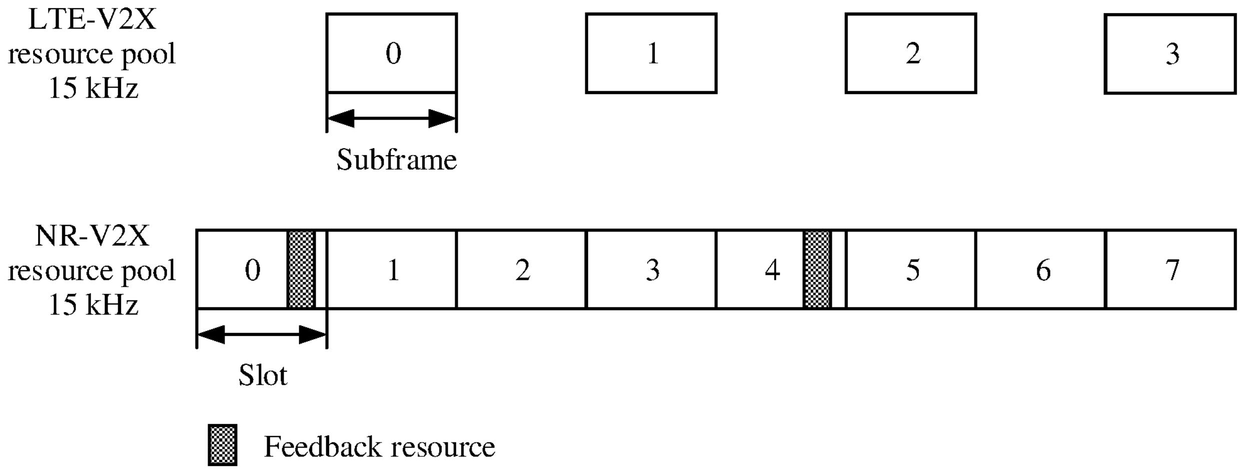
LTE-V2X
resource pool
15 kHz
0
1
2
3
Subframe
NR-V2X
resource pool
15 kHz
0
1
2
3
4
5
6
7
Slot
Feedback resource

FIG. 24

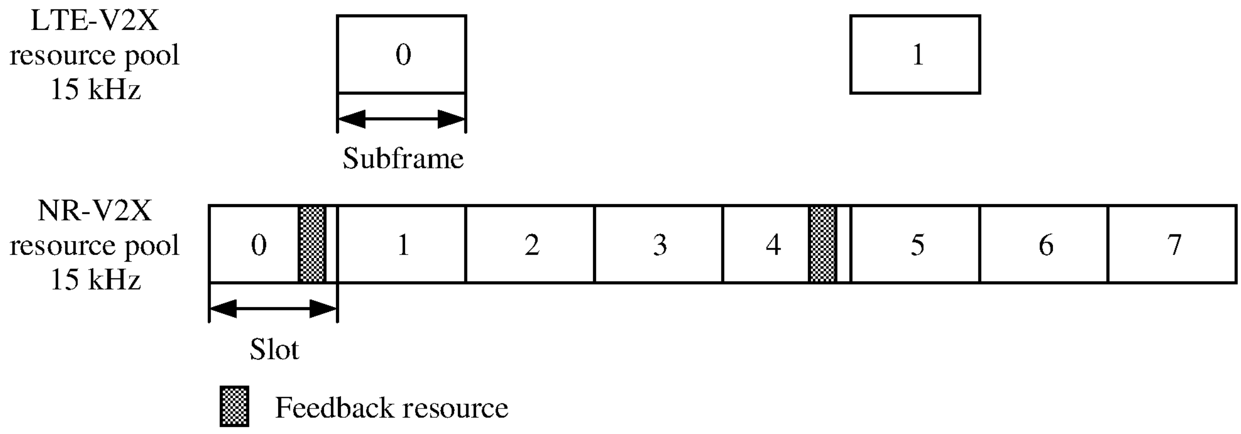
LTE-V2X
resource pool
15 kHz
0
1
Subframe
NR-V2X
resource pool
15 kHz
0
1
2
3
4
5
6
7
Slot
Feedback resource

FIG. 25

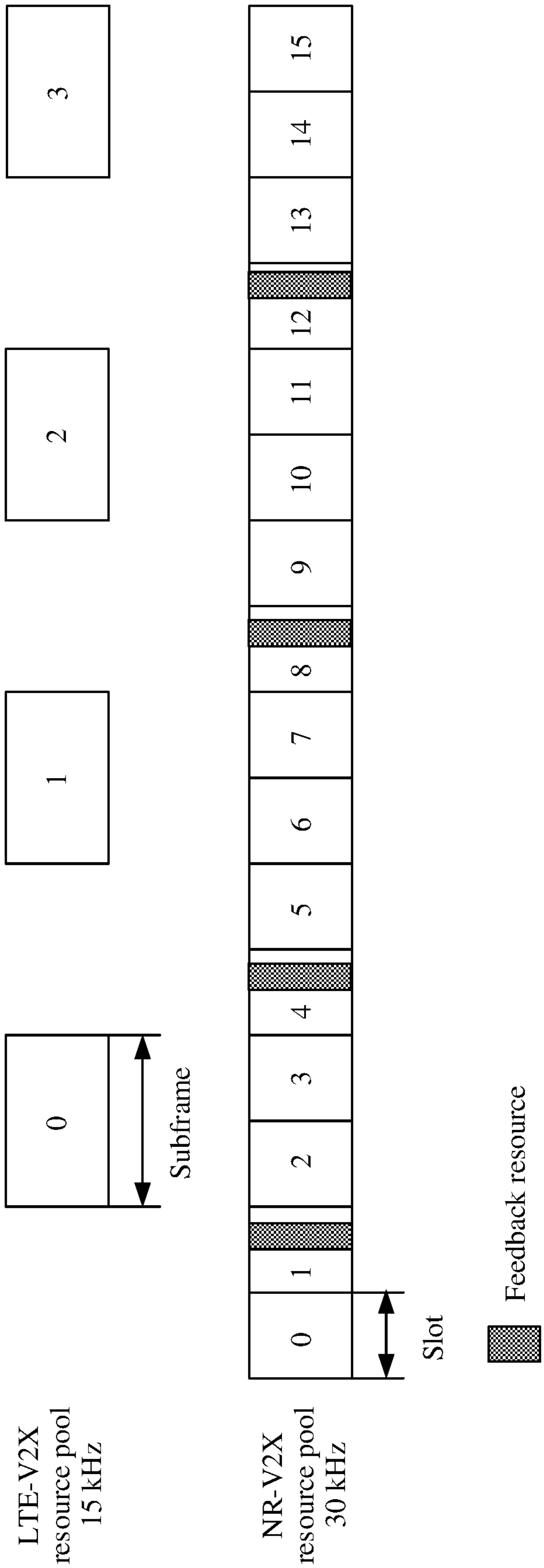

LTE-V2X resource pool 15 kHz
NR-V2X resource pool 30 kHz
0
1
2
3
Subframe
0
1
2
3
4
5
6
7
8
9
10
11
12
13
14
15
Slot
Feedback resource


FIG. 26

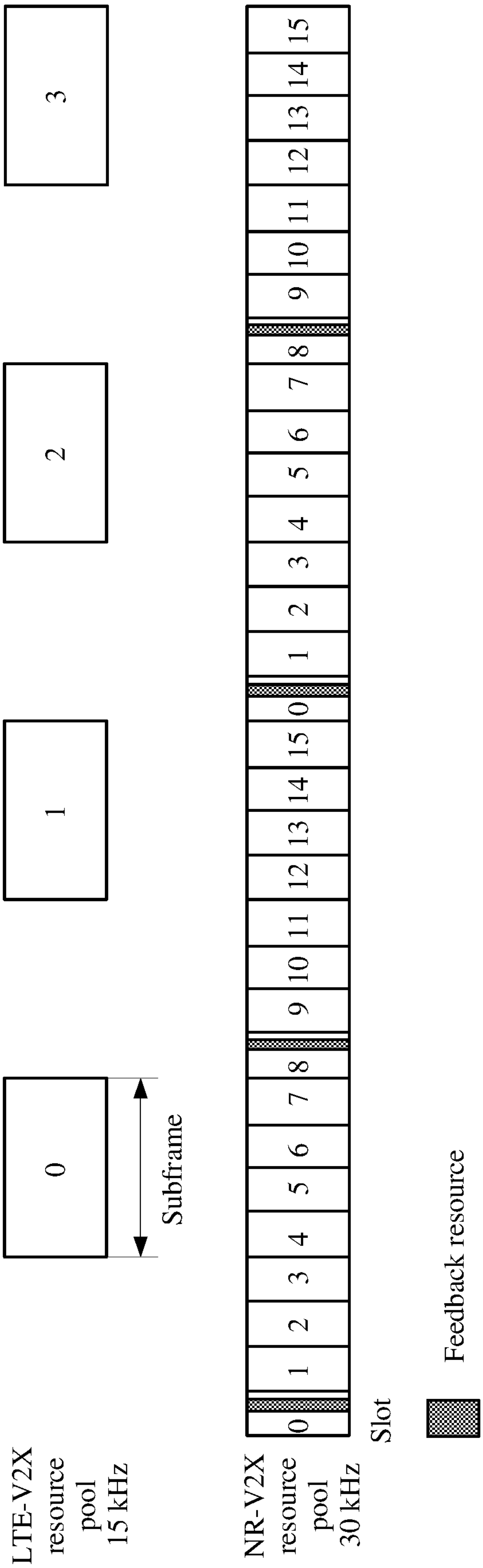
LTE-V2X resource pool 15 kHz
0
1
2
3
Subframe
NR-V2X resource pool 30 kHz
0 1 2 3 4 5 6 7 8 9 10 11 12 13 14 15 0 1 2 3 4 5 6 7 8 9 10 11 12 13 14 15
Slot
Feedback resource

FIG. 27

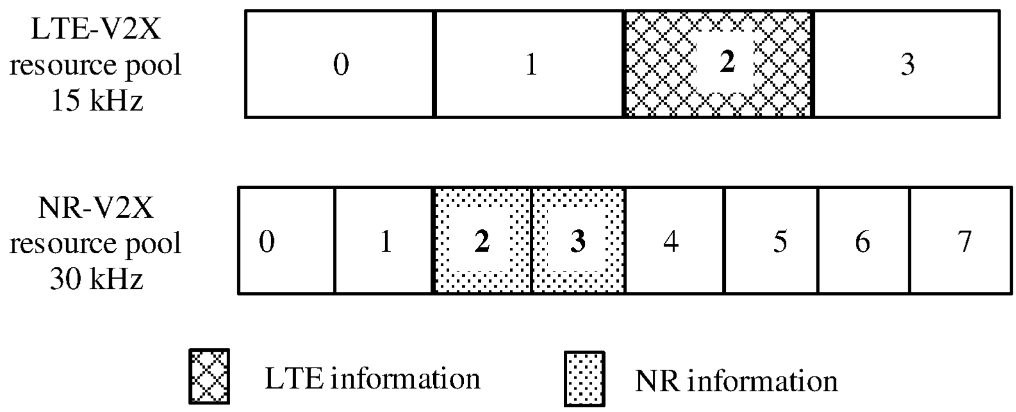
LTE-V2X
resource pool
15 kHz
0
1
2
3
NR-V2X
resource pool
30 kHz
0
1
2
3
4
5
6
7
LTE information
NR information

FIG. 28

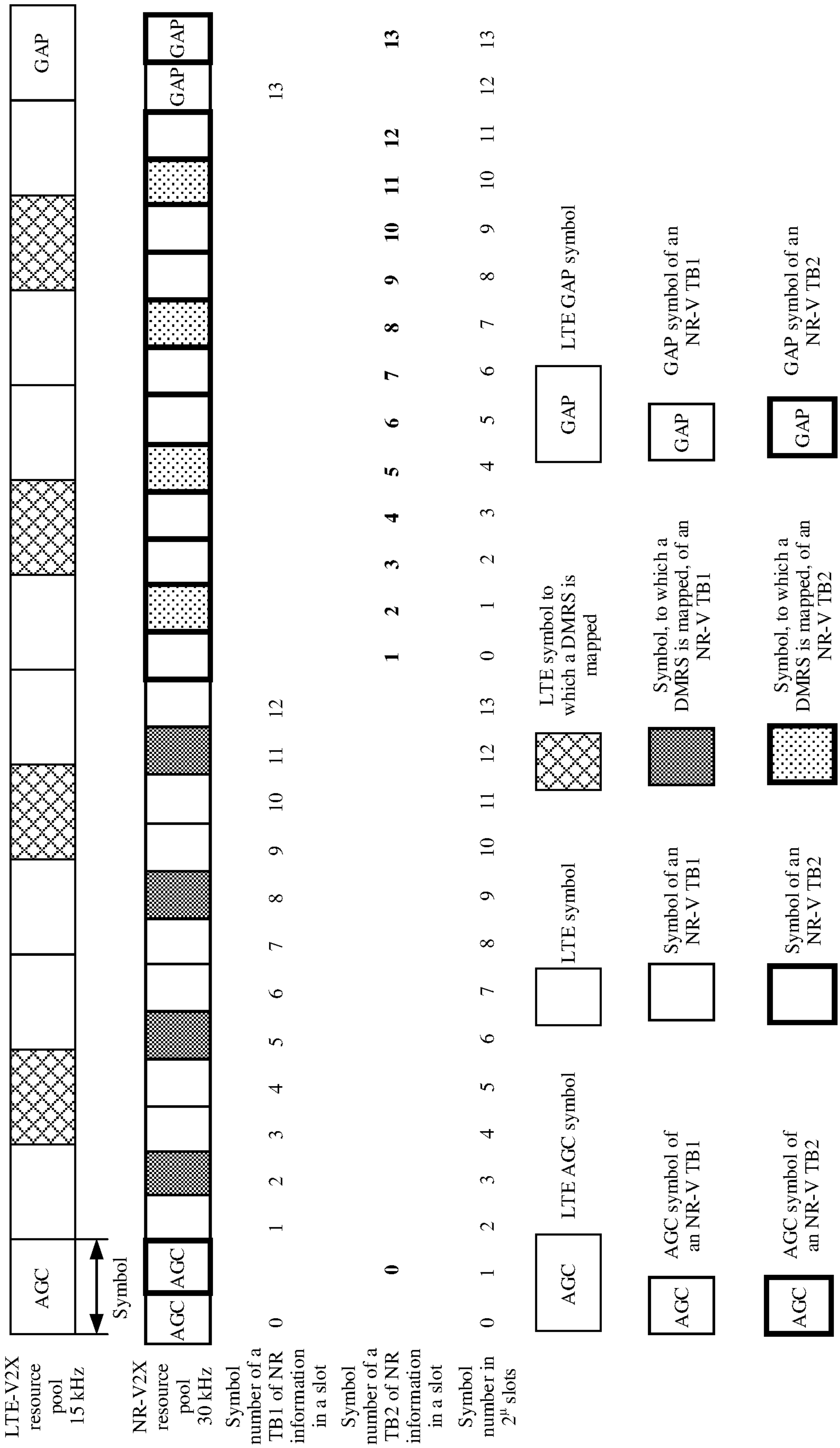
LTE-V2X resource pool 15 kHz
NR-V2X resource pool 30 kHz
Symbol number of a TB1 of NR information in a slot
Symbol number of a TB2 of NR information in a slot
Symbol number in 2^μ slots
AGC
GAP
Symbol
0 1 2 3 4 5 6 7 8 9 10 11 12 13
LTE AGC symbol
LTE symbol
LTE symbol to which a DMRS is mapped
LTE GAP symbol
AGC symbol of an NR-V TB1
Symbol of an NR-V TB1
Symbol, to which a DMRS is mapped, of an NR-V TB1
GAP symbol of an NR-V TB1
AGC symbol of an NR-V TB2
Symbol of an NR-V TB2
Symbol, to which a DMRS is mapped, of an NR-V TB2
GAP symbol of an NR-V TB2

FIG. 29

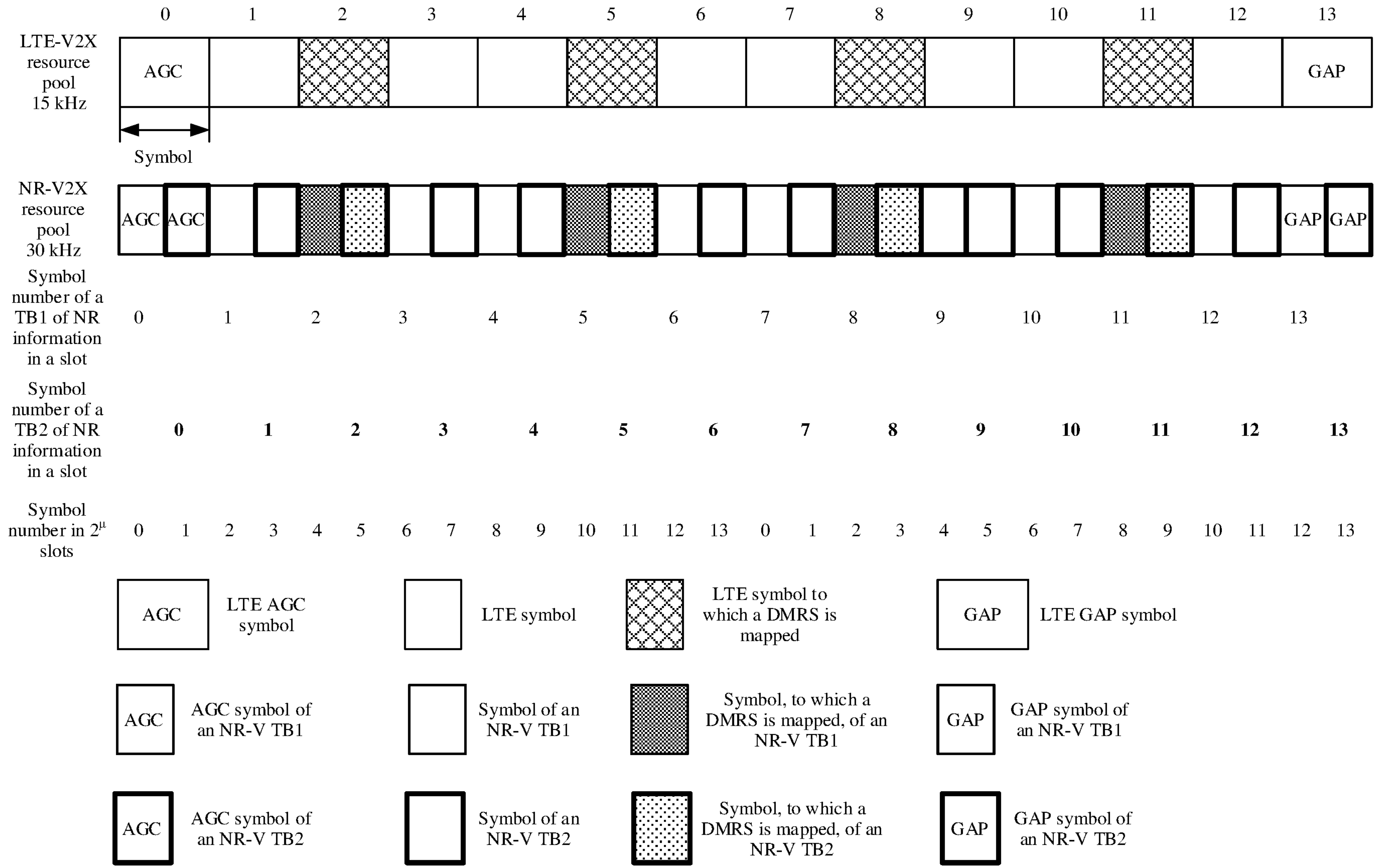

0 1 2 3 4 5 6 7 8 9 10 11 12 13
LTE-V2X resource pool 15 kHz
AGC
GAP
Symbol
NR-V2X resource pool 30 kHz
AGC AGC
GAP GAP
Symbol number of a TB1 of NR information in a slot
0 1 2 3 4 5 6 7 8 9 10 11 12 13
Symbol number of a TB2 of NR information in a slot
0 1 2 3 4 5 6 7 8 9 10 11 12 13
Symbol number in 2^μ slots
0 1 2 3 4 5 6 7 8 9 10 11 12 13 0 1 2 3 4 5 6 7 8 9 10 11 12 13
AGC
LTE AGC symbol
LTE symbol
LTE symbol to which a DMRS is mapped
GAP
LTE GAP symbol
AGC
AGC symbol of an NR-V TB1
Symbol of an NR-V TB1
Symbol, to which a DMRS is mapped, of an NR-V TB1
GAP
GAP symbol of an NR-V TB1
AGC
AGC symbol of an NR-V TB2
Symbol of an NR-V TB2
Symbol, to which a DMRS is mapped, of an NR-V TB2
GAP
GAP symbol of an NR-V TB2


FIG. 30

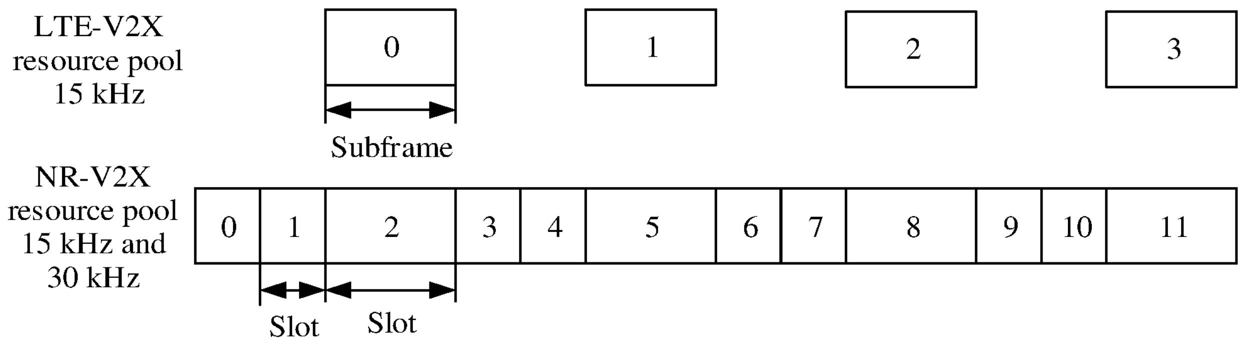


FIG. 31

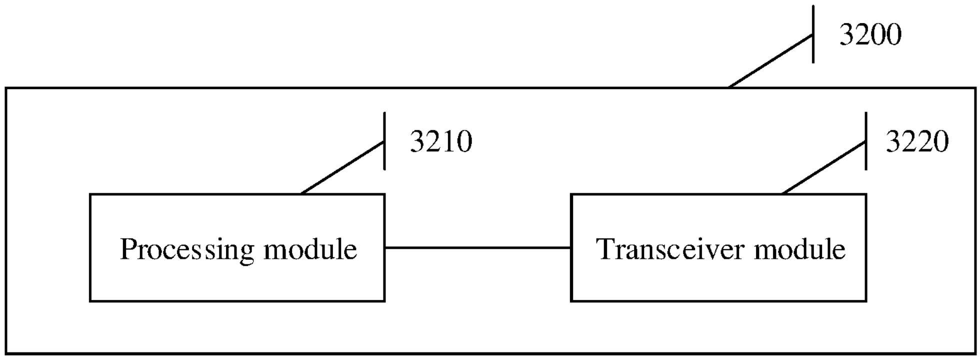


FIG. 32

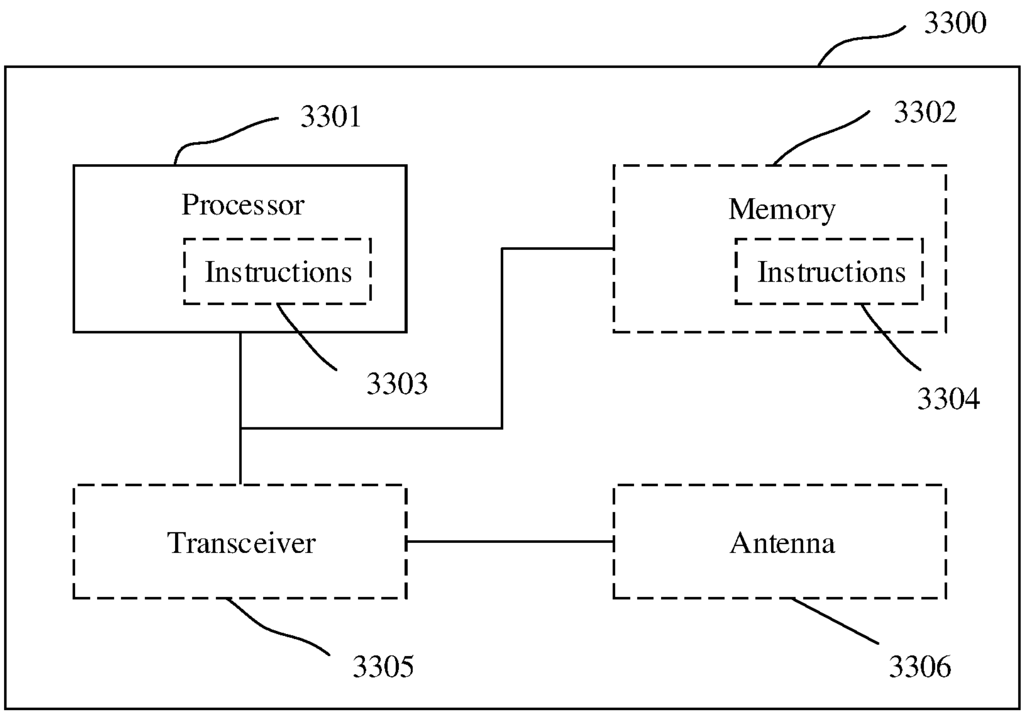


FIG. 33

## INTERNATIONAL SEARCH REPORT

International application No.
**PCT/CN2023/073168**

**A. CLASSIFICATION OF SUBJECT MATTER**

H04W 72/04(2023.01)i

According to International Patent Classification (IPC) or to both national classification and IPC

**B. FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; IEEE; 3GPP: 新无线, 新空口, 长期演进, 侧行控制信息, 资源, 选择, 确定, 选取, 预留, 占用, 信号强度, 物理侧行链路控制信道, 物理侧行链路共享信道, 物理侧行链路广播信道, PSCCH, PSSCH, PSBCH, NR, LTE, SL, SCI, resource, new radio, long term evolution, side control information, resource+, select+, determinat+, option, reservation, occupancy, signal strength

**C. DOCUMENTS CONSIDERED TO BE RELEVANT**

| Category* | Citation of document, with indication, where appropriate, of the relevant passages | Relevant to claim No. |
|---|---|---|
| X | CN 111586722 A (GOHIGH DATA NETWORKS TECHNOLOGY CO., LTD.) 2020-08-25 (2020-08-25)<br>description, paragraphs [0002]-[0286] | 1-95 |
| A | CN 110115102 A (HUAWEI TECHNOLOGIES CO., LTD.) 2019-08-09 (2019-08-09)<br>entire document | 1-95 |
| A | CN 113574964 A (LENOVO (SINGAPORE) PTE. LTD.) 2021-10-29 (2021-10-29)<br>entire document | 1-95 |
| A | WO 2018031746 A1 (INTEL IP CORP.) 2018-02-15 (2018-02-15)<br>entire document | 1-95 |

☐ Further documents are listed in the continuation of Box C.　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 April 2023** | **27 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.
**PCT/CN2023/073168**

| Patent document cited in search report | | | Publication date (day/month/year) | Patent family member(s) | Publication date (day/month/year) |
|---|---|---|---|---|---|
| CN | 111586722 | A | 25 August 2020 | None | |
| CN | 110115102 | A | 09 August 2019 | None | |
| CN | 113574964 | A | 29 October 2021 | None | |
| WO | 2018031746 | A1 | 15 February 2018 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202210113002